# EUROPÄISCHE PATENTSCHRIFT

(11) **EP 3 267 452 B1**
(45) Veröffentlichungstag und Bekanntmachung des Hinweises auf die Patenterteilung: **20.12.2023**
(21) Anmeldenummer: 17179413.4
(22) Anmeldetag: 03.07.2017
(51) Int. Cl.: H01H 3/02, E05B 65/10, G05B 19/042

(54) **SICHERHEITSSYSTEM**
SAFETY SYSTEM
SYSTÈME DE SÉCURITÉ

(30) Priorität: 04.07.2016 DE 102016112225
(43) Veröffentlichungstag der Anmeldung: 10.01.2018
(73) Patentinhaber: dormakaba Deutschland GmbH, 58256 Ennepetal (DE)
(72) Erfinder: GEHRMANN, Bernd, 58256 Ennepetal (DE); DUDZINSKI, Andrzej, 58256 Ennepetal (DE); BOEKHOFF, Martin, 58256 Ennepetal (DE)
(74) Vertreter: Balder IP Law, S.L.

(56) Entgegenhaltungen:
- EP-A1- 1 598 506
- EP-A2- 2 725 172
- DE-A1- 4 344 729
- DE-A1- 10 105 058
- DE-A1- 19 943 040
- DE-A1-102008 022 714
- DE-A1-102012 012 058

## Beschreibung

Die Erfindung betrifft ein Sicherheitssystem zur Steuerung und/oder Überwachung von zumindest einer Türverriegelung, insbesondere zur Fluchtwegsicherung, mit zumindest einem Auslöseelement, insbesondere einem Nottaster, wobei das Sicherheitssystem zur Ausführung zumindest einer Funktion zur Steuerung und/oder Überwachung der zumindest einen Türverriegelung ausgebildet ist.

Sicherheitssysteme mit einem Nottaster zur Fluchtwegsicherung sind bekannt. Bei einer Betätigung des Nottasters wird eine Türverriegelung entriegelt, so dass ein Benutzer im Gefahrenfall fliehen kann. Es ist denkbar, durch das Sicherheitssystem noch weitere Funktionen ausführen zu lassen. Hierbei tritt die Problematik auf, dass für einige Anwendungen nur eine oder wenige Funktionen ausreichen. In anderen Einbausituationen soll das Sicherheitssystem vielfache Funktionen ausführen können.

Die DE 43 44 729 A1 offenbart Steuerung für eine Tür, bei der an einer Grundeinheit Erweiterungsmodule angeschlossen werden können.

Die EP 2 725 172 A2 offenbart ein Sicherheitssystem mit mehreren Bussystemen, die Notschalteinrichtungen und Verriegelungseinrichtungen umfassen können.

Die DE 10 2008 022 714 A1 offenbart einen Türantrieb mit einer als Grundmodul ausgebildeten Steuerung, die durch Funktionsmodule erweiterbar ist.

Die DE 199 43 040 A1 betrifft eine Gebäudeausgangsvorrichtung mit Ausgangskontrollvorrichtung, vorzugsweise RWS-Vorrichtung, wobei bei der Gebäudeausgangsvorrichtung Steuervorrichtungen in mehreren Bussystemen vorgesehen sind, die über eine Codekarte Aktionen wie Entriegeln oder Alarmquittierung ausführen können.

Es ist daher Aufgabe der vorliegenden Erfindung, ein Sicherheitssystem zur Verfügung zu stellen, das insbesondere auf einfache und/oder sichere Weise für verschiedene Anwendungen geeignet ist.

Diese Aufgabe wird durch ein Sicherheitssystem gemäß dem unabhängigen Anspruch 1 gelöst. Vorteilhafte Weiterbildungen des Sicherheitssystems sind in den abhängigen Ansprüchen, der Beschreibung und in den Figuren angegeben. Dabei können die in der Beschreibung und in den Ansprüchen erwähnten Merkmale jeweils einzeln für sich oder in Kombination erfindungswesentlich sein. Ein Kommunikationsmodul, das zu einer Kommunikation mit einem Sicherheitssystem und/oder einer Steuerungsvorrichtung des Sicherheitssystems dient, ist ebenfalls unter Schutz gestellt.

Die zuvor hergeleitete und aufgezeigte Aufgabe ist ausgehend von dem eingangs beschriebenen Sicherheitssystem dadurch gelöst, dass das Sicherheitssystem eine Kommunikationsschnittstelle umfasst, wobei die Kommunikationsschnittstelle zur Kommunikation mit einem Kommunikationsmodul dient, wobei zur Ausführung der Funktion und/oder zur Ausführung einer weiteren Funktion des Sicherheitssystems eine Kommunikation über die Kommunikationsschnittstelle mit dem Kommunikationsmodul erfolgt oder zuvor erfolgt ist.

Hierbei kann insbesondere eine Steuerungsvorrichtung des Sicherheitssystems die Kommunikationsschnittstelle umfassen. Die Steuerungsvorrichtung kann die Kommunikation mit dem Kommunikationsmodul durchführen.

Dadurch, dass eine Kommunikation mit dem Kommunikationsmodul notwendig ist, um die Funktion ausführen zu können, kann durch die Wahl des Kommunikationsmoduls beeinflusst werden, ob die Funktion ausführbar ist oder nicht. Daher kann das erfindungsgemäße Sicherheitssystem auf einfache Weise derart ausgestaltet werden, dass das Sicherheitssystem nur eine oder wenige Funktionen ausführen kann oder dass das Sicherheitssystem vielfache Funktionen ausführen kann, je nach Kommunikation mit dem Kommunikationsmodul.

Im Folgenden wird zwischen einem Benutzer und einem Bediener unterschieden. Ein Benutzer kann jede Person sein, die das Sicherheitssystem benutzt. Ein Benutzer kann z. B. ein Gast sein, der durch die durch das Sicherheitssystem gesicherte Tür fliehen will. Ein Bediener dient zur Bedienung des Sicherheitssystems. Der Bediener hat Zugang zu einer Wachvorrichtung des Sicherheitssystems und/oder kann sich gegenüber dem Sicherheitssystem authentifizieren, insbesondere um das Sicherheitssystem zu bedienen. Die Wachvorrichtung kann als ein PC oder ein Monitor ausgebildet sein.

Das Sicherheitssystem dient insbesondere zur Fluchtwegsicherung. Das Sicherheitssystem dient somit zur Freigabe des Fluchtwegs. D. h. die Betätigung des Auslöseelements führt ohne eine Authentifizierung des Benutzers zu einer Entriegelung. Die Entriegelung kann unmittelbar oder zeitverzögert erfolgen.

Das Auslöseelement kann ein manuell betätigbares Betätigungselement umfassen. Der Benutzer kann das Betätigungselement betätigen, um die Türverriegelung zu entriegeln. In Folge der Betätigung des Betätigungselements kann ein Betätigungssignal erzeugbar sein.

Das Auslöseelement ist bevorzugt als ein Nottaster ausgebildet. In diesem Fall entspricht das Betätigungselement einem Betätigungselement des Nottasters. Alternativ kann das Auslöseelement als eine Panikstangenbaugruppe ausgebildet sein. Das Betätigungselement ist in diesem Fall als Panikstange ausgebildet. Das Auslöseelement kann als eine Beschlagbaugruppe ausgebildet sein. In diesem Fall ist das Betätigungselement z. B. als ein Türgriff ausgebildet.

Die Funktion zur Steuerung der Türverriegelung kann insbesondere als eine Ent- oder Verriegelung der Türverriegelung ausgebildet sein. Die Entriegelung und/oder Verriegelung kann insbesondere im Gefahrenfall, d. h. nach einer Betätigung des Auslöseelements oder bei Vorliegen eines Brandmeldesignals, erfolgen. Die Funktion zur Steuerung der Türverriegelung kann somit sicherheitsrelevant sein. Bei der Funktion zur Steuerung der Türverriegelung kann es sich jedoch auch um eine nicht sicherheitsrelevante Entriegelung und/oder Verriegelung handeln.

Die Funktion zur Überwachung der Türverriegelung kann insbesondere eine Funktion sein, die ein Abweichen des Sollzustands von dem Istzustand der Türverriegelung detektiert.

Die weitere Funktion des Sicherheitssystems kann vielfältig sein. So kann die weitere Funktion z. B. eine Funktion zur akustischen oder optischen Darstellung eines Zustands des Sicherheitssystems sein.

Die Kommunikation kann insbesondere durch digitale Kommunikation erfolgen. Die Kommunikation kann drahtgebundene oder drahtlos erfolgen.

Die Kommunikation kann insbesondere wiederholend vorgesehen sein. So kann es sein, dass die Funktion für das Sicherheitssystem nur ausführbar ist, wenn das Sicherheitssystem mit dem Kommunikationsmodul in Kommunikationsverbindung steht, und/oder das Sicherheitssystem derart ausgebildet ist, dass das Sicherheitssystem kontrolliert, ob über die Kommunikationsschnittstelle eine Kommunikation mit dem Kommunikationsmodul möglich ist und die Funktion für das Sicherheitssystem nur ausführbar ist, wenn zuvor innerhalb eines vorgegebenen Zeitraums eine Kommunikation mit dem Kommunikationsmodul möglich gewesen ist. Besonders bevorzugt kann es sein, dass die Funktion für das Sicherheitssystem nur ausführbar ist, wenn dem Sicherheitssystem die Information auf dem Kommunikationsmodul zur Verfügung steht und/oder das Sicherheitssystem derart ausgebildet ist, dass das Sicherheitssystem wiederholend Kenntnis von der Information auf dem Kommunikationsmodul erlangt, und die Funktion für das Sicherheitssystem nur ausführbar ist, wenn zuvor innerhalb eines vorgegebenen Zeitraums das Sicherheitssystem Kenntnis von der Information erlangt hat. Hierdurch ist das Sicherheitssystem über den vorgegebenen Zeitraum hinaus nur funktionsfähig, wenn eine Kommunikation möglich ist oder stattfindet.

Das Sicherheitssystem umfasst somit das Kommunikationsmodul.

Der Zeitraum kann in dem Sicherheitssystem hinterlegt sein. Der Zeitraum kann fest vorgegeben sein. Der Zeitraum kann insbesondere mehrere Minuten, mehrere Stunden oder mehrere Tage betragen. Der Zeitraum kann z. B. zwischen 5 und 60 Minuten liegen. Die Wiederholung der Kontrolle, ob eine Kommunikation möglich ist, oder die Wiederholung der Kommunikation mit dem Kommunikationsmodul zum Erlangen der Information findet bevorzugt regelmäßig statt. So kann die Wiederholung unmittelbar nach Ablauf des vorgegebenen Zeitraums erfolgen. Das Sicherheitssystem, insbesondere die Steuerungsvorrichtung, kann einen Timer zur Bestimmung des vorgegebenen Zeitraums umfassen.

Es ist denkbar, dass die Funktion, zu deren Ausführbarkeit die Kommunikation erfolgt ist oder erfolgt, mit Hilfe eines Softwaremoduls mit einem ausführbaren Programmcode ausführbar ist. Bei der Information auf dem Kommunikationsmodul kann es sich z. B. um das Softwaremodul handeln.

Erfindungsgemäß ist die Funktion über die Kommunikation mit dem Kommunikationsmodul freischaltbar ist. Dadurch, dass die Funktionen freigeschaltet werden kann, kann auf besonders einfache Art und Weise die Verwendbarkeit und/oder das Können des Sicherheitssystems erhöht werden. Insbesondere kann in dem Sicherheitssystem das Softwaremodul mit dem ausführbaren Programmcode stets hinterlegt sein, durch dessen Ausführung die Funktion ausführbar ist. Das Sicherheitssystem kann die Funktion jedoch nur nach der Freischaltung ausführen.

Das Sicherheitssystem, insbesondere die Steuerungsvorrichtung, kann eine Freigabeprüfung durchführen. Bei erfolgloser Freigabeprüfung bleibt die Funktion gesperrt. Erst bei positiver Freigabeprüfung wird die Funktion freigeschaltet. Erst nach der Freischaltung kann das Sicherheitssystem die Funktion ausführen.

Es kann sein, dass das Sicherheitssystem die Freigabeprüfung wiederholt. Bevorzugt wird die Freigabeprüfung jeweils nach dem vorgegebenen Zeitraum wiederholt. Wurde die Funktion zuvor freigeschaltet, so wird bei einer negativen Freigabeprüfung die zuvor freigeschaltete Funktion gesperrt. War die Funktion gesperrt, so bleibt die Funktion bei der negativen Freigabeprüfung gesperrt. War die Funktion gesperrt, so wird die Funktion bei der positiven Freigabeprüfung freigeschaltet. Ist die Funktion zuvor freigeschaltet worden, so bleibt die Funktion bei einer positiven Freigabeprüfung freigeschaltet. Hierdurch ist es möglich, wiederholend die gewünschten Funktionen in dem Sicherheitssystem zu aktivieren oder nicht mehr benötigte Funktionen zu deaktivieren.

Es kann sein, dass wenigstens eine der Funktionen des Sicherheitssystems mit Hilfe eines Codes des Kommunikationsmoduls freischaltbar ist. Der Code kann verschlüsselt ausgebildet sein. Bevorzugt kann die Steuerungsvorrichtung durch die Kommunikation Kenntnis von dem Code erlangen. Z. B. kann die Steuerungsvorrichtung den Code aus dem Kommunikationsmodul auslesen.

Das Sicherheitssystem umfasst eine Aufnahme, um das Kommunikationsmodul reversibel lösbar und/oder elektrisch kontaktierend aufzunehmen. Das Kommunikationsmodul kann form- und/oder kraftschlüssig in der Aufnahme gehalten sein. Bevorzugt kann die Steuerungsvorrichtung die Aufnahme umfassen.

Erfindungsgemäß ist die Aufnahme für einen unbefugten Benutzer unzugänglich in dem Sicherheitssystem, insbesondere in der Steuerungsvorrichtung, angeordnet. So kann es sein, dass sich ein Bediener erst authentifizieren muss, bevor der Bediener an die Aufnahme gelangt. Versucht ein unbefugter Benutzer Zugang zu der Aufnahme zu erlangen, so ist erfindungsgemäß ein Sabotageschalter vorgesehen. Der Sabotageschalter löst bei einer fehlenden Authentifizierung Alarm aus.

Vorzugsweise ist vorgesehen, dass die Funktion für das Sicherheitssystem nur ausführbar ist, wenn sich das Kommunikationsmodul in der Aufnahme befindet, und/oder das Sicherheitssystem, insbesondere die Steuerungsvorrichtung, derart ausgebildet ist, dass das Sicherheitssystem, insbesondere die Steuerungsvorrichtung, wiederholend kontrolliert, ob über sich das Kommunikationsmodul in der Aufnahme befindet und die Funktion für das Sicherheitssystem nur ausführbar ist, wenn zuvor innerhalb einer vorgegebenen Zeitraums sich das Kommunikationsmodul in der Aufnahme befunden hat. Der Zeitraum kann in dem Sicherheitssystem hinterlegt sein. Der Zeitraum kann fest vorgegeben sein. Die Wiederholung der Kontrolle findet bevorzugt regelmäßig statt. So kann die Wiederholung unmittelbar nach Ablauf des vorgegebenen Zeitraums denkbar sein.

Vorzugsweise ist vorgesehen, dass zum Ausführen der Funktion, insbesondere zum Freischalten der Funktion, ein Sicherheitsmechanismus durch das Sicherheitssystem, insbesondere durch die Steuerungsvorrichtung und/oder durch das Kommunikationsmodul, ausgeführt wird. Der Sicherheitsmechanismus kann z. B. eine Authentifizierung, ein Verschlüsselungsverfahren oder ein digitales Signaturverfahren umfassen. So kann es sein, dass, bevor die Steuerungsvorrichtung durch die Kommunikation mit dem Kommunikationsmodul Kenntnis von der Information erlangt, die Steuerungsvorrichtung sich durch ein Passwort authentifizieren muss. Ferner kann es sein, dass das Kommunikationsmodul die Information, insbesondere den Code, verschlüsselt, und die Steuerungsvorrichtung die Information, insbesondere den Code, entschlüsseln muss.

Als Verriegelung wird die Überführung der Türverriegelung in den verriegelten Zustand verstanden. Als Entriegelung wird die Überführung der Türverrieglung in den entriegelten Zustand verstanden.

Das Sicherheitssystem kann einen Verriegelungsmechanismus umfassen.

Der Verriegelungsmechanismus kann z. B. elektromechanisch oder rein elektromagnetisch ausgebildet sein. Der Verriegelungsmechanismus umfasst z. B. zumindest eine Spule. Eine Ansteuerung des Verriegelungsmechanismus zur Verriegelung oder Entriegelung kann insbesondere in einem Ab- oder Anschalten einer elektrischen Stromversorgung realisiert sein. Die elektrische Stromversorgung kann zur Versorgung der Spule mit elektrischem Strom dienen.

Ein elektromagnetischer Verriegelungsmechanismus ist beispielhaft in der DE100 50 111 C1 beschrieben. Im entriegelten Zustand wirken z. B. keine magnetischen Kräfte auf die Tür. In dem verriegelten Zustand wirken z. B. magnetische Kräfte auf eine Tür.

Ein elektromechanischer Verriegelungsmechanismus weist im verriegelten Zustand eine mechanische Verbindung zur Tür auf. Im entriegelten Zustand ist die mechanische Verbindung aufhebbar oder aufgehoben.

So kann der elektromechanische Verriegelungsmechanismus z. B. ein Riegelelement, d. h. einen Riegel oder eine Türfalle, aufweisen, das sich in dem entriegelten Zustand der Türverriegelung in einer zurückgezogenen Position befindet. In der zurückgezogenen Position befindet sich das Riegelelement außer Eingriff mit der Tür. In dem verriegelten Zustand befindet sich das Riegelelement im Eingriff mit der Tür. In einer weiteren Alternative eines elektromechanischen Verriegelungsmechanismus ist der Verriegelungsmechanismus nach Art eines Türöffners aufgebaut. D. h. der Verriegelungsmechanismus umfasst ein Fallenelement. Im verriegelten Zustand der Türverriegelung befindet sich eine Türfalle der Tür im Eingriff mit dem Verriegelungsmechanismus. Im entriegelten Zustand gibt das Fallenelement die Türfalle derart frei, dass die Türfalle, insbesondere durch Druck auf die Tür, außer Eingriff mit dem Verriegelungsmechanismus gelangen kann.

Bevorzugt führt ein Abschalten der elektrischen Stromversorgung zu einem entriegelten Zustand der Türverriegelung. Somit wird die Ansteuerung des Verriegelungsmechanismus zur Entriegelung der Türverriegelung durch ein Abschalten der elektrischen Stromversorgung realisiert. Bevorzugt führt ein Anschalten der elektrischen Stromversorgung zu einem verriegelten Zustand der Türverriegelung. Somit wird die Ansteuerung des Verriegelungsmechanismus zur Verriegelung durch ein Anschalten der elektrischen Stromversorgung realisiert.

Das Sicherheitssystem kann alternativ ohne den Verriegelungsmechanismus ausgebildet sein. In diesem Fall steuert das Sicherheitssystem den Verriegelungsmechanismus lediglich an. Z. B. schaltet das Sicherheitssystem die elektrische Stromversorgung für den Verriegelungsmechanismus an oder ab oder veranlasst ein An- oder Abschalten der elektrischen Stromversorgung.

Eine "Ansteuerung zur Verriegelung oder Entriegelung" liegt auch dann vor, wenn das Sicherheitssystem eine Rückmeldung über den Zustand des Verriegelungsmechanismus erhält. Eine "Ansteuerung zur Verriegelung oder Entriegelung" liegt auch dann vor, wenn, wie durch die Rückmeldung detektiert, der Verriegelungsmechanismus nicht dem Soll-Zustand entspricht und daher ein Alarm ausgegeben wird und/oder ein erneuter Versuch unternommen wird, den Soll-Zustand zu erreichen.

Das Sicherheitssystem kann eine Türverriegelungssteuerung umfassen. Ist eine Türverriegelungssteuerung vorgesehen, so steuert bevorzugt die Türverriegelungssteuerung den Verriegelungsmechanismus an. Hierzu kann die Türverriegelungssteuerung die elektrische Stromversorgung für den Verriegelungsmechanismus an- und abschalten.

Das Sicherheitssystem kann die Türverriegelungssteuerung, nicht jedoch den Verriegelungsmechanismus umfassen. Die Türverrieglungssteuerung ist in diesem Fall als Türverriegelungsadapter ausgebildet. Der Türverriegelungsadapter dient dazu, das erfindungsgemäße Sicherheitssystem bei schon montierten Verriegelungsmechanismen einzusetzen.

Die Türverriegelung umfasst den Verriegelungsmechanismus und, falls vorhanden, die Türverriegelungssteuerung. Besonders bevorzugt umfasst das Sicherheitssystem die Türverriegelung. Die Türverriegelung oder der Verriegelungsmechanismus können in einem mechanischen Schloss integriert sein.

Bevorzugt sind die Türverriegelungssteuerung und das Auslöseelement mit einem ersten Bussystem verbunden. Unter einer Verbindung mit einem Bussystem wird im Folgenden eine unmittelbare Verbindung verstanden, so dass eine mit dem Bussystem verbundene Komponente als Busteilnehmer des Bussystems mit einer eigenen Busadresse anzusehen ist. Die Türverriegelungssteuerung und das Auslöseelement sind über das erste Bussystem miteinander verbunden.

Das Auslöseelement kann direkt den Verriegelungsmechanismus zur Entriegelung ansteuern. Alternativ und besonders bevorzugt veranlasst das Auslöseelement eine Ansteuerung des Verriegelungsmechanismus zur Entriegelung. Unter dem Veranlassen einer Ansteuerung wird insbesondere das Senden einer Nachricht, z. B. über das erste Bussystem, verstanden, die eine Information und/oder einen Befehl enthält, die den unmittelbaren oder mittelbaren Empfänger der Nachricht veranlasst, die Ansteuerung vorzunehmen. Der Sender der Nachricht initiiert die Ansteuerung. Somit wird unter Veranlassen einer Ansteuerung eine indirekte Ansteuerung verstanden. So kann z. B. das Auslöseelement eine Nachricht über das erste Bussystem an die Türverriegelungssteuerung senden, woraufhin die Türverriegelungssteuerung den Verriegelungsmechanismus zur Entriegelung ansteuert.

Die Steuerungsvorrichtung kann insbesondere dazu vorgesehen sein, für nicht sicherheitsrelevanten Funktionen zur Steuerung und/oder Überwachung der zumindest einen Türverriegelung ausgebildet zu sein. Die Steuerungsvorrichtung kann zur Ansteuerung eines akustischen Alarmgebers oder zur Veranlassung einer derartigen Ansteuerung dienen. Die Steuerungsvorrichtung kann zur Ansteuerung von Leuchtmitteln zur optischen Darstellung zumindest eines Zustands des Sicherheitssystems dienen oder eine derartige Ansteuerung veranlassen. Die Steuerungsvorrichtung kann mit dem ersten Bussystem verbunden sein. Das Auslöseelement kann den akustische Alarmgeber und/oder die Leuchtmittel umfassen.

Die Steuerungsvorrichtung kann in dem Auslöseelement integriert sein. Anders ausgedrückt, kann das Auslöseelement die Steuerungsvorrichtung umfassen. In diesem Fall kann eine digitale Elektronikvorrichtung des Auslöseelements als Steuerungsvorrichtung dienen.

Alternativ kann die Steuerungsvorrichtung in der Türverriegelungssteuerung integriert sein. Anders ausgedrückt, kann die Türverriegelungssteuerung die Steuerungsvorrichtung umfassen.

In einer weiteren Alternative ist die Steuerungsvorrichtung weder in einem Auslöseelement noch in einer Türverriegelungssteuerung integriert. Die Steuerungsvorrichtung kann mit dem Auslöseelement und der Türverriegelungssteuerung über das erste Bussystem verbunden sein. Hierdurch kann die Steuerungsvorrichtung z. B. entfernt von der Tür in einem Technikraum angeordnet werden. Beispielsweise kann die Steuerungsvorrichtung in dieser Variante ein Hutschienengehäuse umfassen.

Das Sicherheitssystem umfasst mehrere Auslöseelemente und Türverriegelungssteuerungen. Hierbei kann eine erste Anzahl m von Auslöseelemente und eine zweite Anzahl m' von Türverriegelungssteuerungen mit dem ersten Bussystem verbunden sein. Hierbei können m und/oder m' einer natürlichen Zahl von 1 bis n entsprechen. Die natürliche Zahl n kann mindestens zwei, bevorzugt mindestens drei, besonders bevorzugt mindestens vier sein. In einem Beispiel ist n gleich vier. Die erste Anzahl m kann der zweiten Anzahl m' gleichen oder sich von der zweiten Anzahl m' unterscheiden.

Es kann sein, dass genau eine Steuerungsvorrichtung für das erste Bussystem vorgesehen ist.

Sind mehrere Auslöseelemente mit dem ersten Bussystem verbunden, so kann die Steuerungsvorrichtung in einem der Auslöseelemente integriert sein. Das zumindest eine weitere Auslöseelement, das mit dem ersten Bussystem verbunden ist, ist ohne die Steuerungsvorrichtung ausgebildet. In diesem Fall kann die Steuerungsvorrichtung den akustischen Alarmgeber und/oder die Leuchtmittel des Auslöseelements, das die Steuerungsvorrichtung umfasst, ansteuern. Das zumindest eine weitere Auslöseelement kann bevorzugt durch die Steuerungsvorrichtung veranlasst werden, die Leuchtmittel und/oder den akustischen Alarmgeber des zumindest einen weiteren Auslöseelements anzusteuern.

Alternativ kann die Steuerungsvorrichtung in einem der Türverriegelungssteuerungen integriert sein, wenn mehrere Türverriegelungssteuerungen mit dem ersten Bussystem verbunden sind. Die zumindest eine weitere Türverriegelungssteuerung, die mit dem ersten Bussystem verbunden ist, ist ohne die Steuerungsvorrichtung ausgebildet. In diesem Fall kann die Steuerungsvorrichtung den Verriegelungsmechanismus der Türverriegelungssteuerung, die die Steuerungsvorrichtung umfasst, ansteuern. Die zumindest eine weitere Türverriegelungssteuerung kann durch die

Steuerungsvorrichtung bevorzugt veranlasst werden, den dazugehörigen Verriegelungsmechanismus anzusteuern.

In einer weiteren Alternative ist die Steuerungsvorrichtung weder in einem der Auslöseelemente, die mit dem ersten Bussystem verbunden sind, noch in einem der Türverriegelungssteuerungen, die mit dem ersten Bussystem verbunden sind, integriert. Vielmehr kann die Steuerungsvorrichtung mit allen Auslöseelementen, die mit dem ersten Bussystem verbunden sind, und mit allen Türverriegelungssteuerungen, die mit dem ersten Bussystem verbunden sind, über das erste Bussystem verbunden sein. Hierdurch kann die Steuerungsvorrichtung z. B. entfernt von der Tür in einem Technikraum angeordnet werden. Beispielsweise kann die Steuerungsvorrichtung in dieser Variante das Hutschienengehäuse umfassen.

Das Sicherheitssystem umfasst eine Zentrale. Die Zentrale kann als die Wachvorrichtung und/oder als eine zentrale Fluchtwegsteuerung ausgebildet sein. Die Wachvorrichtung und/oder die zentrale Fluchtwegsteuerung können mit einem zweiten Bussystem verbunden sein. Die zentrale Fluchtwegsteuerung kann einen zentralen Notfalltaster umfassen. Wird der zentrale Notfalltaster betätigt, so wird der Verriegelungsmechanismus zur Entriegelung angesteuert. Der Vorgang, dass in Folge der Betätigung des zentralen Notfalltasters der Verriegelungsmechanismus zur Entriegelung angesteuert wird, erfolgt Ein-Fehler-sicher und ist somit für den Gefahrenfall geeignet.

Die Steuerungsvorrichtung ist mit dem zweiten Bussystem verbunden. Somit sind die Steuerungsvorrichtung und die Zentrale über das zweite Bussystem miteinander verbunden. Die weiteren Busteilnehmer des ersten Bussystems sind bevorzugt nicht mit dem zweiten Bussystem verbunden. Die Steuerungsvorrichtung kann Nachrichten über einen Zustand eines Busteilnehmers des ersten Bussystems an die Zentrale senden oder weiterleiten. Die Steuerungsvorrichtung kann Nachrichten von der Zentrale für zumindest einen Teilnehmer des ersten Bussystems senden oder weiterleiten.

Das Sicherheitssystem umfasst mehrere Bussysteme, die sich an das zweite Bussystem anschließen. Die mehrere Bussysteme sind gemäß der ersten Bussystemart ausgebildet. Die mehrere Bussysteme sind jeweils mit zumindest einem Auslöseelement und zumindest einer Türverriegelungssteuerung verbunden. Jedes der mehreren Bussysteme, insbesondere jedes der mehreren Bussystem mit zumindest einem Auslöseelement und einer Türverriegelungssteuerung, weist eine Steuerungsvorrichtung auf. Insbesondere kann jedes der mehreren Bussysteme genau eine Steuerungsvorrichtung aufweisen. Die Steuerungsvorrichtung jedes der mehreren Bussysteme ist mit dem zweiten Bussystem verbunden. Die Steuerungsvorrichtung jedes der mehreren Bussystem kann Nachrichten über einen Zustand eines Busteilnehmers des jeweiligen Bussystems an die Zentrale senden oder weiterleiten.

Die Steuerungsvorrichtung kann Nachrichten von der Zentrale für zumindest einen Busteilnehmer senden oder weiterleiten.

Es ist denkbar, dass das Sicherheitssystem nur funktionsfähig ist, wenn das Kommunikationsmodul mit der Kommunikationsschnittstelle in Kommunikationsverbindung steht. Alternativ kann es sein, dass das Sicherheitssystem nur länger als der vorgegebene Zeitraum funktionsfähig ist, wenn das Kommunikationsmodul mit der Kommunikationsschnittstelle in Kommunikationsverbindung steht. Funktionsfähig bedeutet hierbei, dass das Sicherheitssystem zumindest eine Funktion zur Steuerung und/oder Überwachung der zumindest einen Türverriegelung ausführen kann.

Vorzugsweise ist vorgesehen, dass die Steuerungsvorrichtung nur eine für die Steuerungsvorrichtung vorgesehene Funktionen ausführen kann, wenn das Kommunikationsmodul mit der Kommunikationsschnittstelle in Kommunikationsverbindung steht. Alternativ kann es sein, dass die Steuerungsvorrichtung nur länger als der vorgegebene Zeitraum nur eine für die Steuerungsvorrichtung vorgesehene Funktionen ausführen kann, wenn das Kommunikationsmodul mit der Kommunikationsschnittstelle in Kommunikationsverbindung steht. Somit ist dafür, dass das Sicherheitssystem eine Steuerungsvorrichtung, die zumindest länger als der vorgegebene Zeitraum funktionsfähig ist, stets das Vorhanden Sein des Kommunikationsmoduls von Nöten.

Es kann sein, dass genau ein Busteilnehmer des ersten Bussystems mit dem Kommunikationsmodul in Kommunikationsverbindung steht.

Es sind mehrere Bussysteme vorgesehen, die jeweils mit zumindest einem Auslöseelement und zumindest einer Türverriegelungssteuerung verbunden sind, wobei für jedes der Bussysteme ein Kommunikationsmodul benötigt wird. Bei jedem der mehreren Bussysteme steht mindestens ein Busteilnehmer mit einem Kommunikationsmodul in Kommunikationsverbindung. Besonders bevorzugt steht genau ein Busteilnehmer jedes der mehreren Bussystem mit einem Kommunikationsmodul in Kommunikationsverbindung. Für jedes der mehrere Bussysteme kann ein anderes Kommunikationsmodul verwendet werden. Durch die unterschiedlichen Kommunikationsmodule können in jedem der mehreren Bussystem unterschiedliche Funktionen ausführbar, insbesondere freigeschaltet, sein.

Es ist denkbar, dass der genau eine Busteilnehmer des ersten Bussystems, der mit dem Kommunikationsmodul in Kommunikationsverbindung steht, mit dem zweiten Bussystem verbunden ist. Bevorzugt ist es hierbei denkbar, dass der genau eine Busteilnehmer des ersten Bussystems, der mit dem Kommunikationsmodul in Kommunikationsverbindung steht, der einzige Busteilnehmer ist, der mit dem zweiten Bussystem in Kommunikationsverbindung steht. Sind mehrere Bussysteme vorgesehen, die jeweils mit zumindest einem Auslöseelement und zumindest einer Türverriegelungssteuerung verbunden sind, so kann dieses für jedes der mehreren Bussystem gelten.

Es kann sein, dass das Auslöseelement die Kommunikationsschnittstelle umfasst. Befindet sich das Auslöseelement in Kommunikationsverbindung zu dem Kommunikationsmodul, so umfasst das Auslöseelement zugleich die Steuerungsvorrichtung. Es kann sein, dass das Auslöseelement die Aufnahme umfasst. Befindet sich das Kommunikationsmodul in der Aufnahme, umfasst das Auslöseelement zugleich die Steuerungsvorrichtung. Durch das Einsetzen des Kommunikationsmoduls in die Aufnahme kann das Auslöseelement als Steuerungsvorrichtung fungieren. Bevorzugt verliert nach dem Entfernen des Kommunikationsmoduls aus der Aufnahme das Auslöseelement unmittelbar oder spätestens nach dem vorgegebenen Zeitraum die Funktion der Steuerungsvorrichtung.

Umfasst das Sicherheitssystem mehrere Auslöseelemente, kann zumindest eines der Auslöseelemente die Kommunikationsschnittstelle und/oder die Aufnahme umfassen. Bevorzugt umfassen zumindest zwei Auslöseelemente, besonders bevorzugt alle Auslöseelemente jeweils eine Kommunikationsschnittstelle und/oder eine Aufnahme. Somit ist es möglich, zumindest zwei der Auslöseelemente, bevorzugt jedes der Auslöseelemente, durch die Kommunikation mit dem Kommunikationsmodul, insbesondere mit der Anordnung des Kommunikationsmoduls in der Aufnahme, die Steuerungsvorrichtung umfassen zu lassen. Hierzu muss nur das Kommunikationsmodul in die Aufnahme eingeschoben werden. Die Auslöseelemente können somit jeweils ausgebildet sein, durch Kommunikation mit dem Kommunikationsmodul als Steuerungsvorrichtung zu dienen. Nur das zumindest eine Auslöseelement, das mit einem Kommunikationsmodul in Kommunikationsverbindung steht, dient auch als Steuerungsvorrichtung. Es kann vorgesehen sein, dass mehrere Auslöseelemente, die mit dem ersten Bussystem verbunden sind, jeweils eine Aufnahme umfassen, wobei in genau einem der Aufnahmen ein Kommunikationsmodul angeordnet ist. Das Auslöseelement, in dessen Aufnahme sich das Kommunikationsmodul befindet, fungiert zugleich als Steuerungsvorrichtung, während die übrigen Auslöseelemente, die mit dem ersten Bussystem verbunden sind, nicht als Steuerungsvorrichtung fungieren.

Es kann sein, dass die Türverriegelungssteuerung die Kommunikationsschnittstelle umfasst. Befindet sich die Türverriegelungssteuerung in Kommunikationsverbindung zu dem Kommunikationsmodul, so umfasst die Türverriegelungssteuerung zugleich die Steuerungsvorrichtung. Es kann sein, dass die Türverriegelungssteuerung die Aufnahme umfasst. Befindet sich das Kommunikationsmodul in der Aufnahme, umfasst die Türverriegelungssteuerung zugleich die Steuerungsvorrichtung.

Es kann sein, dass eine Verarbeitungselektronik des Sicherheitssystems die Kommunikationsschnittstelle umfasst. Befindet sich die Verarbeitungselektronik in Kommunikationsverbindung zu dem Kommunikationsmodul, so dient die Verarbeitungselektronik als Steuerungsvorrichtung. Es kann sein, dass die Verarbeitungselektronik die Aufnahme umfasst. Befindet sich das Kommunikationsmodul in der Aufnahme, dient die Verarbeitungselektronik als Steuerungsvorrichtung. Durch das Einsetzen des Kommunikationsmoduls in die Aufnahme kann die Verarbeitungselektronik als Steuerungsvorrichtung fungieren. Bevorzugt verliert nach dem Entfernen des Kommunikationsmoduls aus der Aufnahme die Verarbeitungselektronik unmittelbar oder spätestens nach dem vorgegebenen Zeitraum die Funktion der Steuerungsvorrichtung. Die Verarbeitungselektronik kann vorgesehen sein, um die Steuerungsvorrichtung als separaten Busteilnehmer des ersten Bussystems vorzusehen.

Das Sicherheitssystem kann insbesondere zumindest eine der folgenden Funktionen durchführen:
Die Funktion kann als ein Veranlassen einer Ansteuerung oder als eine Ansteuerung zumindest eines Türverriegelungsmechanismus zur Entriegelung in Folge der Betätigung des Auslöseelements ausgebildet sein (Funktion a.). Insbesondere die Funktion beinhalten, dass in Folge der Betätigung des Auslöseelements das Auslöseelement den Türverriegelungsmechanismus zur Entriegelung ansteuert oder eine derartige Ansteuerung, insbesondere über das erste Bussystem, veranlasst.

Das Sicherheitssystem, insbesondere das Auslöseelement oder die Türverriegelungssteuerung, kann mit einer Brandmeldeanlage verbindbar sein. Das Sicherheitssystem kann ein Brandmeldesignal empfangen. Nach dem Empfang des Brandmeldesignals kann das Sicherheitssystem, insbesondere das Auslöseelement, eine Ansteuerung zumindest eines Verriegelungsmechanismus zur Entriegelung veranlassen (Funktion b.).

Das Sicherheitssystem, insbesondere das Auslöseelement, kann die Ansteuerung des Verriegelungsmechanismus zur Entriegelung in Folge einer Betätigung des Auslöseelements zeitlich verzögern (Funktion c.). Hierbei ist insbesondere vorgesehen, dass das Auslöseelement zeitverzögert veranlasst, dass der Verriegelungsmechanismus zur Entriegelung angesteuert wird. Hierbei kann das Auslöseelement zeitverzögert eine Nachricht bezüglich der Betätigung des Auslöseelements an die Türverriegelungssteuerung senden.

Es ist denkbar, dass das Auslöseelement von einem aktivierten Zustand in einen deaktivierten Zustand überführbar ist. In dem deaktivierten Zustand unterbleibt in Folge einer Betätigung des Auslöseelements eine Ansteuerung eines Verriegelungsmechanismus zur Entriegelung. In dem aktivierten Zustand findet in Folge einer Betätigung des Auslöseelements eine Ansteuerung des Verriegelungsmechanismus zur Entriegelung statt. Somit ist in dem deaktivierten Zustand des Auslöseelements verhindert, dass der Verriegelungsmechanismus zur Entriegelung in Folge einer Betätigung des Auslöseelements angesteuert wird (Funktion d.). Bevorzugt verhindert das Auslöseelement, dass das Auslöseelement den Verriegelungsmechanismus zur Entriegelung ansteuert oder eine derartige Ansteuerung veranlasst.

Das Sicherheitssystem, insbesondere das Auslöseelement, kann ein Audio- und/oder Videomodul freischalten oder eine derartige Freischaltung veranlassen (Funktion f.). Das Audio- und/oder Videomodul übermittelt eine Audio- und/oder Videoaufnahme an die Wachvorrichtung. Hierdurch können im Gefahrenfall der Bediener im Wachraum und der Benutzer vor Ort, der fliehen will, akustisch verständigen und/oder der Bediener im Wachraum kann den Ort vor der Tür, an dem das Auslöseelement betätigt wurde, einsehen. Insbesondere schaltet das Sicherheitssystem, insbesondere das Auslöseelement, das Audio- und/oder Videomodul in Folge der Betätigung des Auslöseelements frei. Die Freischaltung kann zumindest im deaktivierten Zustand erfolgen. Bevorzugt erfolgt die Freischaltung stets in Folge der Betätigung des Auslöseelements.

Bevorzugt ist vorgesehen, dass in Folge der Betätigung des Auslöseelements insbesondere elektronisch verhindert ist, dass ohne das Vorliegen einer Aufhebungsbedingung ein Verriegelungsmechanismus der Türverriegelung zur Verriegelung ansteuerbar ist (Funktion e.). Hierdurch wird verhindert, dass im Gefahrenfalle die Türverriegelung wieder verriegelt, obwohl noch Benutzer fliehen wollen. Hierbei kann insbesondere die Türverriegelungssteuerung eine Wiederverriegelung der Türverriegelung elektronisch verhindern. Wird die Aufhebungsbedingung erreicht, lässt die Türverriegelungssteuerung eine Wiederverriegelung zumindest zu. Insbesondere steuert die Türverriegelungssteuerung den Verriegelungsmechanismus unmittelbar nach dem Erreichen der Aufhebungsbedingung an.

Zum Erreichen der Aufhebungsbedingung kann eine Aufhebungshandlung am Auslöseelement erfolgen. Die Aufhebungshandlung, die unmittelbar an dem Auslöseelement vorgenommen wird, kann durch eine Betätigung eines Betätigungselements des Auslöseelements erzeugbar sein. Insbesondere entspricht die Aufhebungshandlung am Auslöseelement der Betätigung des Betätigungselements zur Freigabe des Fluchtweges. Ein derart erzeugtes Aufhebungssignal kann somit dem Betätigungssignal entsprechen. Damit die Türverriegelungssteuerung erkennt, dass die Betätigung des Betätigungselements zum Erreichen der Aufhebungsbedingung und nicht zur Erzeugung des Betätigungssignals zur Freigabe des Fluchtwegs erfolgt, muss der Türverriegelungssteuerung eine weitere Information vorliegen. So kann es erforderlich sein, dass ein Bediener sich authentifiziert. Hierzu kann eine Authentifizierungsvorrichtung dienen, die mit dem Auslöseelement verbunden oder verbindbar ist. Dieses kann die Authentifizierung sein. In Folge der Authentifizierung kann das Auslöseelement ein positives Identifikationssignal empfangen. Es kann sein, dass zum Erreichen der Aufhebungsbedingung eine vorgegebene Zeitabfolge und/oder Reihenfolge bei der Erzeugung des Aufhebungssignals und der Authentifizierung, insbesondere der Empfang des positiven Identifikationssignals, einzuhalten ist. Insbesondere müssen das Aufhebungssignal und die Authentifizierung, zumindest teilweise gleichzeitig vorliegen.

Insbesondere wenn die Tür, insbesondere das Türblatt, nach dem Erzeugen des Betätigungssignals geschlossen bleibt, steht dem Sicherheitssystem zumindest eine weitere Möglichkeit zur Verfügung, die Aufhebungsbedingung zu erreichen. Zum Erreichen der Aufhebungsbedingung können ein Ablauf einer vorbestimmten Zeitspanne und bei einem Fehlen eines Signals über ein Öffnen der Tür innerhalb der vorbestimmten Zeitspanne beitragen oder ausreichen. Zusätzlich kann ein Erhalt eines Aufhebesignals der zentralen Fluchtwegsteuerung zum Erreichen der Aufhebungsbedingung beitragen. Es kann sein, dass zudem eine der Möglichkeiten, die Aufhebungsbedingung ohne eine Aufhebungshandlung am Auslöseelement zu erreichen, als zulässig hinterlegt sein muss.

Eine Anzahl von Türverriegelungssteuerungen und eine Anzahl von Auslöseelemente können über ein gemeinsames Bussystem miteinander verbunden sein. Die Anzahl von Türverriegelungssteuerungen der Anzahl von Auslöseelementen können derart zugeordnet sein, dass bei einer Betätigung eines der Auslöseelemente nur die zumindest eine Türverrieglungssteuerung, die dem betätigten Auslöseelement zugeordnet ist, den jeweiligen Türverriegelungsmechanismus zur Entriegelung ansteuert (Funktion g.). Hierdurch können die mit dem ersten Bussystem verbundenen Auslöseelemente an unterschiedlichen Türen angeordnet werden.

Das Sicherheitssystem, insbesondere die Steuerungsvorrichtung, kann den Türverriegelungsmechanismus zur Entriegelung nach Empfang eines positiven Authentifizierungssignals ansteuern oder eine derartige Ansteuerung veranlassen (Funktion h.). Hierzu kann das Sicherheitssystem, insbesondere die Steuerungsvorrichtung, mit einem Zutrittskontrollsystem verbunden oder verbindbar sein. Das Zutrittskontrollsystem kann mit dem ersten Bussystem verbunden oder verbindbar sein.

Das Sicherheitssystem, insbesondere die Steuerungsvorrichtung, kann z. B. den Türverriegelungsmechanismus zur Entriegelung zu einer vorgegebenen Zeit ansteuern oder eine derartige Ansteuerung veranlassen (Funktion i.). Die Entriegelung zu einer vorgegebenen Zeit kann vorgesehen sein, wenn z. B. in einem Zeitfenster pro Tag die Tür entriegelt sein soll.

Liegt kein Gefahrenfall vor, d. h. wurde weder das Auslöseelement betätigt noch liegt ein Brandmeldesignal vor, so kann das Sicherheitssystem, insbesondere die Steuerungsvorrichtung, den Türverriegelungsmechanismus zur automatischen Wiederverriegelung nach Ablauf einer vorbestimmten Zeitspanne ansteuern oder eine derartige Ansteuerung veranlassen (Funktion k.). Dieses kann z. B. der Fall sein, wenn zuvor aufgrund eines positiven Authentifizierungssignals die Türverriegelung entriegelt wurde.

Zusätzlich oder alternativ kann vorgesehen sein, dass das Sicherheitssystem, insbesondere die Steuerungsvorrichtung, den Verriegelungsmechanismus zur automatischen Wiederverriegelung nach dem Empfang eines Signals über einen geschlossenen Zustand der Tür unmittelbar ansteuert oder eine derartige Ansteuerung veranlasst (Funktion I.). Der geschlossene Zustand der Tür kann durch zumindest eine Türzustandsüberwachungsvorrichtung detektierbar sein.

Das Sicherheitssystem, insbesondere das Auslöseelement, kann einen akustischen Alarmgeber umfassen.

Das Sicherheitssystem, insbesondere das Auslöseelement, kann ein Anzeigegerät zur optischen Darstellung des ver- und des entriegelten Zustands der Türverriegelung umfassen.

Das Sicherheitssystem, insbesondere das Auslöseelement, kann eine Anzeigevorrichtung zur optischen Darstellung einer zeitverzögerten Ansteuerung des Verriegelungsmechanismus nach einer Betätigung des Auslöseelements umfassen.

Das Sicherheitssystem, insbesondere das Auslöseelement, kann eine Anzeige zur optischen Darstellung eines Alarmzustands umfassen. Der Alarmzustand kann den Gefahrenfall bezeichnen. Der Alarmzustand tritt insbesondere nach einer Betätigung des Auslöseelements und/oder nach Empfang eines Brandmeldesignals ein.

Das Sicherheitssystem, insbesondere das Auslöseelement, kann optisch darstellen, falls eine Wiederverriegelung fehlschlägt, insbesondere die Tür geöffnet bleibt, was über die zumindest eine Türzustandsüberwachungsvorrichtung detektierbar ist. Eine Brandschutztür sollte nach einer Begehung stets geschlossen sein. Ist z. B. aufgrund eines positiven Authentifizierungssignals die Türverriegelung entriegelt worden und wurde die Tür geöffnet aber nicht nach der vorbestimmten Zeitspanne automatisch wiederverriegelt, so kann diese Tatsache optisch dargestellt werden.

Als Anzeigegerät, als Anzeigevorrichtung, als Anzeige zur optischen Darstellung eines Alarmzustands und/oder zur optischen Darstellung der fehlgeschlagenen Wiederverriegelung kann das Auslöseelement Leuchtmittel umfassen. Bevorzugt dienen die Leuchtmittel sowohl als Anzeigegerät, als Anzeigevorrichtung, als Anzeige zur optischen Darstellung eines Alarmzustands als auch zur optischen Darstellung der fehlgeschlagenen Wiederverriegelung. Hierzu sind die Leuchtmittel in zumindest zwei Gruppen ansteuerbar. Insbesondere sind die Leuchtmittel zumindest teilweise einzeln ansteuerbar.

Das Sicherheitssystem, insbesondere die Steuerungsvorrichtung, kann das Anzeigegerät, insbesondere die Leuchtmittel, zur optischen Darstellung des Verriegelungszustands ansteuern oder/und eine derartige Ansteuerung veranlassen (Funktion p.).

Das Sicherheitssystem, insbesondere die Steuerungsvorrichtung, kann die Anzeigevorrichtung, insbesondere die Leuchtmittel, zur optischen Darstellung der zeitverzögerten Ansteuerung des Verriegelungsmechanismus ansteuern oder/und eine derartige Ansteuerung veranlassen (Funktion q.).

Das Sicherheitssystem, insbesondere die Steuerungsvorrichtung, kann die Anzeige, insbesondere die Leuchtmittel zur optischen Darstellung eines Alarmzustands und/oder den akustischen Alarmgeber zur Ausgabe eines akustischen Alarms ansteuern oder eine derartige Ansteuerung veranlassen (Funktion o. und/oder Funktion r.)

Das Sicherheitssystem, insbesondere die Steuerungsvorrichtung, kann einen optischen und/oder akustischen Alarm ausgeben lassen, falls eine Wiederverriegelung fehlschlägt, insbesondere falls die Tür geöffnet bleibt (Funktion s.)

Die Steuerungsvorrichtung kann den akustischen Alarmgeber ansteuern oder ansteuern lassen, um einen Alarm ausgeben zu lassen, in Abhängigkeit von einem Signal der Türzustandsüberwachungsvorrichtung über das Öffnen der Tür, insbesondere wenn keine Berechtigung zur Begehung der Tür vorliegt (Funktion m.). Es kann sein, dass eine Tür zumindest für ein gewisses Zeitfenster entriegelt ist. Wird in diesem Zeitfenster die Tür geöffnet, so wird ein akustischer Alarm ausgegeben. Der akustische Alarm kann in dem Zeitfenster ausgegeben werden oder nur, falls keine Berechtigung zur Begehung der Tür vorliegt.

Um die Funktionen ausführen zu können, können Parameter in der Steuerungsvorrichtung hinterlegt sein. Hierzu weist die Steuerungsvorrichtung insbesondere einen nicht flüchtigen Speicher auf. Die Parameter können von einem Bediener über das Parametrierungsprogramm eingestellt werden.

Das Sicherheitssystem, insbesondere die Steuerungsvorrichtung, kann ein Funkmodul umfassen. Über das Funkmodul kann die Steuerungsvorrichtung zur Parametrisierung kommunizieren. Hierzu kann die Steuerungsvorrichtung bevorzugt mit einem mobilen Kommunikationsgerät, wie einem Laptop, einem Tablet oder einem Mobiltelefon, kommunizieren (Funktion n.).

Mit Hilfe der Steuerungsvorrichtung kann eine Kommunikationsverbindung zu einer Zentralen hergestellt und/oder aufrecht erhalten werden. Die Zentrale kann die Wachvorrichtung, die zentrale Fluchtwegsteuerung und/oder ein Mehrtüranzeigegerät umfassen (Funktion t.). Die Steuerungsvorrichtung kann mit einem zweiten Bussystem verbunden oder verbindbar sein. Die Wachvorrichtung und/oder die zentrale Fluchtwegsteuerung kann ebenfalls mit dem zweiten Bussystem verbunden sein.

Das Sicherheitssystem, insbesondere die Steuerungsvorrichtung, kann selektiv mit den Türverriegelungssteuerungen und/oder den Auslöseelementen kommunizieren. Durch die Selektivität der Ansteuerung kann die Steuerungsvorrichtung eine Schleusenfunktion innehaben (Funktion j.): So kann die Steuerungsvorrichtung eine Ansteuerung eines weiteren Türverriegelungsmechanismus nach erfolgter Ansteuerung eines ersten Türverriegelungsmechanismus bis zum Vorliegen einer Bedingung verhindern derart, dass eine Schleuse gebildet ist.

Es kann sein, dass es sich bei der Funktion, zu deren Ausführung die Kommunikation über die Kommunikationsschnittstelle erfolgt oder erfolgt ist, zumindest eine der oben angeführten Funktionen handeln. Bevorzugt sind mehrere der oben aufgeführten Funktionen Funktionen, zu deren Ausführung die Kommunikation über die Kommunikationsschnittstelle erfolgt oder erfolgt ist. In einem besonderen Fall sind alle oben aufgeführten Funktionen Funktionen, zu deren Ausführung die Kommunikation über die Kommunikationsschnittstelle erfolgt oder erfolgt ist. Somit können mehrere Funktionen durch die Kommunikation mit nur einem Kommunikationsmodul ausführbar sein.

Vorzugsweise können mehrere Funktionen einzeln und/oder als Funktionsblock mit mehreren Funktionen freischaltbar sein. So kann es sein, dass durch einen Code mehrere Funktionen freischaltbar sind. Die durch nur einen Code freischaltbaren Funktionen sind somit in einem Funktionsblock zusammengefasst.

Die Funktionen a.) bis d.) und f.) werden bevorzugt von dem Auslöseelement ausgeführt. Die Funktionen e.) und g.) werden insbesondere mittels der Türverriegelungssteuerung ausgeführt. Die Funktionen h.) bis t.) werden bevorzugt von der Steuerungsvorrichtung ausgeführt. Die Kommunikation mit dem Kommunikationsmodul wird bevorzugt durch die Steuerungsvorrichtung durchgeführt. Erlangt die Steuerungsvorrichtung von einer Information, insbesondere einem Code, Kenntnis, durch den eine Funktion, die auf einem anderen Busteilnehmer des ersten Bussystems ausgeführt wird, ausführbar gemacht werden soll, so benachrichtigt die Steuerungsvorrichtung den anderen Busteilnehmer des ersten Bussystems. Der andere Busteilnehmer des Bussystems schaltet daraufhin die Funktion frei. Erlangt die Steuerungsvorrichtung durch eine wiederholende Kommunikation mit dem Kommunikationsmodul Kenntnis davon, dass eine Information, insbesondere ein Code, nicht mehr ausgelesen werden kann, wobei der Code zu einer Funktion, die auf einem anderen Busteilnehmer des ersten Bussystems ausgeführt wird, gehört, so benachrichtigt die Steuerungsvorrichtung den anderen Busteilnehmer des ersten Bussystems. Der andere Busteilnehmer des Bussystems sperrt daraufhin die Funktion.

Es kann vorgesehen sein, dass eine Funktion derart gesperrt wird, dass das Sicherheitssystem in einen sicheren Zustand überführt wird. Wird z. B. die Funktion d.) gesperrt, so überführt sich das Auslöseelement in den aktivierten Zustand. Wird z. B. die Funktion c.) gesperrt, so veranlasst das Auslöseelement stets unmittelbar in Folge einer Betätigung des Auslöseelements die Ansteuerung des Verriegelungsmechanismus zur Entriegelung. Wird die Funktion a.) oder b.) gesperrt, so wird unmittelbar der Verriegelungsmechanismus zur Entriegelung angesteuert.

Bevorzugt sind ausschließlich Parameter für die ausführbaren, insbesondere für die freigeschalteten, Funktion für den Bediener einstellbar. Das Parametrierungsprogramm zeigt auf einem Bildschirm für den Bediener nur die einstellbaren Parameter an, die zu den ausführbaren Funktionen gehören. Insbesondere kann nur eine Eingabeoption für die Parameter der ausführbaren, insbesondere freigeschalteten, Funktionen für den Bediener zugänglich sein. Dadurch kann ein hoher Schutz vor Fehlbedienungen erreicht werden. Es kann somit sein, dass Parameter für zumindest einen Teil der Funktionen durch ein Parametrierungsprogramm einstellbar sind, wobei ausschließlich Parameter für die ausführbaren Funktionen für einen Bediener anzeigbar sind.

Es kann sein, dass das Sicherheitssystem, insbesondere die Steuerungsvorrichtung dazu ausgebildet ist, zu erkennen, ob es sich bei dem Kommunikationsmodul, das über die Kommunikationsschnittstelle in Kommunikationsverbindung steht, insbesondere das in der Aufnahme aufgenommen ist, um ein Muttermodul oder um ein Hilfsmodul handelt. Als Muttermodul wird hierbei insbesondere ein Kommunikationsmodul bezeichnet, das zu einer dauerhaften Kommunikation über die Kommunikationsschnittstelle, insbesondere zu der dauerhaften Anordnung in der Aufnahme, bestimmt ist. Als Hilfsmodul wird insbesondere ein Kommunikationsmodul bezeichnet, das nicht als Muttermodul dient. Das Hilfsmodul kann dazu vorgesehen sein, eine zusätzliche Funktion für das Sicherheitssystem ausführbar zu machen. Hierbei kann das Hilfsmodul zu einer einmaligen Anordnung in der Aufnahme bestimmt sein.

Es kann vorgesehen sein, dass das Sicherheitssystem, insbesondere die Steuerungsvorrichtung, eine erste Kommunikation mit dem Kommunikationsmodul durchführt, wobei die erste Kommunikation dazu dient dem Sicherheitssystem die Information, insbesondere den Code, zur Verfügung zu stellen. Das Sicherheitssystem kann nach der ersten Kommunikation eine Veränderung des Kommunikationsmoduls veranlassen. Hierzu kann das Sicherheitssystem, insbesondere die Steuerungsvorrichtung, die Information auf dem Kommunikationsmodul verändern oder löschen. Hierdurch kann es möglich sein, dass das Hilfsmodul nicht erneut zur Ausführbarkeit einer Funktion dienen kann, ohne vorher erneut die Information aufgespielt zu bekommen. Bevorzugt kann mit Hilfe des Hilfsmoduls nur einmal eine Funktion freischaltbar sein. Nachdem das Hilfsmodul dem Sicherheitssystem, insbesondere der Steuerungsvorrichtung, die Information zur Verfügung gestellt hat, löscht das Sicherheitssystem bevorzugt eine Information zum Ausführen einer Funktion auf dem Hilfsmodul.

Das Sicherheitssystem, insbesondere die Steuerungsvorrichtung, kann dem Muttermodul die Information zum Ausführen einer Funktion belassen, nachdem das Muttermodul dem Sicherheitssystem, insbesondere der Steuerungsvorrichtung, eine Information zum Ausführen einer Funktion zur Verfügung gestellt hat.

Bevorzugt kann die Steuerungsvorrichtung anhand eines auf dem Muttermodul und/oder auf dem Hilfsmodul gespeicherten Kennung das Freigabemodul als Muttermodul oder als Hilfsmodul erkennen. Somit ist es denkbar, für das Muttermodul und das Hilfsmodul dieselbe Kommunikationsschnittstelle zu verwenden.

Insbesondere kann die Steuerungsvorrichtung nach einer Kommunikation mit dem Kommunikationsmodul ein Verändern des Kommunikationsmoduls nur im Falle des Erkennens eines Hilfsmoduls veranlassen. Es kann sein, dass nachdem das Hilfsmodul der Steuerungsvorrichtung die Information zum Ausführen einer Funktion zur Verfügung gestellt hat, die Steuerungsvorrichtung die Information zum Ausführen einer Funktion auf dem Hilfsmodul löscht. So kann nach dem Auslesen des Codes des Hilfsmoduls der Code des Hilfsmoduls gelöscht werden. Nach dem Auslesen des Codes des Muttermoduls hingegen unterbleibt ein Löschen des Codes. Somit können insbesondere alle Codes auf dem Muttermodul hinterlegbar sein.

Bevorzugt kann die Steuerungsvorrichtung folgendes erste Verfahren durchführen:
1. Erkennen eines Muttermoduls und Auslesen der darauf gespeicherten Information, insbesondere des darauf gespeicherten Codes,
2. Für den Fall, dass die Information ein Code ist, Freischalten der zu dem Code gehörenden Funktion.

Besonders bevorzugt kann die Steuerungsvorrichtung folgendes zweite Verfahren durchführen:
1. Erkennen eines Hilfsmoduls insbesondere in der Aufnahme, Auslesen einer darauf gespeicherten Information, insbesondere des darauf gespeicherten Codes, durch die Steuerungsvorrichtung
2. Speichern der ausgelesenen Information in der Steuerungsvorrichtung,
3. Löschen der Information, insbesondere des Codes, auf dem Hilfsmodul,
4. Erkennen des Muttermoduls, insbesondere in der Aufnahme, Schreiben der Information, die aus dem Hilfsmodul ausgelesen und in der Steuerungsvorrichtung gespeichert wurde, auf das Muttermodul.
5. Für den Fall, dass die Information ein Code ist, Freischalten der zu dem Code gehörenden Funktion.

Beim ersten Verfahren kann eine Speicherung der Information in der Steuerungsvorrichtung unterbleiben. Beim zweiten Verfahren kann die Information nach Schritt 4. in der Steuerungsvorrichtung gelöscht werden. Zwischen Schritt 3. und 4. kann es erforderlich sein, dass ein Benutzer das Hilfsmodul gegen das Muttermodul derart austauscht, so dass in dem Schritt 4. eine Kommunikation der Steuerungsvorrichtung mit dem Muttermodul anstelle des Hilfsmoduls stattfindet. Beispielsweise kann der Benutzer das Muttermodul aus der Aufnahme entfernen und das Hilfsmodul in die Aufnahme einsetzen. Schritt 5. kann nach einem der Schritte 1.bis 4. erfolgen. Durch die Durchführung des zweiten Verfahrens können mit Hilfe einer Kommunikationsschnittstelle alle Codes zu freigeschalteten Funktionen auf dem Muttermodul gespeichert sein.

Das Kommunikationsmodul kann als eine Chipkarte, insbesondere als eine Code-Speichernde Einheit, ausgebildet sein. Das Kommunikationsmodul kann eine Prozessoreinheit umfassen. Bevorzugt dient die Prozessoreinheit nur zu einer Verschlüsselung, insbesondere zur einer Verschlüsselung des Codes. Somit kann ein leistungsschwacher Prozessor verwendet werden.

Die Erfindung wird nachfolgend anhand von Ausführungsbeispielen näher erläutert. Technische Merkmale mit gleicher Funktion sind in den Figuren mit identischen Bezugszeichen versehen. Es zeigen:
- Fig. 1: eine Draufsicht auf ein erfindungsgemäßes Sicherheitssystem mit einem Nottaster als Auslöseelement in einem betriebsfertigen Zustand an einer Tür gemäß einem ersten Ausführungsbeispiel,
- Fig. 2: ein Funktionsschema des erfindungsgemäßen Sicherheitssystems aus Figur 1,
- Fig. 3: ein zu Fig. 2 modifiziertes Funktionsschema eines erfindungsgemäßen Sicherheitssystems gemäß einem zweiten Ausführungsbeispiel,
- Fig. 4: eine Draufsicht auf ein erfindungsgemäßes Sicherheitssystem mit mehreren Nottastern in einem betriebsfertigen Zustand an einer Tür gemäß einem dritten Ausführungsbeispiel,
- Fig. 5: ein Funktionsschema des erfindungsgemäßen Sicherheitssystems aus Figur 4,
- Fig. 6: ein zu Fig. 5 modifiziertes Funktionsschema eines erfindungsgemäßen Sicherheitssystems gemäß einem vierten Ausführungsbeispiel,
- Fig. 7: eine Draufsicht auf ein erfindungsgemäßes Sicherheitssystem in einem betriebsfertigen Zustand gemäß einem fünften Ausführungsbeispiel,
- Fig. 8: ein Funktionsschema einer zentralen Fluchtwegsteuerung des Sicherheitssystems aus Figur 7,
- Fig. 9: ein Funktionsschema des Sicherheitssystems aus Figur 7,
- Fig. 10: ein Funktionsschema eines erfindungsgemäßen Sicherheitssystems gemäß einem sechsten Ausführungsbeispiel,
- Fig. 11: ein Ausführungsbeispiel für einen erfindungsgemäßen Nottaster in einer Seitenansicht,
- Fig. 12: der Nottaster aus Figur 11 in einem Längsschnitt,
- Fig. 13: der Nottaster aus Figur 11 in einer Explosionsdarstellung,
- Fig. 14: ein Betätigungselement des Nottasters aus Figur 11 in einer perspektivischen Ansicht,
- Fig. 15: eine weitere perspektivische Ansicht des Betätigungselements aus Figur 14,
- Fig. 16: ein Lichtleiter des Nottasters aus Figur 11 in einer perspektivischen Ansicht,
- Fig. 17: eine weitere perspektivische Ansicht des Lichtleiters aus Figur 16 und
- Fig. 18a-d: eine schematische Darstellung eines Ablaufs einer Funktionsfreigabe in einem erfindungsgemäßen Sicherheitssystem.

Im Folgenden wird zwischen einem Benutzer und einem Bediener unterschieden. Ein Benutzer kann jede Person sein, die das Sicherheitssystem 1 benutzt. Ein Benutzer kann z. B. ein Gast sein, der durch die durch das Sicherheitssystem 1 gesicherte Tür fliehen will. Ein Bediener dient zur Bedienung des Sicherheitssystems 1. Der Bediener kann sich z. B. gegenüber dem Sicherheitssystem authentifizieren. Der Bediener kann z. B. Mitglied eines Wachpersonals sein. Besonders bevorzugt kann der Bediener kann das Sicherheitssystem 1 einstellen.

Im Folgenden wird unter dem Begriff "Betätigung des Nottasters" "Betätigung des Betätigungselements des Nottasters" verstanden.

Unter einer Verbindung mit einem Bussystem wird im Folgenden eine unmittelbare Verbindung verstanden, so dass eine mit dem Bussystem verbundene Komponente als Teilnehmer des Bussystems mit einer eigenen Busadresse anzusehen ist.

Unter dem Veranlassen einer Ansteuerung wird insbesondere das Senden einer Nachricht über ein erstes oder /und zweites Bussystem verstanden, die eine Information und/oder einen Befehl enthält, die den unmittelbaren oder mittelbaren Empfänger der Nachricht veranlasst, die Ansteuerung vorzunehmen. Der Sender der Nachricht initiiert die Ansteuerung. Somit wird unter Veranlassen einer Ansteuerung eine indirekte Ansteuerung verstanden. Die Nachricht kann insbesondere einem Bustelegramm entsprechen.

In Folge einer Betätigung bedeutet, dass eine Betätigung ursächlich ist, unabhängig davon, ob die Betätigung fortdauert oder nicht.

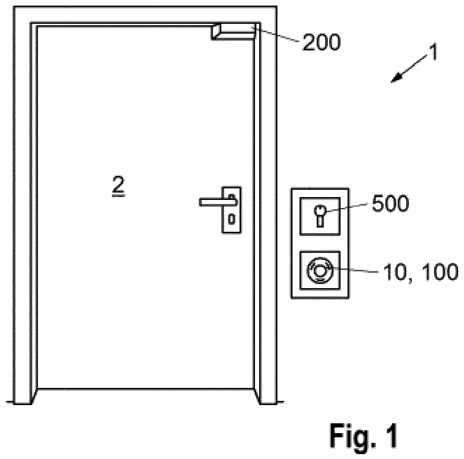

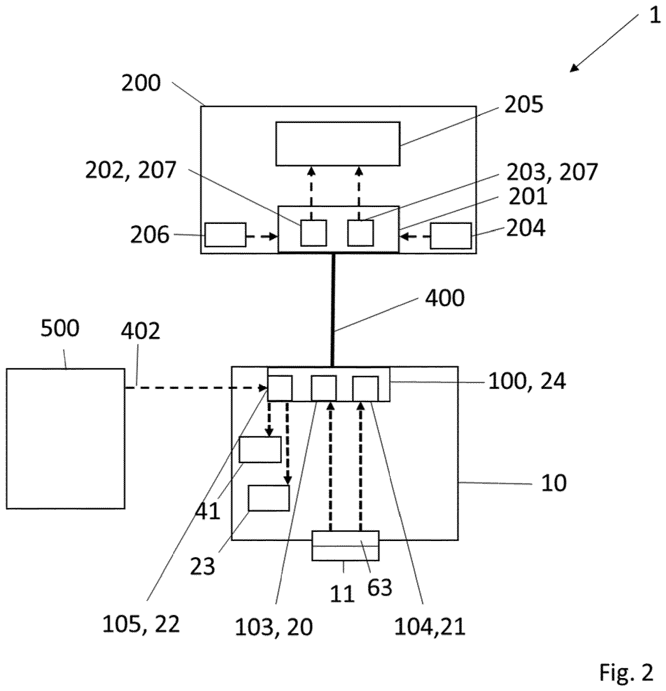

In den Figuren 1 und 2 wird ein erstes Ausführungsbeispiel eines erfindungsgemäßen Sicherheitssystems 1 für eine Tür 2 dargestellt. Die Tür 2 ist nicht Teil des erfindungsgemäßen Sicherheitssystems 1. Das erfindungsgemäße Sicherheitssystem 1 umfasst eine Türverriegelung 200 und einen Nottaster 10. Der Nottaster 10 umfasst eine Steuerungsvorrichtung 100. Dem Nottaster 10 ist ein Schlüsseltaster 500 zugeordnet. Das Sicherheitssystem 1 kann den Schlüsseltaster 500 umfassen. Alternativ kann das Sicherheitssystem 1, insbesondere der Nottaster 10, einen Schlüsseltastereingang aufweisen, über den eine Verbindung mit dem Schlüsseltaster 500 herstellbar ist.

Wie in Figur 2 dargestellt, sind der Nottaster 10 und die Türverriegelung 200 über ein erstes Bussystem 400 miteinander verbunden. Der Schlüsseltaster 500 ist mit dem Nottaster 10 über eine Verbindung 402 elektrisch verbunden oder verbindbar. Die Verbindung 402 ist als gestrichelter Pfeil dargestellt, um darzustellen, dass Signale über eine Position eines in den Schlüsseltaster 500 eingeführten Schlüssels einer Elektronikeinheit 24 des Nottasters 10 zugeführt werden. Alternativ zu der Verbindung 402 kann der Schlüsseltaster 500 ebenfalls mit dem ersten Bussystem 400 verbunden sein (nicht dargestellt). Diese Alternative gilt für alle Ausführungsbeispiele.

Der Nottaster 10 ist dazu ausgebildet, an die Türverriegelung 200 in Folge einer Betätigung des Nottasters 10 eine Nachricht über das erste Bussystem 400 zu senden und hierdurch eine Entriegelung der Türverriegelung zu veranlassen. Die Nachricht in Folge der Betätigung des Nottasters 10 kann zeitverzögert erfolgen.

Ebenfalls kann das erfindungsgemäße Sicherheitssystem 1, insbesondere der Nottaster 10, mit einem Brandmelder (nicht dargestellt) verbindbar sein. Bei Vorliegen eines Brandmeldesignals veranlasst das Sicherheitssystem 1 ebenfalls eine Entriegelung der Türverriegelung 200.

Die Steuerungsvorrichtung 100 führt nicht sicherheitsrelevante Funktionen aus: So kann die Steuerungsvorrichtung 100 für berechtigte Personen eine Entriegelung der Türverriegelung 200 veranlassen. Hierzu kann die Steuerungsvorrichtung 100 mit einem nicht dargestellten Zutrittskontrollsystem verbindbar sein. Das Zutrittskontrollsystem kann insbesondere mit dem ersten Bussystem 400 verbunden oder verbindbar sein. Die Steuerungsvorrichtung 100 empfängt von dem Zutrittskontrollsystem insbesondere über das Bussystem 400 ein positives Authentifizierungssignal über die erfolgte Authentifizierung. Danach veranlasst die Steuerungsvorrichtung 100 eine Entriegelung der Türverriegelung 200. Das Zutrittskontrollsystem kann z. B. einen Leser, einen Schlüsseltaster, eine Tastatur zur Eingabe eines Codes oder einen Schließzylinder eines mechanischen Schlosses, insbesondere eines selbstverriegelnden Panikschlosses, umfassen oder derart ausgebildet sein.

Ebenfalls kann die Steuerungsvorrichtung 100 zu einer vorgegebenen Zeit oder nach Ablauf einer vorgegebenen Zeitdauer eine Entriegelung der Türverriegelung 200 automatisch veranlassen, z. B. wenn in einem Zeitfenster pro Tag die Tür entriegelt sein soll.

Liegt kein Gefahrenfall vor, d .h. wurde weder der Nottaster 10 betätigt noch liegt ein Brandmeldesignal vor, so kann die Steuerungsvorrichtung 100 eine Wiederverriegelung nach Ablauf einer vorbestimmten Zeitspanne automatisch veranlassen. Hierbei kann die Steuerungsvorrichtung 100 neben dem positiven Authentifizierungssignal noch ein Zutrittssignal des Zutrittskontrollsystems empfangen und/oder die Länge des positiven Authentifizierungssignals messen. Durch das Zutrittssignal oder anhand der Länge des Authentifizierungssignals kann die Steuerungsvorrichtung 100 die Länge der vorbestimmten Zeitspanne anpassen. So kann eine Person z. B. eine ID-Karte lange vor den Leser halten oder eine lange Zeit den Schlüssel drehen. Hierdurch wird signalisiert, dass die vorbestimmte Zeitspanne einer zuvor in der Steuerungsvorrichtung 100 hinterlegten langen Zeitspanne entsprechen soll. Hält die Person die ID-Karte kurz vor den Leser oder dreht der Benutzer kurz den Schlüssel, so wird signalisiert, dass die vorbestimmte Zeitspanne einer zuvor in der Steuerungsvorrichtung 100 hinterlegten kurzen Zeitspanne entsprechen soll.

Eine erste Türzustandsüberwachungsvorrichtung 204 und eine zweite Türzustandsüberwachungsvorrichtung 206 detektieren, ob die Tür 2 geöffnet oder geschlossen ist. Die Steuerungsvorrichtung 100 empfängt zumindest mittelbar ein Signal der Türzustandsüberwachungsvorrichtungen 204, 206. Ist die Türverrieglung 200 aufgrund eines positives Authentifizierungssignals entriegelt worden, so kann die Steuerungsvorrichtung 100 eine Wiederverriegelung der Türverrieglung 200 unmittelbar und automatisch veranlassen, sobald der Steuerungsvorrichtung 100 mit Hilfe der Türzustandsüberwachungsvorrichtungen 204, 206 die Information vorliegt, dass die Tür zunächst geöffnet und nun wieder geschlossen ist.

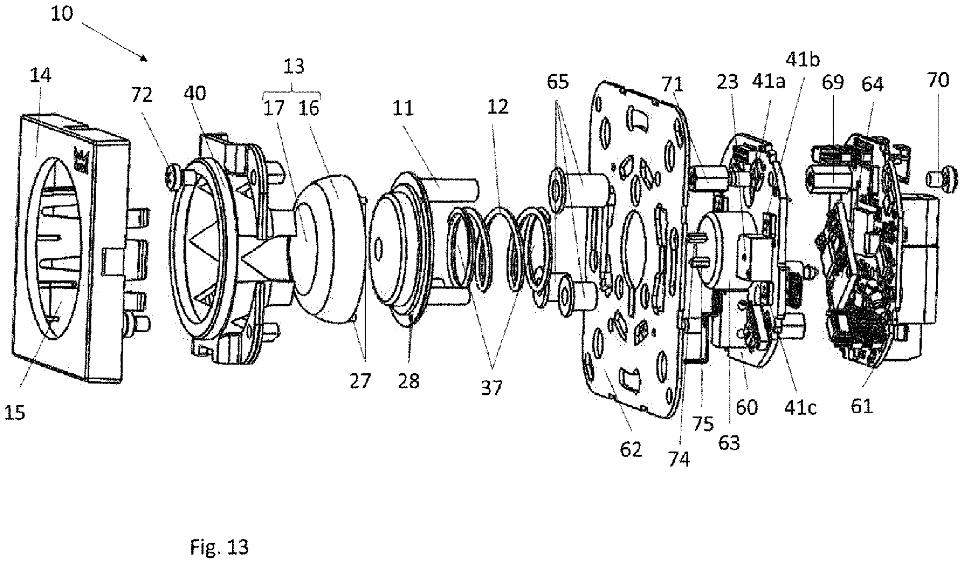

Der Nottaster 10 umfasst einen akustischen Alarmgeber 23 und Leuchtmittel 41 (s. auch Figur 13). Die Leuchtmittel 41 dienen zur Darstellung des Verriegelungs- bzw. Entriegelungszustands der Türverriegelung 200 und dienen somit als Anzeigegerät. Die Leuchtmittel 41 dienen zur optischen Darstellung einer zeitverzögerten Entriegelung der Türverriegelung 200 in Folge einer Betätigung des Nottasters 10 und dienen somit als Anzeigevorrichtung. Die Leuchtmittel 41 dienen zur optischen Darstellung eines Alarmzustands nach Empfang des Brandmeldesignals oder in Folge einer Betätigung des Nottasters 10 und dienen somit als Anzeige. Die Leuchtmittel 41 dienen zur optischen Darstellung, wenn eine zuvor beschriebene Wiederverriegelung fehlschlägt.

Die Steuerungsvorrichtung 100 steuert den akustischen Alarmgeber 23 an, um einen akustischen Alarm auszugeben, wenn ein Gefahrenfall vorliegt, d. h. wenn ein Brandmeldesignal empfangen oder der Nottaster 10 betätigt wurde. Die Steuerungsvorrichtung 100 steuert den akustischen Alarmgeber 23 an, um einen akustischen Alarm auszugeben, wenn eine Wiederverriegelung fehlschlägt.

Die Steuerungsvorrichtung 100 steuert die Leuchtmittel 41 an, um den Verriegelungs- bzw. Entriegelungszustand der Türverriegelung 200 darzustellen, um eine zeitverzögerte Entriegelung optisch darzustellen und/oder um einen optischen Alarm auszugeben, wenn ein Brandmeldesignal empfangen oder der Nottaster 10 betätigt wurde oder wenn eine Wiederverriegelung fehlschlägt.

Die Steuerungsvorrichtung 100 kann im entriegelten Zustand der Türverriegelung 200 die Öffnung der Tür mit Hilfe der Türzustandsüberwachungsvorrichtungen 204, 206 überwachen. Die Steuerungsvorrichtung 100 kann, sofern gewünscht, einen akustischen Alarm ausgeben lassen, wenn die Tür 2 während des entriegelten Zustands der Türverrieglung 200 geöffnet wurde, zumindest wenn kein positives Authentifizierungssignal vorliegt. So kann überwacht werden, wenn jemand die Tür öffnet, auch wenn die Tür entriegelt ist.

Der Nottaster 10 kann zumindest einen zusätzlichen Ausgang umfassen. Die Steuerungsvorrichtung 100 kann über den Ausgang weitere Komponenten, die mit dem erfindungsgemäßen Sicherheitssystem 1 verbindbar sind, ansteuern, z. B. eine Raumleuchte.

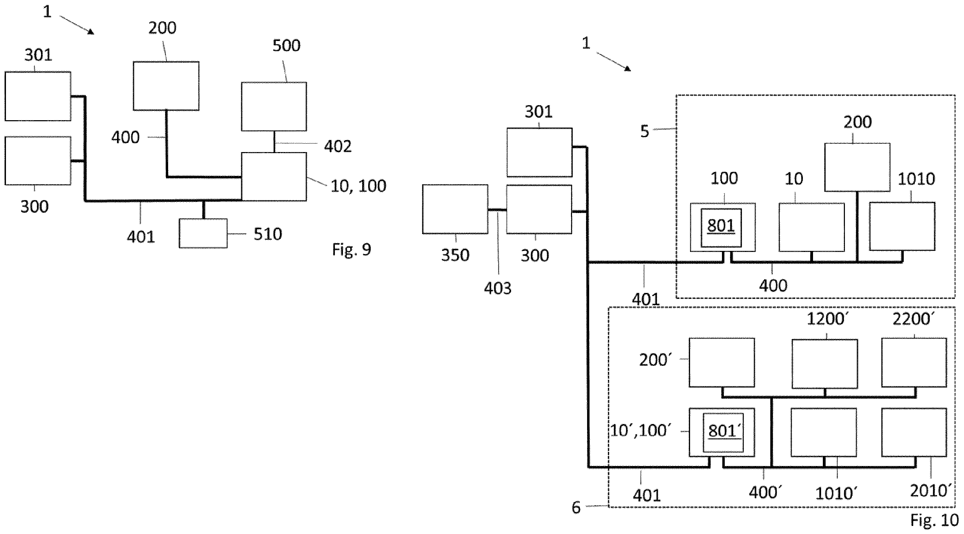

In der Steuerungsvorrichtung 100 sind die Parameter zur Ausführung der genannten Funktionen der Steuerungsvorrichtung 100 hinterlegt. So sind z. B. die vorgegebene Zeit(en), die vorbestimmten Zeitspanne(n), Parameter für die akustischen Alarme, z. B. in welcher Lautstärke mit welcher Frequenz ein akustischer Alarm ausgegeben werden soll, und Parameter für die verschiedenen Ansteuerungen der Leuchtmittel 41 zur optischen Darstellung der verschiedenen, oben genannten Zustände des Sicherheitssystems 1 in der Steuerungsvorrichtung 100 gespeichert. Die Parameter für die Leuchtmittel können Blinkfrequenzen, zu emittierende Farben, Farbintensitäten und/oder Leuchtmuster umfassen. Zur Parametrierung kann die Steuerungsvorrichtung 100 über ein Funkmodul 64 mit einem mobilen Kommunikationsgerät kommunizieren. Alternativ kann die Parametrierung mit Hilfe einer Wachvorrichtung 301 über ein zweites Bussystem 401 erfolgen (s. Figuren 9 und 10). Für die Parametrierung ist ein Parametrierungsprogramm vorsehen, das auf einem Kommunikationsgerät, z. B. einem Personal Computer, einem Mobiltelefon und/oder einem Tablet, ausführbar ist. Der Bediener kann die Paramter mit Hilfe des Parametrierungsprogramms einstellen.

In Figur 2 ist der Aufbau der Türverriegelung 200 und des Nottasters 10 näher dargestellt.

Der Nottaster 10 weist eine erste Nottasterverarbeitungseinheit 20, eine zweite Nottasterverarbeitungseinheit 21 und eine dritter Nottasterverarbeitungseinheit 22 auf. Die erste, die zweite und die dritte Nottasterverarbeitungseinheit 20, 21, 22 sind jeweils als Mikroprozessoren oder Mikrocontroller ausgebildet. Die erste und die zweite Nottasterverarbeitungseinheiten 20, 21 umfassen einen nicht flüchtigen Speicher. Die dritte Nottasterverarbeitungseinheit 22 umfasst einen nicht flüchtigen Speicher und/oder hat Zugriff auf einen nicht flüchtigen Speicher. Die erste, zweite und dritte Nottasterverarbeitungseinheit 20, 21, 22 werden zusammen als Elektronikeinheit 24 des Nottasters 10 bezeichnet.

Die Elektronikeinheit 24 dient zugleich als Steuerungsvorrichtung 100. Hierbei dient die erste Nottasterverarbeitungseinheit 20 als erste Verarbeitungseinheit 103 der Steuerungsvorrichtung 100. Die zweite Nottasterverarbeitungseinheit 21 dient als zweite Verarbeitungseinheit 104 der Steuerungsvorrichtung 100. Die dritte Nottasterverarbeitungseinheit 22 dient als dritte Verarbeitungseinheit 105 der Steuerungsvorrichtung 100.

Die erste und die zweite Nottasterverarbeitungseinheit 20, 21 dienen zur Ausführung der sicherheitsrelevanten Funktionen des Nottasters. Die dritte Nottasterverarbeitungseinheit 22 bzw. Verarbeitungseinheit 105 dient zur Ausführung der nicht sicherheitsrelevanten Funktionen. Zu den sicherheitsrelevanten Funktionen zählt die Veranlassung der Entriegelung im Gefahrenfalle. Zu den nicht sicherheitsrelevanten Funktionen zählen die übrigen, zuvor aufgeführten Funktionen.

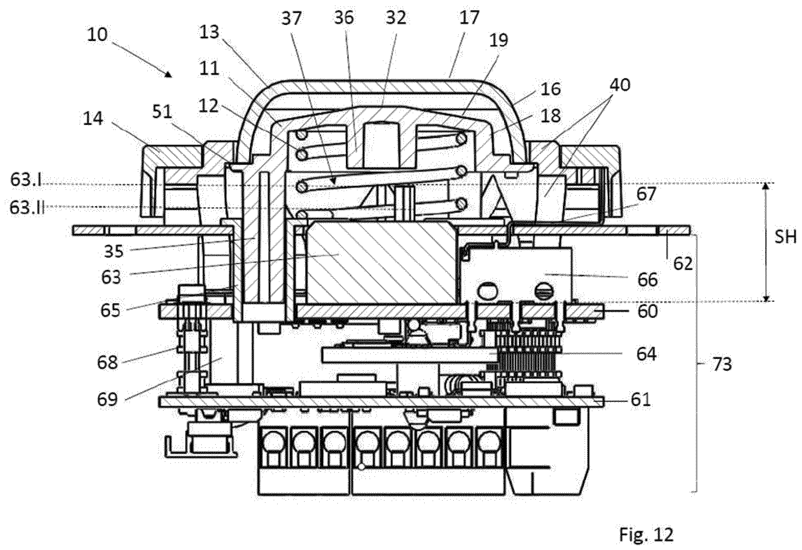

Bei Betätigen des Nottasters 10 wird ein Betätigungselement 11 von einer Ausgangsposition 11.1 in eine Betätigungsposition 11.II bewegt, wodurch ein Schalter 63 betätigt wird (s. auch Figuren 12, 13). Hierdurch werden ein erstes und ein zweites Betätigungssignal erzeugt.

Dadurch werden ein erster und ein zweiter Stromkreis (nicht dargestellt) geöffnet. Ein Signal über das Öffnen des ersten Stromkreises wird von der ersten Nottasterverarbeitungseinheit 20 erfasst. Ein Signal über das Öffnen des zweiten Stromkreises wird von der zweiten Nottasterverarbeitungseinheit 21 erfasst. Als Betätigungssignal wird das Signal verstanden, das durch den Benutzer durch die Betätigung des Betätigungselements erzeugt ist, um die Türverriegelung zu entriegeln und den Fluchtweg freigegeben zu bekommen. Der Ausdruck "in Folge einer Betätigung des Nottasters 10" wird insbesondere im Sinne von "nach Erzeugung des Betätigungssignals" verwendet, d. h. unabhängig davon, ob das Betätigungselement 11 sich noch in der Betätigungsposition 11.II befindet oder bereits in die Ausgangsposition 11.1 zurückgekehrt ist.

Die erste Nottasterverarbeitungseinheit 20 und die zweite Nottasterverarbeitungseinheit 21 veranlassen jeweils unabhängig voneinander nach Erfassen des Betätigungssignals über das erste Bussystem 400 eine Entriegelung der Türverriegelung 200. Die zweite Nottasterverarbeitungseinheit 21 handelt somit redundant zu der ersten Nottasterverarbeitungseinheit 20.

Die Türverriegelung 200 umfasst eine Türverriegelungssteuerung 201. Die Türverriegelungssteuerung 201 umfasst ein erstes Verarbeitungsmittel 202 und ein zweites Verarbeitungsmittel 203. Das erste und das zweite Verarbeitungsmittel 202, 203 werden zusammen als Elektronikvorrichtung 207 bezeichnet. Das erste und das zweite Verarbeitungsmittel 202, 203 sind jeweils als Mikroprozessor oder Mikrocontroller ausgebildet. Das erste und die zweite Verarbeitungsmittel 202, 203 können jeweils einen Verriegelungsmechanismus 205 der Türverriegelung 200 zur Entriegelung ansteuern. Im Gefahrenfalle, d. h. in Folge der Betätigung des Nottasters 10 oder nach Empfang eines Brandmeldesignals, steuern sowohl das erste Verarbeitungsmittel 202 als auch das zweite Verarbeitungsmittel 203 den Verriegelungsmechanismus 205 zur Entriegelung an. Das zweite Verarbeitungsmittel 203 ist somit redundant zu dem ersten Verarbeitungsmittel 202. Durch diesen Aufbau wird eine Ein-Fehler-Sicherheit erreicht.

Der Verriegelungsmechanismus 205 ist elektromechanisch ausgebildet. Der Verriegelungsmechanismus 205 umfasst z. B. ein elektromechanisch betätigbares Fallenelement (nicht dargestellt), das eine Türfalle der Tür 2 im verriegelten Zustand der Türverriegelung 200 sperrt und im entriegelten Zustand der Türverriegelung 200 freigibt. Bei einer Ansteuerung des Verriegelungsmechanismus 205 zur Verriegelung schalten das erste und das zweite Verarbeitungsmittel 202, 203 einen elektrischen Strom für den Verriegelungsmechanismus 205 an. Bei einer Ansteuerung des Verriegelungsmechanismus 205 zur Entriegelung schalten das erste und das zweite Verarbeitungsmittel 202, 203 einen elektrischen Strom für den Verriegelungsmechanismus 205 ab. Jeweils einem Verarbeitungsmittel 202, 203 ist hierfür ein eigener Schalter zugeordnet. Das Öffnen nur eines der Schalter führt zum Abschalten des Stroms für den Verriegelungsmechanismus 205.

Die Türverriegelungssteuerung 201 erhält über eine nicht dargestellte Verriegelungsmechanismuszustandsüberwachungsvorrichtung Rückmeldung über den Zustand des Verriegelungsmechanismus 205. Insbesondere wird eine Position eines Ankers einer Spule des Verriegelungsmechanismus 205 überwacht. Entspricht der Zustand der Türverriegelung 205 nicht dem Soll-Zustand, so wird ein Alarm ausgegeben. Zusätzlich oder alternativ kann diesem Fall ein erneuter Versuch unternommen werden, den Soll-Zustand zu erreichen.

In Folge einer Betätigung des Nottasters 10 kommunizieren die erste und die zweite Nottasterverarbeitungseinheit 20, 21 mit dem ersten und dem zweiten Verarbeitungsmittel 202, 203 über das erste Bussystem 400 mit Hilfe einer Nachricht. Die Nachricht kann die Mitteilung über das Betätigtwerden oder einen Steuerbefehl zur Entriegelung enthalten. Hierbei informiert die erste Nottasterverarbeitungseinheit 20 das erste Verarbeitungsmittel 202 und die zweite Nottasterverarbeitungseinheit 21 das zweite Verarbeitungsmittel 203. Durch die Nachricht veranlassen die erste und die zweite Nottasterverarbeitungseinheit 20, 21, dass sowohl das erste als auch das zweite Verarbeitungsmittel 202, 203, den Verriegelungsmechanismus 205 zur Entriegelung ansteuern, also den elektrischen Strom abschalten.

Das Vorliegen eines Brandmeldesignals wird durch die erste und die zweite Nottasterverarbeitungseinheit 20, 21 erfasst. Hieraufhin veranlassen die erste und die zweite Nottasterverarbeitungseinheit 20, 21 durch eine Nachricht an das ersten und das zweiten Verarbeitungsmittel 202, 203, dass der Verriegelungsmechanismus 205 zur Entriegelung von der Türverriegelungssteuerung 201 angesteuert wird. Hierbei informiert die erste Nottasterverarbeitungseinheit 20 das erste Verarbeitungsmittel 202 und die zweite Nottasterverarbeitungseinheit 21 das zweite Verarbeitungsmittel 203. Durch die Nachricht veranlassen die erste und die zweite Nottasterverarbeitungseinheit 20, 21, dass sowohl das erste als auch das zweite Verarbeitungsmittel 202, 203, den Verriegelungsmechanismus 205 zur Entriegelung ansteuern, also den elektrischen Strom abschalten.

Die Betätigung des Nottasters 10 oder das Vorliegen eines Brandmeldesignals kann in einer Nachricht von einem der beiden Nottasterverarbeitungseinheiten 20, 21 versendet werden, wobei die erste Nottasterverarbeitungseinheit 20 einen ersten Teil der Nachricht und die zweite Nottasterverarbeitungseinheit 21 einen zweiten Teil der Nachricht schreiben. Das erste und das zweite Verarbeitungsmittel 202, 203 sind zumindest für jeweils einen Teil der Nachricht zuständig. Die Nottasterverarbeitungseinheiten 20, 21, 22 und das erste und das zweite Verarbeitungsmittel 202, 203 können jeweils Nachrichten über das erste Bussystem 400 empfangen. Hierbei können die Elektronikeinheit 24 und die Türverriegelungssteuerung 201 jeweils eine Busadresse zugeordnet sein.

Die erste und die zweite Nottasterverarbeitungseinheiten 20, 21 überwachen sich gegenseitig. Wird ein Fehler detektiert, so veranlasst die Elektronikeinheit 24, insbesondere die intakte Nottasterverarbeitungseinheit 20, 21, dass das erste und das zweite Verarbeitungsmittel 202, 203 den Türverriegelungsmechanismus 205 zur Entriegelung ansteuern. Das erste und das zweite Verarbeitungsmittel 202, 203 überwachen sich gegenseitig. Wird ein Fehler detektiert, so wird zumindest von dem intakten Verarbeitungsmittel 202, 203 der Verriegelungsmechanismus 205 zur Entriegelung angesteuert. Ebenfalls wird bei einer Störung des Bussystems 400 der Verriegelungsmechanismus 205 zur Entriegelung von der Türverriegelungssteuerung 201 angesteuert. Hierzu und zur Überprüfung der ersten und der zweiten Nottasterverarbeitungseinheit 20, 21 wird ein Lebenszeichensignal der ersten und der zweiten Nottasterverarbeitungseinheit 20, 21 regelmäßig an die Türverriegelungssteuerung 201 gesendet. Bleibt das Lebenszeichensignal aus, so wird von dem ersten und dem zweiten Verarbeitungsmittel 202, 203 der Verriegelungsmechanismus 205 zur Entriegelung angesteuert. Das erste und das zweite Verarbeitungsmittel 202, 203 kommunizieren miteinander, wenn die Türverriegelungssteuerung 201 eine Nachricht über die Betätigung des Nottasters 10 und/oder das Vorliegen eines Brandmeldesignals erhalten hat. Stellt nur das erste Verarbeitungsmittel 202 oder das zweite Verarbeitungsmittel 203 fest, dass der Nottaster 10 betätigt wurde oder ein Brandmeldesignal vorliegt, so steuert das feststellende Verarbeitungsmittel 202, 203 den Türverriegelungsmechanismus 205 zur Entriegelung an und initiiert, dass das andere Verarbeitungsmittel 202, 203 ebenfalls den Türverriegelungsmechanismus 205 zur Entriegelung ansteuert. Ein Fehler und eine Störung umfassen hierbei stets auch einen Ausfall der jeweiligen Komponente. Bei einem Stromausfall geht der Verriegelungsmechanismus 205 selbstständig in den entriegelten Zustand über. Bei dem in diesem Abschnitt beschriebenen Vorgängen gibt zudem das Sicherheitssystem 1, insbesondere mittels der Steuerungsvorrichtung 100, einen akustisches und/oder optischen Alarm aus.

Ist das Betätigungssignal erzeugt worden, so wird elektronisch verhindert, dass ohne das Vorliegen einer Aufhebungsbedingung die Türverriegelung 200 in den verriegelten Zustand überführt wird. Hierdurch wird verhindert, dass die Tür verriegelt wird, während ein Gefahrenzustand anhält. Hierzu ist in der Elektronikvorrichtung 207 eine elektronische Feststellung integriert. Die elektronische Feststellung wird infolge der Betätigung des Betätigungselements 11, das zur Freigabe des Fluchtwegs dient, in einen Betätigungszustand überführt. In dem Betätigungszustand ist die Ansteuerung der Türverriegelung 200 zur Verriegelung verhindert.

Die elektronische Feststellung umfasst einen ersten Programmcode. Der erste Programmcode umfasst eine erste Variable oder hat Zugriff auf eine erste Variable. In einem Ausgangszustand der elektronischen Feststellung ist die erste Variable auf einen Ausgangswert gesetzt. Im Betätigungszustand ist die erste Variable auf einen Betätigungswert gesetzt, durch den die Ansteuerung der Türverriegelung 200 zur Verriegelung verhindert ist. Die erste Variable kann binär sein. Wird die Aufhebungsbedingung erreicht, so wird die elektronische Feststellung in einen Ausgangszustand zurück überführt. Hierzu wird der Wert der ersten Variablen auf den Ausgangswert gesetzt. In dem Ausgangszustand der elektronischen Feststellung ist eine Ansteuerung der Türverriegelung 200 zur Verriegelung erlaubt. Der erste Programmcode erfasst den ersten Wert der ersten Variable und erlaubt eine Verriegelung der Türverriegelung 200, wenn der Wert der ersten Variablen dem Ausgangswert entspricht, und verhindert eine Verriegelung der Türverriegelung 200, wenn der Wert der ersten Variablen dem Betätigungswert entspricht.

Die elektronische Feststellung ist sowohl in dem ersten Verarbeitungsmittel 202 als auch redundant in dem zweiten Verarbeitungsmittel 203 hinterlegt. Hierzu ist der erste Programmcode in dem ersten Verarbeitungsmittel 202 hinterlegt. Die erste Variable ist in dem nichtflüchtigen Speicher des ersten Verarbeitungsmittels 202 gespeichert. Ein zweiter Programmcode mit derselben Funktionalität wie der erste Programmcode ist in dem zweiten Verarbeitungsmittel 203 hinterlegt. Die erste Variable ist redundant in dem nicht flüchtigen Speicher des zweiten Verarbeitungsmittels 203 gespeichert.

Die erste Variable ist zusätzlich in der ersten Nottasterverarbeitungseinheit 20 und in der zweiten Nottasterverarbeitungseinheit 21 jeweils in den nichtflüchtigen Speichern gespeichert. In Folge der Betätigung des Nottasters 10 wird die erste Variable in der ersten und in der zweiten Nottasterverarbeitungseinheit 20, 21 von dem Ausgangswert in den Betätigungswert überführt. Der geänderte Wert der ersten Variable wird der Elektronikvorrichtung 207 über das Bussystem 400 übermittelt. Bis zum Vorliegen einer Aufhebungsbedingung sendet der Nottaster 10 wiederholt den Betätigungswert der ersten Variable an die Elektronikvorrichtung 207. Das Senden kann in regelmäßigen Zeitabständen, insbesondere zusammen mit dem Lebenszeichensignal, erfolgen.

Zumindest wenn mindestens eine der Türzustandsüberwachungsvorrichtungen 204, 206 detektiert hat, dass die Tür 2 nach dem Betätigen des Nottasters 10 geöffnet wurde, so ist zum Erreichen der Aufhebungsbedingung eine Aufhebungshandlung am Nottaster 10 notwendig.

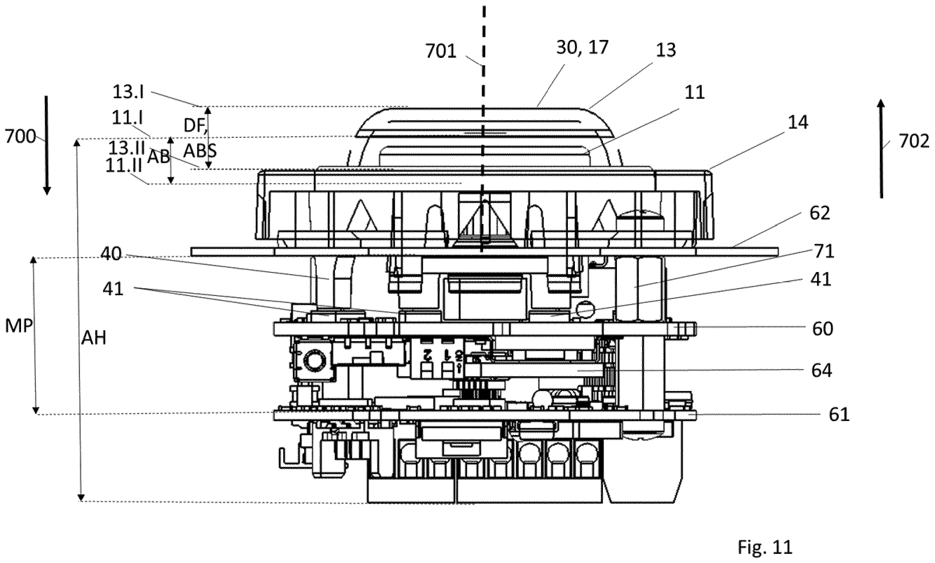

Das Betätigungselement 11 ist nichtrastend ausgeführt. Das Betätigungselement 11 wird bei der Betätigung von der Ausgangsposition 11.1 in die Betätigungsposition 11.II überführt (s. Figur 11). Unmittelbar nach der Betätigung bewegt sich das Betätigungselement 11 wieder in die Ausgangsposition 11.1 durch die Kraft eines als Feder ausgebildeten Rückstellmittels 12 zurück (s. Figur 12, 13). Die Betätigung des Betätigungselements 11 erfolgt translatorisch.

Die Aufhebungshandlung am Nottaster 10 wird durchgeführt, indem das Betätigungselement 11 betätigt wird. Hierdurch wird ein Aufhebungssignal erzeugt, das dem Betätigungssignal entspricht. Damit die Steuerungsvorrichtung 100 erkennen kann, ob eine Betätigung des Nottasters 10 zur Entriegelung der Türverriegelung 200 dient oder eine Aufhebungshandlung vorliegt, muss zum Erreichen der Aufhebungsbedingung zeitgleich ein weiteres Signal erzeugt werden. Hierzu authentifiziert sich ein Bediener. Die Authentifizierung erfolgt durch das Einstecken und Drehen eines Schlüssels im Schlüsseltaster 500. Die Betätigung des Betätigungselements 11 und die Authentifizierung müssen sich zeitlich überlappen. D. h. der Bediener muss den Schlüssel im gedrehten Zustand halten, während das Betätigungselement 11 sich in der Betätigungsposition 11.II befindet. Das Betätigungselement 11 muss in die Ausgangsposition 11.1 zurückkehren, während der Schlüssel sich im gedrehten Zustand befindet. Der Handlungsablauf ist zum Erreichen der Aufhebungsbedingung ausreichend.

Haben die Türzustandsüberwachungsvorrichtungen 204, 206 detektiert, dass die Tür 2 in Folge der Betätigung des Nottasters 10 ständig geschlossen geblieben ist, so kann die Aufhebungsbedingung auf zumindest eine weitere Weise, nämlich durch Verstreichen eines vorbestimmten Zeitintervalls erreicht werden. So kann z. B. nach 60 Sekunden nach der letzten Erzeugung des Betätigungssignals die Aufhebungsbedingung erreicht sein, sofern die Tür 2 geschlossen geblieben ist. Eine Authentifizierung am Schlüsseltaster 500 und eine Aufhebungshandlung am Nottaster 10 sind in diesem Fall nicht notwendig.

Die erste und die zweite Türzustandsüberwachungsvorrichtungen 204, 206 sind vorgesehen, um mit einer Ein-Fehler-Sicherheit zu detektieren, dass die Tür 2 in Folge der Betätigung des Nottasters 10 ständig geschlossen geblieben ist. Hierzu sind die Türzustandsüberwachungsvorrichtungen 204, 206 bevorzugt unterschiedlich ausgebildet. Die erste Türzustandsüberwachungsvorrichtung 204 kann z. B. als Türkontakt ausgebildet sein. Die zweite Türzustandsüberwachungsvorrichtung 206 kann z. B. als Fallenkontakt ausgebildet sein. Alternativ kann z. B. zumindest eine der Türzustandsüberwachungen magnetisch, z. B. als Reedschalter, den Zustand der Tür 2 überwachen. Die Türverriegelungssteuerung 201 erhält ein Signal jeweils von der ersten und der zweiten Türzustandsüberwachungsvorrichtung 204, 206 darüber, ob die Tür 2 geöffnet oder geschlossen ist. Nur wenn während des vorbestimmten Zeitintervalls weder von der ersten Türzustandsüberwachungsvorrichtung 204 noch von der zweiten Türzustandsüberwachungsvorrichtung 206 ein Signal über das Öffnen der Tür gesendet wurde, kann die Aufhebungsbedingung durch Verstreichen des vorbestimmten Zeitintervalls erreicht werden.

Die Türverriegelungssteuerung 201 enthält einen Timer, um das vorbestimmte Zeitintervall zu messen. Die Türverriegelungssteuerung 201 startet den Timer in Folge der Betätigung des Nottasters 10. Erhält die Türverriegelungssteuerung 201 während des vorbestimmten Zeitintervalls ein Signal der ersten oder der zweiten Türzustandsüberwachungsvorrichtung 204, 206, dass die Tür geöffnet wurde, so muss eine Aufhebungshandlung an dem Nottaster 10 erfolgen. In diesem Fall reicht das Verstreichen des vorbestimmten Zeitintervalls nicht aus. Die Länge des vorbestimmten Zeitintervalls ist in der Türverriegelungssteuerung 201 hinterlegt.

Die Türverriegelungssteuerung 201 überprüft, ob ein Erreichen der Aufhebungsbedingung durch Verstreichen des vorbestimmten Zeitintervalls zulässig ist, bevor die Türverriegelungssteuerung 201 den Verriegelungsmechanismus 205 zum Verriegeln ansteuert. So kann ein Bediener bei der Inbetriebnahme des Sicherheitssystem 1, d. h. vor Beginn des Betriebes des Sicherheitssystems 1, hinterlegen, ob ein Verstreichen des vorbestimmten Zeitintervalls ohne Öffnen der Tür 2 als Aufhebungsbedingung zulässig ist und somit zu einer Wiederverriegelung der Tür 2 führt. Die Hinterlegung kann in dem Nottaster 10 erfolgen. Eine Überprüfung der Zulässigkeit, ein Verstreichen des vorbestimmten Zeitintervalls und ein Fehlen eines Signals von der ersten und der zweiten Türzustandsüberwachungsvorrichtung 204, 206 über ein Öffnen der Tür 2 ist zum Erreichen der Aufhebungsbedingung ausreichend.

Die Türverriegelungssteuerung 201 kommuniziert den geöffneten oder geschlossenen Zustand der Tür über den Bus 400 an den Nottaster 10 und/oder an die Steuerungsvorrichtung 100.

Die Elektronikeinheit 24 umfasst einen Timer. In der Elektronikeinheit 24 kann eine erste Verzögerungszeitdauer hinterlegt sein. Soll eine Entriegelung der Türverriegelung 200 zeitverzögert erfolgen, so wartet die Elektronikeinheit 24 nach der Erzeugung des Betätigungssignals die erste Verzögerungszeitdauer ab, bevor die erste und die zweite Nottasterverarbeitungseinheit 20, 21 über das erste Bussystem 400 mit der Türverriegelungssteuerung 201 kommunizieren, um eine Entriegelung zu veranlassen.

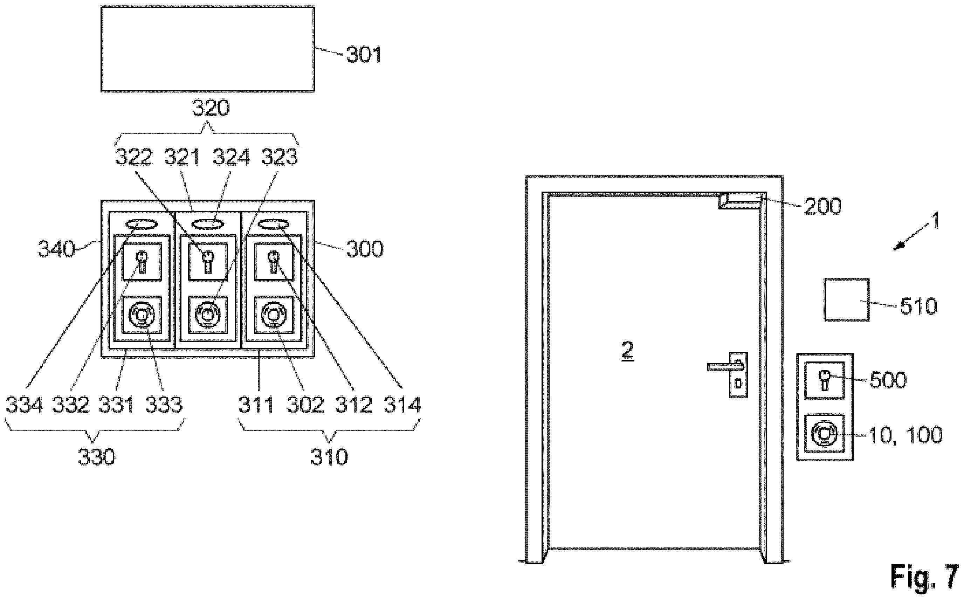

Die dritte Verarbeitungseinheit 105 veranlasst die zu Figur 1 und 2 beschriebenen nicht sicherheitsrelevanten Entriegelungen und Verriegelungen der Türverriegelung 200, z. B. eine Entriegelung nach Empfang des Authentifizierungssignals, zu einer vorgegebenen Zeit oder nach Ablauf einer vorgegebenen Zeitdauer oder eine Verriegelung nach Ablauf einer vorbestimmten Zeitspanne oder unmittelbar nach einem Schließen der Tür 2. Hierzu kommuniziert die dritte Verarbeitungseinheit 105 über das erste Bussystem 400 mit der Türverriegelungssteuerung 201. Die Kommunikation kann z. B. eine Information oder einen Steuerbefehl enthalten, die die Türverriegelungssteuerung 201 veranlasst, den Verriegelungsmechanismus zum Entriegeln oder Verriegeln anzusteuern. Ist die Steuerungsvorrichtung 100 mit dem zweiten Bussystem verbunden (s. Fig. 7), so dient die dritte Verarbeitungseinheit 105 zur Weiterleitung von Nachrichten von und/oder zu einer zentralen Fluchtwegsteuerung 300.

Die dritte Nottasterverarbeitungseinheit 22 steuert den akustischen Alarmgeber 23 und die Leuchtmittel 41 an.

Liegt zumindest einem der Verarbeitungsmittel 202, 203 vor, dass der Verriegelungsmechanismus 205 den entriegelten Zustand eingenommen hat, so sendet das Verarbeitungsmittel 202, 203 ein entsprechendes Signal über den Bus 400 an die Elektronikeinheit 24. Die Elektronikvorrichtung 207 ist mit den Türzustandsüberwachungsvorrichtung 204, 206 verbunden oder verbindbar und empfängt Signale über einen geöffneten oder geschlossenen Zustand der Tür von den Türzustandsüberwachungsvorrichtungen 204, 206.

Die genannten Funktionen, die die Steuerungsvorrichtung 100, die Türverriegelungssteuerung 2021 und/oder der Nottaster 10 ausführen, sind mit Hilfe von Softwaremodulen ausführbar. In der Elektronikvorrichtung 207 und/oder der Elektronikeinheit 24 sind Programmcodes hinterlegt, mit dessen Hilfe die Funktionen ausführbar sind.

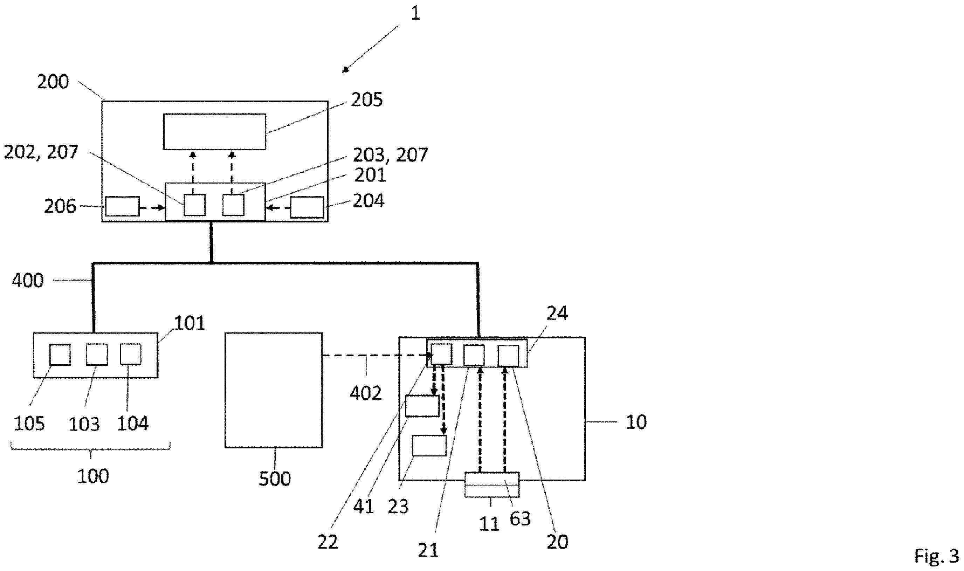

Figur 3 stellt eine Variante des in den Figuren 1 und 2 dargestellten Sicherheitssystems 1 dar. Hierbei ist die Steuerungsvorrichtung 100 separat von dem Nottaster 10 und der Türverriegelung 200 ausgebildet. Die Steuerungsvorrichtung 100 kann z. B. in einem Hutschienengehäuse (nicht dargestellt) angeordnet sein. Die Steuerungsvorrichtung 100 ist nicht in einem Nottaster 10 oder in einer Türverriegelung 200 integriert. Z. B. kann die Steuerungsvorrichtung 100 zur Anordnung in einen Technikraum vorgesehen sein. Das erste Bussystem 400 verbindet die Steuerungsvorrichtung 100, die Türverriegelung 200 und den Nottaster 10 miteinander. Wie in dem ersten Ausführungsbeispiel, ist der Schlüsseltaster 500 mit dem Nottaster 10 über eine Verbindung 402 elektrisch verbunden oder verbindbar.

Soweit nicht anders beschrieben, entspricht der Aufbau und die Funktion dem ersten Ausführungsbeispiel, wobei die Funktionen, die zu den Figuren 1 und 2 mit Hilfe der Steuerungsvorrichtung 100 oder den Verarbeitungseinheiten 103, 104, 105 beschrieben sind, von der Steuerungsvorrichtung 100 der Figur 3 ausgeführt werden und die Funktionen, die zu den Figuren 1 und 2 mit Hilfe des Nottasters 10 oder der

Nottasterverarbeitungseinheiten 20, 21, 22 beschrieben sind, von dem Nottaster 10 ausgeführt werden: Insbesondere erfassen die erste und die zweite Nottasterverarbeitungseinheit 20, 21 das Betätigungssignal, kommunizieren in Folge einer Betätigung des Nottasters 10 mit dem ersten und dem zweiten Verarbeitungsmittel 202, 203 über das erste Bussystem 400 und veranlassen so eine Ansteuerung des Verriegelungsmechanismus 205 durch die Türverriegelungssteuerung 201. Die Maßnahmen zum Erreichen der Ein-Fehlersicherheit bzw. Redundanz werden mit Hilfe der ersten und der zweiten Nottasterverarbeitungseinheiten 20, 21 durchgeführt. Die erste Variable ist in der ersten und der zweiten Nottasterverarbeitungseinheit 20, 21 gespeichert und wird von dort aus an die Türverriegelungsteuerung 201 übermittelt. Der Nottaster 10 umfasst den Timer zur Bestimmung der ersten Verzögerungszeitdauer. Die Steuerungsvorrichtung 100 ist mit dem zweiten Bussystem 401 verbunden oder verbindbar. Die dritte Verarbeitungseinheit 105 veranlasst die zu Figur 1 und 2 beschriebenen nicht sicherheitsrelevanten Entriegelungen und Verriegelungen der Türverriegelung 200, z. B. eine Entriegelung nach Empfang des Authentifizierungssignals, zu einer vorgegebenen Zeit oder nach Ablauf einer vorgegebenen Zeitdauer oder eine automatische Wiederverriegelung nach Ablauf einer vorbestimmten Zeitspanne oder unmittelbar nach einem Schließen der Tür 2.

Die erste, zweite und dritte Verarbeitungseinheit 103, 104, 105 sind jeweils als Mikroprozessor oder Mikrocontroller ausgebildet. Die erste, zweite und dritte Verarbeitungseinheit 103, 104, 105 bilden zusammen eine Verarbeitungselektronik 101. Die erste und die zweite Verarbeitungseinheit 103, 104 weisen einen nicht flüchtigen Speicher auf. Die dritte Verarbeitungseinheit 105 umfasst einen nicht flüchtigen Speicher und/oder hat Zugriff auf einen nicht flüchtigen Speicher.

Ein Brandmeldesignal kann sowohl von der Steuerungsvorrichtung 100 als auch von dem Nottaster 10 empfangbar sein. Das Vorliegen eines Brandmeldesignals wird dabei durch die erste und die zweite Nottasterverarbeitungseinheit 20, 21 für den Nottaster 10 oder von der ersten und der zweiten Verarbeitungseinheit 103, 104 für die Steuerungsvorrichtung 100 erfasst. Entsprechend können sowohl die Steuerungsvorrichtung 100 mit Hilfe der ersten und der zweiten Verarbeitungseinheit 103, 104 als auch der Nottaster 10 mit Hilfe der ersten und der zweiten Nottasterverarbeitungseinheit 20, 21 eine Entriegelung der Türverriegelung 200 veranlassen. Hierzu findet eine Kommunikation über das erste Bussystem 400 mit der Türverriegelungssteuerung 201 statt.

Die Steuerungsvorrichtung 100 wird über das erste Bussystem 400 informiert, wenn der Nottaster 10 eine Entriegelung der Türverriegelung 200 veranlasst, also in Folge einer Betätigung des Nottasters 10 oder nach dem Empfang eines Brandmeldesignals. Ebenfalls wird die Steuerungsvorrichtung 100 über eine zeitverzögerte Entriegelung der Türverriegelung 200 in Folge der Betätigung des Nottasters 10 informiert. Die Steuerungsvorrichtung 100 wird über den Verriegelungs- und Entriegelungszustand der Türverriegelung 200 informiert. Die Steuerungsvorrichtung 100 wird über den geöffneten oder geschlossenen Zustand der Tür 2 informiert.

Die Steuerungsvorrichtung 100 veranlasst eine Ansteuerung des Alarmgebers 23 und der Leuchtmittel 41 für die zu den Figuren 1 und 2 beschriebenen akustischen Alarme und optischen Darstellungen. Hierzu kann die Steuerungsvorrichtung 100 mit der Elektronikeinheit 24, insbesondere mit der dritten Nottasterverarbeitungseinheit 22, über das erste Bussystem 400 kommunizieren. Die dritte Nottasterverarbeitungseinheit 22 steuert daraufhin den Alarmgeber 23 bzw. die Leuchtmittel 41 an. Hierzu sind die Parameter für den Alarmgeber 23 und die Leuchtmittel 41 in der Steuerungsvorrichtung 100 hinterlegt.

In den Ausführungsbeispielen der Figuren 1 bis 3 umfasst die Türverriegelung 200 die Türzustandsüberwachungsvorrichtungen 204, 206. Alternativ hierzu und nicht dargestellt können die Türzustandsüberwachungsvorrichtungen 204, 206 mit dem ersten Bussystem 400 oder unmittelbar mit dem Nottaster 10 und/oder der Steuerungsvorrichtung 100 verbunden sein.

In den Ausführungsbeispielen der Figuren 1 bis 3 kann zumindest ein weiterer nicht dargestellter Nottaster mit dem erste Bussystem 400 verbunden sein, der ohne die Steuerungsvorrichtung 100 ausgebildet ist. Der weitere Nottaster ist wie der Nottaster 10 in Figur 3 ausgebildet und kann bei einer Betätigung die Entriegelung der Türverriegelung 200 veranlassen. Der weitere Nottaster entspricht im Aufbau und in der Funktionalität dem Nottaster 10 der Figur 3.

In den Ausführungsbeispielen der Figuren 1 bis 3 kann zumindest eine weitere nicht dargestellte Türverriegelung mit dem erste Bussystem 400 verbunden sein. Die weitere Türverriegelung ist wie der Türverriegelung 200 in Figur 2 oder 3 ausgebildet und kann bei einer Betätigung des Nottasters 10 ebenfalls entriegelt werden. Die weitere Türverriegelung entspricht im Aufbau und in der Funktionalität der Türverriegelungen 200 der Figuren 1 bis 3.

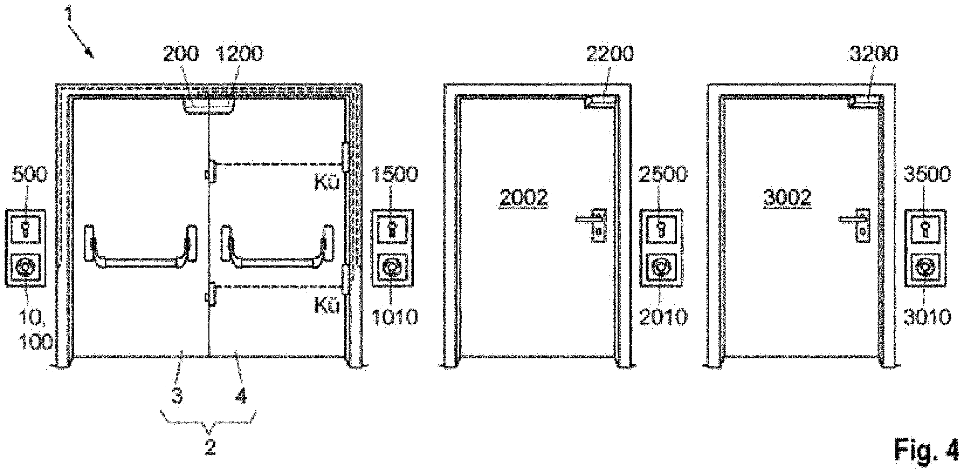

In Figur 4 ist ein drittes Ausführungsbeispiel eines erfindungsgemäßen Sicherheitssystems 1 mit mehreren Nottastern 10, 1010, 2010, 3010 dargestellt. Das Sicherheitssystem 1 umfasst mehrere Türverriegelungen 200, 1200, 2200, 3200. Jedem Nottaster 10, 1010, 2010, 3010 ist ein Schlüsseltaster 500, 1500, 2500, 3500 zugeordnet. Das Sicherheitssystem 1 dient zum Anordnen der Nottaster 10, 1010, 2010, 3010 und Türverriegelungen 200, 1200, 2200, 3200 an verschiedenen Türen 2, 2002, 3002. Die Türen 2, 2002, 3002 sind nicht Teil des erfindungsgemäßen Sicherheitssystems 1. Die mehreren Nottaster 10, 1010, 2010, 3010 sind mit dem ersten Bussystem 400 verbunden und entsprechen so einer Anzahl von Nottastern 10, 1010, 2010, 3010. Die Türverriegelungen 200, 1200, 2200, 3200 sind mit dem ersten Bussystem 400 verbunden und entsprechen so einer Anzahl von Türverriegelungen 200, 1200, 2200, 3200.

In dem Beispiel der Figur 4 sind die Nottaster 10, 1010 den Türverriegelungen 200, 1200 zugeordnet. Der Nottaster 2010 ist der Türverriegelung 2200 zugeordnet. Der Nottaster 3010 ist der Türverrieglung 3200 zugeordnet. So wird in Folge einer Betätigung von einem der Nottaster 10, 1010 die beiden Türverriegelungen 200, 1200 entriegelt, nicht jedoch die Türverriegelungen 2200, 3200. Wird der Nottaster 2010 betätigt, so wird nur die Türverriegelung 2200 entriegelt. Entsprechend wird, wenn der Nottaster 3010 betätigt wird, nur die Türverriegelung 3200 entriegelt. Somit werden in diesem Ausführungsbeispiel die Türverriegelungen 200, 1200, 2200, 3200 selektiv entriegelt.

Beispielsweise können die Nottaster 10, 1010 zur Anordnung an einer zweiflügeligen Tür 2 vorgesehen sein. Jeweils eine Türverriegelung 200, 1200 ist jeweils an einem Türflügel 3, 4 der Tür 2 anzuordnen. Der Nottaster 2010 und die Türverriegelung 2200 sind zu Anordnung an einer weiteren Tür 2002 vorgesehen. Der Nottaster 3020 und die Türverriegelung 3200 sind an einer Tür 3002 anzuordnen, wie in Figur 4 dargestellt.

Das Sicherheitssystem 1 aus Figur 4 kann auch für von Figur 4 abweichende selektive Entriegelungen einstellbar sein. Bei einer zu Figur 4 abweichenden beispielhaften Einstellung wird bei einer Betätigung eines der Nottaster 10,1010, 2010, 3010 jeweils nur eine einzige zugeordnete Türverriegelung 200, 1200, 2200, 3200 entriegelt. Somit ist jeweils einem Nottaster 10, 1010, 2010, 3010 jeweils nur eine Türverriegelung 200, 1200, 2200, 3200 zugeordnet. Insbesondere ist ein derart eingestelltes Sicherheitssystem 1 für vier einflügelige Türen mit je einer Türverriegelung 200, 1200, 2200, 3200 geeignet.

Bei einer anderen beispielhaften, nicht dargestellten Einstellung des Sicherheitssystems 1 werden bei einer Betätigung eines der Nottaster 10,1010 nur die beiden Türverriegelungen 200, 1200 und bei der Betätigung eines der Nottaster 2010, 3010 jeweils nur die beiden anderen Türverriegelung 2200, 3200 entriegelt. Somit sind die Nottaster 10, 1010 den Türverriegelungen 200, 1200 und die Nottaster 2010, 3010 den Türverriegelungen 2200, 3200 zugeordnet. Insbesondere ist das derart eingestellte Sicherheitssystem 1 für zwei zweiflügelige Türen mit je einer Türverriegelung 200, 1200, 2200, 3200 pro Türflügel geeignet.

Ebenfalls kann das Sicherheitssystem 1 so eingestellt werden, dass bei der Betätigung eines Nottaster 10, 1010, 2010, 3010 alle Türverriegelungen 200, 1200, 2200, 3200 entriegelt werden.

Abweichend von dem Sicherheitssystem 1, das in Figur 4 dargestellt ist, kann ein erfindungsgemäßes Sicherheitssystem 1 eine Anzahl von Nottastern 10, 1010, 2010, 3010 umfassen, die sich nicht mit der Anzahl von Türverriegelungen 200, 1200, 2200, 3200 deckt. Z. B. kann in Figur 4 die Tür 2 einflügelig ausgebildet sein und einer der Nottaster 10, 1010 oder eine der Türverriegelungen 200, 1200 fehlen.

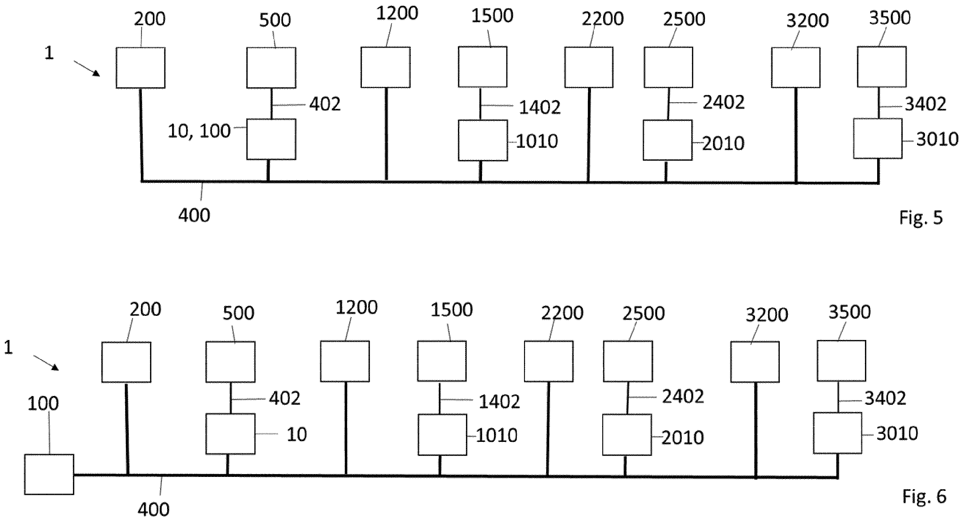

In Figur 5 ist dargestellt, dass die Nottaster 10, 1010, 2010, 3010 und die Türverriegelungen 200, 1200, 2200, 3200 über das erstes Bussystem 400 miteinander verbunden sind. Jeweils ein Nottaster 10, 1010, 2010, 3010 ist mit einem dem jeweiligen Nottaster 10, 1010, 2010, 3010 zugeordneten Schlüsseltaster 500, 1500, 2500, 3500 über eine Verbindung 402, 1402, 2402 bzw. 3402 elektrisch verbunden oder verbindbar. Alternativ sind die Schlüsseltaster 500, 1500, 2500, 3500 mit dem ersten Bussystem 400 verbunden (nicht dargestellt). In dem Ausführungsbeispiel der Figuren 4 und 5 ist die Steuerungsvorrichtung 100 in einem der Nottaster 10, 1010, 2010, 3010, z. B. dem Nottaster 10, integriert. Das erste Bussystem 400 ist nur mit einer einzigen Steuerungsvorrichtung 100 verbunden. Sofern im Folgenden nicht abweichend beschrieben, entsprechen der Aufbau und die Funktionen der Türverriegelungen 200, 1200, 2200, 3200 dem Aufbau und den Funktionen der Türverriegelung 200 der Figuren 2 und 3, der Aufbau und die Funktionen des Nottasters 10 dem Aufbau und den Funktionen des Nottasters 10 der Figur 2 und der Aufbau und die Funktionen der Nottaster 1010, 2010, 3010 dem Aufbau und den Funktionen des Nottasters 10 der Figur 3. Die Bezugszeichen aus den Figuren 2 und 3 werden verwendet. Hierbei versteht sich, dass jeweils die Türverriegelungen 200, 1200, 2200, 3200 einen eigenen Türverriegelungsmechanismus, eigene Verarbeitungsmittel etc. umfassen und die Nottaster 10, 1010, 2010, 3010 jeweils eigene Nottasterverarbeitungseinheiten, Alarmgeber, Leuchtmittel, Schalter und Betätigungselemente umfassen.

Damit die Zuordnung der Nottaster 10, 1010, 2010, 3010 zu den Türverriegelungen 200, 1200, 2200, 3200 erfolgen kann, wird bei der Inbetriebnahme des Sicherheitssystems 1, also vor dem Start des Betriebes des Sicherheitssystems 1, eine Zuordnung der Nottaster 10, 1010, 2010, 3010 zu den Türverriegelungen 200, 1200, 2200, 3200 vorgenommen. Hierzu wird jeweils eine der Türverriegelungen 200, 1200, 2200, 3200 in einen Zuordnungsmodus überführt. Danach wird an den Nottastern 10, 1010, 2010, 3010 eine bewusste Handlung vorgenommen. Die bewusste Handlung kann als eine Betätigung des Betätigungselements 11 des jeweiligen Nottasters 10, 1010, 2010, 3010 ausgeführt sein. Nachdem alle Nottaster 10, 1010, 2010, 3010, die derjenigen Türverriegelung 200, 1200, 2200, 3200, die sich in dem Zuordnungsmodus befindet, zuzuordnen sind, betätigt worden sind, wird der Zuordnungsmodus der Türverriegelung 200, 1200, 2200, 3200 beendet. Im Ausführungsbeispiel der Figur 4 wird z. B. zunächst die Türverriegelung 200 in den Zuordnungsmodus überführt und danach die Nottaster 10, 1010 betätigt, wodurch die Zuordnung der Nottaster 10, 1010 zu der Türverriegelung 200 erfolgt. Dann wird der Zuordnungsmodus der Türverriegelung 200 beendet. Anschließend wird z. B. die Türverriegelung 1200 in den Zuordnungsmodus überführt und danach die Nottaster 10, 1010 betätigt, wodurch die Zuordnung der Nottaster 10, 1010 zu der Türverriegelung 1200 erfolgt. Dann wird der Zuordnungsmodus der Türverriegelung 1200 beendet. Nun wird die Türverriegelung 2200 in den Zuordnungsmodus überführt und danach der Nottaster 2010 betätigt, wodurch die Zuordnung des Nottasters 2010 zu der Türverriegelung 2200 erfolgt. Der Zuordnungsmodus der Türverriegelung 2200 wird beendet. Entsprechend kann danach mit der Türverriegelung 3200 und dem Nottaster 3010 verfahren werden.

Durch die Zuordnung wird in den jeweiligen Türverriegelungen 200, 1200, 2200, 3200, insbesondere in den jeweiligen Türverriegelungssteuerungen 201, hinterlegt, welcher Nottaster 10, 1010, 2010, 3010 der jeweiligen Türverriegelung 200, 1200, 2200, 3200 zuzuordnen ist. Durch die Zuordnung wird in der Steuerungsvorrichtung 100 für alle Nottaster 10, 1010, 2010, 3010 und alle Türverriegelungen 200, 1200, 2200, 3200 des ersten Bussystems 400 die Zuordnung der Nottaster 10, 1010, 2010, 3010 zu den Türverriegelungen 200, 1200, 2200, 3200 hinterlegt. Für die Zuordnung wird jeweils eine Busadresse, insbesondere eine unveränderbare Busadresse, der jeweiligen Nottaster 10, 1010, 2010, 3010 hinterlegt.

Die Hinterlegung der Zuordnung in den jeweiligen Türverriegelungen 200, 1200, 2200, 3200 erfolgt jeweils in dem ersten digitalen Verarbeitungsmittel 202 und redundant in dem zweiten digitalen Verarbeitungsmittel 203, insbesondere in den nicht flüchtigen Speichern der Verarbeitungsmittel 202, 203.

Wird z. B. der Nottaster 10 betätigt, so kommuniziert der Nottaster 10 mit allen Türverriegelungen 200, 1200, 2200, 3200 des ersten Bussystems 400. Die Türverriegelungen 200, 1200, 2200, 3200 prüfen jeweils anhand der Hinterlegung, ob die jeweilige Türverriegelung 200, 1200, 2200, 3200 dem betätigten Nottaster 10 zugeordnet worden ist. Nur im Falle der Zuordnung steuern daraufhin die zugeordneten Türverriegelungen 200, 1200 den jeweiligen Türverriegelungsmechanismus 205 an.

Bei einem Brandmeldesignal werden die Türverriegelungen 200, 1200, 2200, 3200, die dem das Brandmeldesignal empfangenden Nottaster 10, 1010, 2010, 3010 zugeordnet sind, entriegelt.

Soll eine Türverriegelung 200, 1200, 2200, 3200 zeitverzögert in Folge der Betätigung eines zugeordneten Nottasters 10, 1010, 2010, 3010 entriegelt werden, so ist in demjenigen Nottaster 10, 1010, 2010, 3010 eine erste Verzögerungszeitdauer hinterlegt. Die Hinterlegung findet bei der Inbetriebnahme des Sicherheitssystems 1 durch das Parametrierungsprogramm statt. Es kann für jeden Nottaster 10, 1010, 2010, 3010 eine unterschiedliche erste Verzögerungszeitdauer durch den Bediener hinterlegbar sein. Beispielsweise ist in dem Nottaster 10 eine erste Verzögerungszeitdauer hinterlegt, die sich von der ersten Verzögerungszeitdauer, die im Nottaster 2010 hinterlegt ist, unterscheidet. Die Nottaster 1010, 3010 sollen ohne Zeitverzögerung eine Entriegelung der zugeordneten Türverriegelungen 2200 bzw. 3200 veranlassen, so dass in den Nottastern 1010, 3010 keine erste Verzögerungszeitdauer oder eine erste Verzögerungszeitdauer von 0 s hinterlegt ist. Alternativ hierzu kann das Sicherheitssystem 1 derart ausgebildet sein, dass in den Nottastern 10, 1010, 2010, 3010, die derselben Türverriegelung 200, 1200, 2200, 3200 zugeordnet sind, stets dieselbe erste Verzögerungszeitdauer hinterlegt ist. Hierzu ermöglicht das Parametrierungsprogramm dem Bediener nur eine gemeinsame Einstellung.

Die Steuerungsvorrichtung 100 übernimmt die nicht sicherheitsrelevanten Funktionen zur Entriegelung und Verriegelung aller Türverriegelungen 200, 1200, 2200, 3200, wie zuvor zu Figur 1 und 2 beschrieben. Hierzu kann die Steuerungsvorrichtung 100 mit den Türverriegelungen 200, 1200, 2200, 3200 selektiv kommunizieren. So ist in der Steuerungsvorrichtung 100 hinterlegt, welchem Zutrittskontrollsystem welche Türverriegelung 200, 1200, 2200, 3200 zugeordnet ist, so dass bei einem positiven Authentifizierungssignal eines Zutrittskontrollsystems nur die zugeordnete(n) Türverriegelung(en) 200, 1200, 2200, 3200 entriegelt werden. Ebenfalls ist in der Steuerungsvorrichtung 100 hinterlegt, ob und wann ja, welche Türverriegelung 200, 1200, 2200, 3200 zu welcher vorgegebenen Zeit entriegelt werden soll. Ebenfalls kann in der Steuerungsvorrichtung 100 hinterlegt sein, nach welcher vorgegebenen Zeitspanne oder welchen vorgegebenen Zeitspannen welche Türverriegelung 200, 1200, 2200, 3200 wieder verriegelt werden soll. Ebenfalls ist in der Steuerungsvorrichtung 100 hinterlegt, ob und, wenn ja, welche Türverriegelungen 200, 1200, 2200, 3200 unmittelbar nach einem Schließen der Tür 2, 2002, 3002 wieder zu verriegeln sind. In der Steuerungsvorrichtung 100 kann hinterlegt sein, ob, und wenn ja, für welche Türverriegelung 200, 1200, 2200, 3200 ein akustischer Alarm veranlasst werden soll, wenn die entriegelte Tür 2, 2002, 3002 geöffnet wird, ohne dass ein positives Authentifizierungssignal vorliegt. In der Steuerungsvorrichtung 100 kann hinterlegt sein, ob ein akustischer Alarm veranlasst werden soll, wenn die Tür 2, 2002, 2003 nicht wieder geschlossen wird. Die Hinterlegungen können für jede Türverriegelung 200, 1200, 2200, 3200 oder für die Gruppen von Türverriegelungen 200, 1200, 2200, 3200, die an einer Tür 2, 2002, 3002 anzuordnen sind, unterschiedlich erfolgen. Die Hinterlegung erfolgt mit Hilfe des Parametrierungsprogramms durch den Bediener bei der Inbetriebnahme.

Die Steuerungsvorrichtung 100 veranlasst, dass ein akustischer und optischer Alarm in Folge der Betätigung eines Nottasters 10, 1010, 2010, 3010 auch in dem zumindest einen weiteren Nottaster 10, 1010, 2010, 3010 ausgegeben wird, der derselben Türverriegelung 200, 1200, 2200, 3200 wie der betätigte Nottaster 10, 1010, 2010, 3010 zugeordnet ist. Wird in dem Ausführungsbeispiel der Figuren 4 und 5 z. B. der Nottaster 10 betätigt, so veranlasst die Steuerungsvorrichtung 100 durch Kommunikation mit der Elektronikeinheit 24 des Nottasters 1010, dass auch der akustische Alarmgeber 23 und die Leuchtmittel 41 des Nottasters 1010 einen akustischen bzw. optischen Alarm ausgeben.

Wird nach einer Betätigung eines Nottasters 10, 1010, 2010, 3010 zeitverzögert eine Entriegelung veranlasst, so veranlasst die Steuerungsvorrichtung 100, dass die erste Verzögerungszeitdauer, mit der die Entriegelung veranlasst wird, auch in dem zumindest einen weiteren Nottaster 10, 1010, 2010, 3010 dargestellt wird, der derselben Türverriegelung 200, 1200, 2200, 3200 wie der betätigte Nottaster 10, 1010, 2010, 3010 zugeordnet ist. Hierzu kommuniziert die Steuerungsvorrichtung 100 mit der Elektronikeinheit 24 des zumindest einen weiteren Nottasters 1010, 2010, 3010 oder steuert die Leuchtmittel 41 des Nottasters 10 an, in der die Steuerungsvorrichtung 100 integriert ist.

Die Steuerungsvorrichtung 100 kann die nicht sicherheitsrelevante Zuordnung zur selektiven Kommunikation, z. B. die Zuordnung eines Zutrittkontrollsystems zu einer Türverriegelung 200, 1200, 2200, 3200 anhand einer Busadresse vornehmen. Hierbei weisen die Teilnehmer des ersten Bussystem 400 jeweils eine Einstellvorrichtung zur manuellen Einstellung einer Busadresse auf. Die Einstellvorrichtung kann DIP-Schalter umfassen. Zumindest die Teilnehmer des ersten Bussystems 400, die dieselbe Einstellung an der Einstellvorrichtung haben, sind automatisch einander zugeordnet. Um Teilnehmern mit derselben Einstellung unterschiedliche Busadressen zuweisen zu können, weisen Teilnehmer des ersten Bussystems 400 unterschiedliche Kennzahlen auf, aus denen mit Hilfe der vorgenommenen Einstellung unterschiedliche Busadressen konfiguriert werden. Die Busadresse, die mit Hilfe der Einstellung ermittelt wird, ist für die Nottaster 10, 1010, 2010, 3010 und für die Türverriegelungen 200, 1200, 2200, 3200, nur eine weitere Busadresse, die die Nottaster 10, 1010, 2010, 3010 und die Türverriegelungen 200, 1200, 2200, 3200 neben der Busadresse, die bei einer sicherheitsrelevanten Kommunikation verwendet wird, verwenden.

Wurde bereits eine Türverriegelung 200, 1200, 2200, 3200 entriegelt, so kann die Steuerungsvorrichtung 100 eine Entriegelung einer weiteren Türverriegelung 200, 1200, 2200, 3200 bis zum Vorliegen einer Bedingung verhindern, sofern kein Gefahrenfall vorliegt. Ist die Bedingung erfüllt, veranlasst die Steuerungsvorrichtung 100 die Entriegelung der weiteren Türverriegelung 200, 1200, 2200, 3200. Auf diese Weise die Steuerungsvorrichtung 100 mit mehreren Türverriegelungen 200, 1200, 2200, 3200 so kommunizieren, dass eine Schleuse gebildet ist. Beispielsweise kann die Tür 2002 an einem Eingang zu einem Raum und die Tür 3002 an einem Ausgang desselben Raumes angeordnet sein. Die Steuerungsvorrichtung 100 kann bei Vorliegen eines positiven Authentifizierungssignals für die Türverriegelung 2200 eine Entriegelung der Türverriegelung 2200 veranlassen. Selbst wenn ein positives Authentifizierungssignal für die Türverriegelung 3200 der Steuerungsvorrichtung 100 vorliegt, kann die Steuerungsvorrichtung 100 bis zum Vorliegen einer Bedingung die Entriegelung der Türverriegelung 3200 verhindern. Liegt die Bedingung vor, so veranlasst die Steuerungsvorrichtung 100 eine Entriegelung der Türverriegelung 3200. Bei der Bedingung kann es sich z. B. um ein Schleusen-Zeitintervall oder das Erreichen einer Messgröße, wie Raumtemperatur, Luftfeuchtigkeit, Luftreinheit oder Anzahl der Personen im Raum, handeln. Die Steuerungsvorrichtung 100 kann hierzu mit einem Messgerät verbunden oder verbindbar sein. Die Bedingung kann das Schließen der zuerst geöffneten Tür 2002 umfassen, was durch die Türzustandsüberwachungsvorrichtungen 204, 206 messbar ist. Die Bedingung und die an der Schleuse beteiligten Türverriegelungen 2200, 3200 können in der Steuerungsvorrichtung 100 hinterlegt sein. Die Hinterlegung kann durch den Bediener mit Hilfe des Parametrierungsprogramms erfolgen.

In Figur 6 ist eine Variante des in den Figuren 4 und 5 dargestellten Sicherheitssystems 1 dargestellt. Hierbei ist die Steuerungsvorrichtung 100 separat von den Nottastern 10, 1010, 2010, 3010 und den Türverriegelungen 200, 1200, 2200, 3200 ausgebildet. Das erste Bussystem 400 verbindet die Steuerungsvorrichtung 100 mit den Türverriegelungen 200, 1200, 2200, 3200 und den Nottastern 10, 1010, 2010, 3010. Die Steuerungsvorrichtung 100 der Figur 6 entspricht im Aufbau der Steuerungsvorrichtung 100 der Figur 3. Der Nottaster 10 der Figur 6 entspricht im Aufbau dem Nottaster 10 der Figur 3. Im Übrigen entsprechen der Aufbau und die Funktionalitäten, die zuvor zu Figur 5 beschrieben sind, dem Aufbau und den Funktionaliäten des Sicherheitssystems 1 der Figur 6.

Dadurch, dass in den Ausführungsbeispielen der Figuren 4 bis 6 die Türverriegelungen 200, 1200, 2200, 3200, die Nottaster 10, 1010, 2010, 3010 und ggf. die Steuerungsvorrichtung 100 als Teilnehmer eines einzigen ersten Bussystems 400 agieren, sind nur die Kabel des Bussystems 400 notwendig, damit die Teilnehmer untereinander kommunizieren können. Somit weist das Sicherheitssystem 1 nur wenige Kabel auf.

Das Bussystem 400 kann zumindest zwei Kabel zur Kommunikation und zumindest zwei Kabel zur Stromversorgung umfassen. Insbesondere weist das Bussystem 400 genau zwei Kabel zur Kommunikation und zwei Kabel zur Stromversorgung auf. In jedem der Ausführungsbeispiele des erfindungsgemäßen Sicherheitssystems 1 ist ein Netzteil als Anschluss an ein Stromnetz an einer beliebigen Stelle des Bussystems 400 integrierbar. Somit kann das Netzteil als eigenständige Komponente des Sicherheitssystems 1 außerhalb des Nottasters 10 bzw. der Nottaster 10, 1010, 2010, 3010 und der Türverriegelung 200 bzw. der Türverriegelungen 200, 1200, 2200, 3200 vorgesehen sein. Hierdurch ist das Sicherheitssystem 1 im räumlichen Aufbau flexibel.

Sind wie in dem dritten und vierten Ausführungsbeispiel mehrere Nottaster 10, 1010, 2010, 3010 vorhanden und ist einer der Nottaster 10, 1010, 2010, 3010 betätigt worden, so ist elektronisch durch die elektronische Feststellung nur verhindert, dass die dem betätigten Nottaster 10, 1010, 2010, 3010 zugeordneten Türverriegelungen 200, 1200, 2200, 3200 verriegelt werden. Das Erreichen der Aufhebungsbedingung ermöglicht die Verriegelung der dem betätigten Nottaster 10, 1010, 2010, 3010 zugeordnete(n) Türverriegelung(en) 200, 1200, 2200, 3200. Zum Erreichen der Aufhebungsbedingung ist die zeitlich überlappende Betätigung des Betätigungselements 11 desjenigen Nottasters 10, 1010, 2010, 3010, der zuvor betätigt wurde, und der Authentifizierung an dem dem betätigten Nottaster 10, 1010, 2010, 3010 zugeordneten Schlüsseltaster 500, 1500, 2500, 3500 notwendig. Zumindest ist dieser Handlungsablauf für diejenige dem betätigten Nottaster 10, 1010, 2010, 3010 zugeordnete Türverriegelung 200, 1200, 2200, 3200 notwendig, bei der mindestens eine der Türzustandüberwachungsvorrichtungen 204, 206 detektiert hat, dass die Tür 2 oder einer der Türflügel 3, 4 nach dem Betätigen des Nottasters 10 geöffnet wurde.

Haben die Türzustandsüberwachungsvorrichtungen 204, 206 der dem betätigten Nottaster 10, 1010, 2010, 3010 zugeordneten Türverriegelungen 200, 1200, 2200, 3200 detektiert, dass die Tür 2 nach dem Betätigen des Nottasters 10, 1010, 2010, 3010 ständig geschlossen geblieben ist, so kann die Aufhebungsbedingung durch Ablauf des vorbestimmten Zeitintervalls erreicht werden. So kann die Aufhebungsbedingung z. B. nach 60 Sekunden nach der letzten Betätigung des Nottasters 10 erreicht sein. Die Zulässigkeit, ob eine Verriegelung nach Verstreichen des vorbestimmten Zeitintervalls bei geschlossen gebliebener Tür 2, 2002, 3002 erfolgen soll, kann für jede Türverriegelung 200, 1200, 2200, 3200 oder für Gruppen von Türverriegelungen 200, 1200, 2200, 3200, insbesondere für Türverriegelungen, die zur Anordnung an derselben Tür bestimmt sind, individuell einstellbar und hinterlegbar sein. Die Hinterlegung kann z. B. in den Nottastern 10, 1010, 2010, 3010 erfolgen. Ebenso kann für jede Türverriegelung 200, 1200, 2200, 3200 oder für Gruppen von Türverriegelungen 200, 1200, 2200, 3200, insbesondere für Türverriegelungen, die zur Anordnung an derselben Tür bestimmt sind, die Länge des vorbestimmten Zeitintervalls individuell einstellbar hinterlegbar sein. Hierbei kann eine Mindestlänge, z. B. 60 s, für das vorbestimmte Zeitintervall fest vorgegeben sein. Die Hinterlegung erfolgt durch das Parametrierungsprogramm.

In Figur 7 ist ein fünftes Ausführungsbeispiel des erfindungsgemäßen Sicherheitssystems 1 dargestellt. Das fünfte Ausführungsbeispiel umfasst das Sicherheitssystem 1 gemäß dem ersten Ausführungsbeispiel der Figuren 1 und 2. Das heißt, der Nottaster 10, der die Steuerungsvorrichtung 100 umfasst, ist über das Bussystem 400 mit der Türverriegelung 200 verbunden. Der Schlüsseltaster 500 ist über eine Verbindung 402 mit dem Nottaster 10 verbunden oder verbindbar. In dem fünften Ausführungsbeispiel sind gegenüber dem ersten Ausführungsbeispiel weitere Komponenten 300, 301, 510 vorgesehen.

Das Sicherheitssystem 1 umfasst die zentrale Fluchtwegsteuerung 300. Die zentrale Fluchtwegsteuerung 300 ist dazu vorgesehen, entfernt von der Tür 2 angeordnet zu sein. So kann sich die zentrale Fluchtwegsteuerung 300 z. B. zusammen mit einer Wachvorrichtung 301, die als Monitor oder Personal Computer ausgebildet sein kann, und/oder einem Mehrtüranzeigegerät 350 (s. Fig. 10) in einem Wachraum anzuordnen zu sein. Die Wachvorrichtung 301 ist optional Teil des erfindungsgemäßen Sicherheitssystems 1. Alternativ kann die Wachvorrichtung 301 an das erfindungsgemäße Sicherheitssystem 1 anschließbar sein.

Die zentrale Fluchtwegsteuerung 300 ist modular aufgebaut. Ein Notfall-Modul 310 umfasst eine erste Befestigungsplatte 311. Die erste Befestigungsplatte 311 nimmt einen zentralen Notfalltaster 302 und eine beispielhaft als Schlüsseltaster ausgebildete Identifizierungsvorrichtung 312 auf. Mittels der ersten Befestigungsplatte 311 sind der zentrale Notfalltaster 302 und die Identifizierungsvorrichtung 312 mechanisch starr miteinander verbunden. Der zentrale Notfalltaster 302 dient dazu, dass in Folge einer Betätigung des zentralen Notfalltasters 302 die Türverriegelung 200 entriegelt wird. Somit kann durch den zentralen Notfalltaster 302 entfernt von der Tür 2 die Türverriegelung 200 entriegelt werden. Die Entriegelung in Folge der Betätigung des zentralen Notfalltasters 302 erfolgt mit einer Ein-Fehler-Sicherheit. Die Betätigung des zentralen Notfalltasters 302 ist somit für den Gefahrenfall geeignet.

Ein Deaktivierungs-Modul 320 umfasst ein erstes, als Schlüsseltaster ausgebildetes Bedienelement 322 und ein zweites, als Taster ausgebildetes Bedienelement 323. Das erste Bedienelement 322 dient zum Deaktivieren des Nottasters 10. So wird durch eine Betätigung des ersten Bedienelements 322 der Nottaster 10 in einen deaktivierten Zustand überführt. Befindet sich der Nottaster 10 in einem deaktivierten Zustand, so unterbleibt in Folge einer Betätigung des Nottasters 10 eine Entriegelung der Türverriegelung 200. Das zweite Bedienelement 323 dient zur Aktivierung des Nottasters 10. Befindet sich der Nottaster 10 in dem deaktivierten Zustand und wird das zweite Bedienelement 323 betätigt, so wird der Nottaster 10 in einen aktivierten Zustand überführt. In dem aktivierten Zustand des Nottasters 10 veranlasst der Nottaster 10 eine Entriegelung der Türverriegelung 200, wenn der Nottaster 10 betätigt wurde. Das Deaktivierungs-Modul umfasst eine zweite Befestigungsplatte 321. Die zweite Befestigungsplatte 321 dient zur Aufnahme des ersten und des zweiten Bedienelements 322, 323. Die zweite Befestigungsplatte 321 verbindet das erste und das zweite Bedienelement 322, 323 mechanisch starr miteinander.

Ein Verzögerungs-Modul 330 umfasst eine dritte Befestigungsplatte 331. Die dritte Befestigungsplatte 331 nimmt ein Verzögerungselement 332 auf. Das Verzögerungselement 332 ist beispielhaft als Schlüsseltaster ausgebildet. Das Verzögerungselement 332 dient dazu, innerhalb der ersten Verzögerungsdauer die Entriegelung der Türverriegelung 200 weiter zu verzögern. Das Verzögerungs-Modul 330 umfasst ein Beendigungselement 333, das als Taster ausgebildet ist. Das Beendigungselement 333 ist an der dritten Befestigungsplatte 331 befestigt. Das Beendigungselement 333 ist mittels der dritte Befestigungsplatte 331 mechanisch starr mit dem Verzögerungselement 332 verbunden. Durch Betätigung des Beendigungselements 333 kann die Verzögerung der Entriegelung der Türverriegelung 200 beendet werden.

Die zentrale Fluchtwegsteuerung 300 umfasst ein einseitig offenes Fluchtwegsteuerungsgehäuse 340, in dem das Notfall-Modul 310, das Deaktivierungs-Modul 320 und das Verzögerungs-Modul 330 angeordnet sind. Das Deaktivierungs-Modul 320 und das Verzögerungs-Modul 330 sind optionale Bestandteile der zentralen Fluchtwegsicherung 300. In dem Fluchtwegsteuerungsgehäuse 340 kann zudem, falls vorhanden, das Mehrtüranzeigegerät 350 angeordnet sein.

Das Fluchtwegsteuerungsgehäuse 340 kann das Notfall-Modul 310, das Deaktivierungs-Modul 320 und das Verzögerungs-Modul 330 mechanisch befestigen. Das Notfall-Modul 310, das Deaktivierungs-Modul 320 und das Verzögerungs-Modul 330 sind jeweils einzeln an dem Fluchtwegsteuerungsgehäuse 340 befestigt, insbesondere verschraubt. Zur Befestigung an dem Fluchtwegsteuerungsgehäuse 340 dienen die erste Befestigungsplatte 311 für das Notfall-Modul 310, die zweite Befestigungsplatte 321 für das Deaktivierungs-Modul 320 und/oder die dritte Befestigungsplatte 331 für das Verzögerungs-Modul 330. Das Fluchtwegsteuerungsgehäuse 340 und die Module 310, 320, 330 sind so ausgestaltet, dass verschiedene Reihenfolgen, in denen die Module 310, 320, 330 nebeneinander anordbar sind, möglich sind. So kann z. B. in einer nicht dargestellten zentrale Fluchtwegsicherung 300 z. B. das Notfall-Modul 310 zwischen dem Deaktivierungs-Modul 320 und dem Verzögerungs-Modul 330 angeordnet sein. In einer anderen nicht dargestellten, beispielhaften zentralen Fluchtwegsteuerung 300 kann links ein Freiraum, Verzögerungs-Modul 330 in der Mitte und das Notfall-Modul 310 rechts angeordnet sein. Der Freiraum entsteht durch das Fehlen des Deaktivierungs-Moduls 320 und ist durch eine Platte verdeckt. Das Fluchtwegsteuerungsgehäuse 340 kann Schienen zum Einschieben der Module 310, 320, 330 aufweisen. Das Fluchtwegsteuerungsgehäuse 340 kann Befestigungsmöglichkeiten, z. B. Lochleisten oder Langlöcher, zur variablen Befestigung der Modul 310, 320, 330 aufweisen.

Auf der ersten Befestigungsplatte 311, auf der zweiten Befestigungsplatte 321 und auf der dritten Befestigungsplatte 331 ist jeweils ein rein schematisch dargestellter Anzeigenbereich 314, 324 bzw. 334 vorgesehen. Auf dem Anzeigenbereich sind Symbole vorhanden, die die Funktion der Module 310, 320, 330 erläutern. Zudem können optische Leuchten zum Anzeigen von Zuständen des Sicherheitssystem 1 in den Anzeigenbereichen 314, 324, 334 vorgesehen sein.

In dem Ausführungsbeispiel der Figur 7 umfasst das Sicherheitssystem 1 ferner ein Audio- und Videomodul 510. Das Audio- und Videomodul 510 ist zur Anordnung in der Nähe der Tür 2, die durch die Türverriegelung 200 verriegelt werden kann, vorgesehen. Ist das Audio- und Videomodul 510 freigeschaltet, so kann ein Bediener im Wachraum mit dem Benutzer vor der Tür 2 sprechen und den Raum nahe der Tür 2 einsehen.

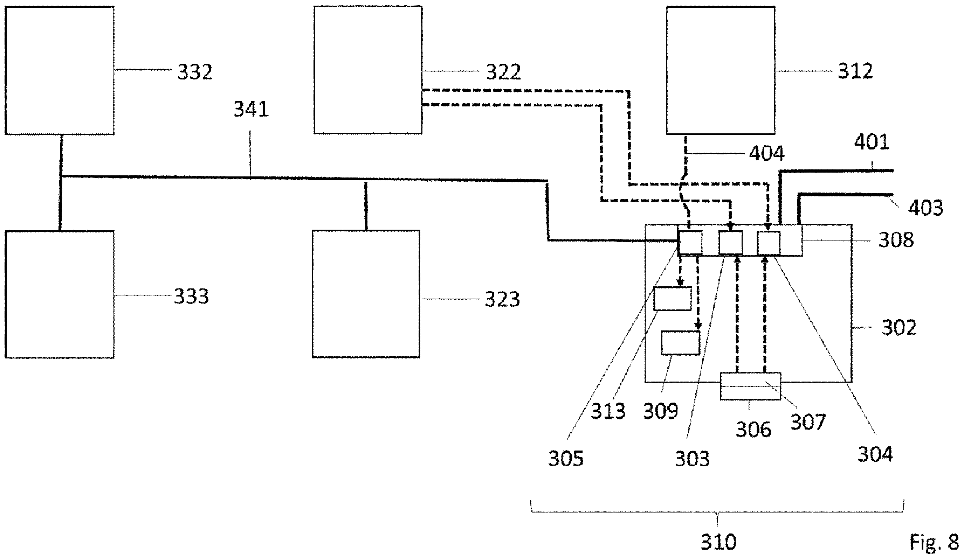

Wie in Figur 8 dargestellt, ist der zentrale Notfalltaster 302 ähnlich dem Nottaster 10 aufgebaut. So umfasst der zentrale Notfalltaster 302 eine Notfalltasterelektronikeinheit 308. Die Notfalltasterelektronikeinheit 308 umfasst eine erste Notfallverarbeitungseinheit 303, eine zweite Notfallverarbeitungseinheit 304 und eine dritte Notfallverarbeitungseinheit 305. Die erste, zweite und dritte Notfallverarbeitungseinheit 303, 304, 305 sind jeweils als Mikroprozessor oder Mikrocontroller ausgebildet. Die erste und die zweite Notfallverarbeitungseinheit 303, 304 weisen einen nicht flüchtigen Speicher auf. Die dritte Notfallverarbeitungseinheit 305 weist einen nicht flüchtigen Speicher auf und/oder hat Zugriff auf einen nicht flüchtigen Speicher. Der zentrale Notfalltaster 302 wird betätigt, indem ein Notfalltasterbetätigungselement 306 betätigt wird. Hierdurch wird ein Notfalltasterschalter 307 betätigt. Hierdurch werden ein erstes und ein zweites Signal erzeugt. Dazu werden ein erster und ein zweiter Stromkreis (nicht dargestellt) geöffnet. Ein Signal über das Öffnen des ersten Stromkreises wird von der ersten Notfallverarbeitungseinheit 303 erfasst. Ein Signal über das Öffnen des zweiten Stromkreises wird von der zweiten Notfallverarbeitungseinheit 304 erfasst.

Der zentrale Notfalltaster 302 ist mit einem zweiten Bussystem 401 verbunden. Wie in Figur 9 dargestellt, ist die Steuerungsvorrichtung 100 ebenfalls mit dem zweiten Bussystem 401 verbunden. Bei dem zweiten Bussystem 401 handelt es sich um eine andere Bussystemart als bei dem ersten Bussystem 400. Z. B. kann das zweite Bussystem 401 als LON- oder LAN-Bus und das erste Bussystem 400 als CAN- oder DCW-Bus ausgebildet sein.

In Figur 9 umfasst der Nottaster 10 die Steuerungsvorrichtung 100. Der Nottaster 10 und die Türverriegelung 200, die in Figur 9 abgebildet sind, entsprechen dem Nottaster 10 und der Türverriegelung 200 der Figur 2.

In einer nicht dargestellten Alternative sind die Steuerungsvorrichtung 100, der Nottaster 10 und die Türverriegelung 200 gemäß der Figur 3 ausgebildet. In dieser nicht dargestellten Alternative sind die Steuerungsvorrichtung 100, der Nottaster 10 und die Türverriegelung 200 über das erste Bussystem 400 miteinander verbunden, wobei die Steuerungsvorrichtung 100 mit dem zweiten Bussystem 401 verbunden ist.

Die Steuerungsvorrichtung 100 empfängt Nachrichten der zentralen Fluchtwegsicherung 300 über das zweite Bussystem 401. Die Steuerungsvorrichtung 100 leitet die Nachrichten über das erste Bussystem an andere Teilnehmer des ersten Bussystems 400 weiter. Die Nachricht kann insbesondere eine Information bezüglich eine Betätigung des zentralen Notfalltasters 302, des Schlüsseltasters 312, des ersten Bedienelements 322, des zweiten Bedienelements 323, des Verzögerungselements 332 und/oder des Beendigungselements 333 oder ein Steuerbefehl in Folge einer Betätigung eines der zuvor genannten Elemente 302, 312, 322, 323, 332, 333 sein. Ist die Steuerungsvorrichtung 100 in dem Nottaster 10 integriert, so entfällt ein Weiterleiten an denjenigen Nottaster 10, in dem die Steuerungsvorrichtung 100 integriert ist. Z. B. leitet gemäß der Figur 9 die Steuerungsvorrichtung 100 die Nachricht an die Türverriegelung 200 weiter. Sind Steuerungsvorrichtung 100 und der Nottaster 10 über das erste Bussystem 400 verbunden, so leitet die Steuerungsvorrichtung 100 die Nachricht an den Nottaster 10 und/oder die Türverriegelung 200 weiter. Die Steuerungsvorrichtung 100 passt die Nachricht dem Format des ersten Bussystems 400 an. Sicherheitsrelevante Nachrichten werden ansonsten unberührt gelassen.

Ist der zentrale Notfalltaster 302 betätigt worden, so veranlassen die erste Notfallverarbeitungseinheit 303 und redundant die zweite Notfallverarbeitungseinheit 304 eine Entriegelung der Türverriegelung 200. Hierbei kommuniziert der zentrale Notfalltaster 302 über die Steuerungsvorrichtung 100 mit der Türverriegelungssteuerung 201, insbesondere dem ersten und dem zweiten Verarbeitungsmittel 202, 203. Das erste und das zweite Verarbeitungsmittel 202, 203 steuern daraufhin den Verriegelungsmechanismus 205 an. Zuvor haben die erste und die zweite Verarbeitungseinheit 103, 104 die Nachricht weitergeleitet. Hierbei hat die Steuerungsvorrichtung 100 den Inhalt der Nachricht unberührt gelassen.

Der zentrale Notfalltaster 302 weist einen Eingang zum Empfang eines Brandmeldesignals auf. Wird das Brandmeldesignal empfangen, so veranlasst der zentrale Notfalltaster 302 eine Entriegelung der Türverriegelung 200. Hierzu kommunizieren die erste und die zweite Notfallverarbeitungseinheit 303, 304 über die Steuerungsvorrichtung 100, nämlich über die erste und die zweite Verarbeitungseinheit 103, 104, mit der Türverriegelungsteuerung 201, wie zuvor beschrieben.

Ein Signal über eine Betätigung des Schlüsseltasters 312 des ersten Moduls 310 wird von der Notfalltasterelektronikeinheit 308, insbesondere der dritte Notfallverarbeitungseinheit 305, empfangen. Die Notfalltasterelektronikeinheit 308 sendet eine Nachricht bezüglich der Betätigung des Schlüsseltasters 312 über das zweite Bussystem 401 an die Steuerungsvorrichtung 100. Die Steuerungsvorrichtung 100 leitet die Nachricht an das erste Bussystem 400 weiter.

Das Notfalltasterbetätigungselement 306 ist nichtrastend ausgeführt. Das Notfalltasterbetätigungselement 306 ist identisch zu dem Betätigungselement 11 des Nottasters 10 ausgebildet (s. Figuren 13 bis 15). So wird das Notfallbetätigungselement 306 bei der Betätigung von einer Ausgangsposition in eine Betätigungsposition überführt (analog Figur 11). Unmittelbar nach der Betätigung bewegt sich das Notfallbetätigungselement 306 wieder in die Ausgangsposition durch die Kraft eines als Feder ausgebildeten Rückstellmittels zurück (analog Figur 11). Die Betätigung des Notfallbetätigungselements 306 erfolgt translatorisch. Wird in Folge der Betätigung des zentralen Notfalltasters 302 die Türverriegelung 200 in den entriegelten Zustand überführt, so verhindert die Elektronikvorrichtung 207 durch die elektronische Feststellung, dass ohne das Vorliegen einer Aufhebungsbedingung die Türverriegelung 200 wieder in den verriegelten Zustand überführt werden kann. Die Aufhebungsbedingung nach Betätigung des zentralen Notfalltasters 302 kann durch eine Betätigung des Schlüsseltasters 312 erreicht werden. Insbesondere ist eine Betätigung des Schlüsseltasters 312 ausreichend, um die Aufhebungsbedingung zu erreichen.

Umfasst das Sicherheitssystem 1 die zentrale Fluchtwegsteuerung 300, so kann in Folge einer Betätigung des Nottasters 10 die Aufhebungsbedingung auf eine weitere Art und Weise erreichbar sein: Haben die Türzustandsüberwachungsvorrichtungen 204, 206 detektiert, dass die Tür 2 nach dem Betätigen des Nottasters 10 ständig geschlossen geblieben ist, so kann die Aufhebungsbedingung durch Verstreichen eines vorbestimmten Zeitintervalls und eine Aufhebehandlung an der zentralen Fluchtwegsteuerung 300 nach dem vorbestimmten Zeitintervall erreicht werden. Die Aufhebehandlung kann einer Authentifizierung an der zentralen Fluchtwegsteuerung 300, insbesondere einer Betätigung des Schlüsseltasters 312, entsprechen. Durch die Aufhebehandlung, z. B. die Betätigung des Schlüsseltasters 312, ist ein Aufhebesignal erzeugbar. Das Aufhebesignal wird über die Steuerungsvorrichtung 100 an die Türverriegelungssteuerung 201 weitergeleitet. Eine Authentifizierung am Schlüsseltaster 500 und eine Aufhebungshandlung am Nottaster 10 sind in diesem Fall nicht notwendig.

Die Türverriegelungssteuerung 201 überprüft, ob ein Erreichen der Aufhebungsbedingung durch Verstreichen des vorbestimmten Zeitintervalls und der Authentifizierung an der zentralen Fluchtwegsteuerung 300 bei geschlossen gebliebener Tür 2 zulässig ist, bevor die Türverriegelungssteuerung 201 den Verriegelungsmechanismus 205 zum Verriegeln ansteuert. So kann ein Bediener bei der Inbetriebnahme des Sicherheitssystems 1 hinterlegen, ob ein Verstreichen des vorbestimmten Zeitintervalls ohne Öffnen der Tür 2 und die zusätzliche Betätigung des Schlüsseltasters 312 als Aufhebungsbedingung zulässig ist und somit zu einer Wiederverriegelung der Tür 2 führt. Eine Überprüfung der Zulässigkeit, ein Verstreichen des vorbestimmten Zeitintervalls, eine Betätigung des Schlüsseltasters 312 nach dem vorbestimmten Zeitintervall und die Tatsache, dass während des vorbestimmten Zeitintervalls weder von der ersten Türzustandsüberwachungsvorrichtung 204 noch von der zweiten Türzustandsüberwachungsvorrichtung 206 ein Signal über das Öffnen der Tür gesendet wurde, sind zum Erreichen der Aufhebungsbedingung ausreichend.

Hierbei handelt es sich um eine Variante zum Erreichen einer Aufhebungsbedingung, die zu den Figuren 1 und 2 beschrieben wurde. Diese Variante kann z. B. vom Bediener gewählt werden, wenn nur das Verstreichen des vorbestimmten Zeitintervalls bei geschlossen gebliebener Tür 2 dem Bediener nicht sicher genug erscheint. Der Bediener kann mittels des Parametrierugnsprogramms diese Variante wählen und hinterlegen.

Insbesondere, wenn der Bediener diese Option gewählt hat, wird das Verstrichen Sein des vorbestimmten Zeitintervalls bei geschlossen gebliebener Tür 2 wird an der zentralen Fluchtwegsteuerung 300 optisch angezeigt. Insbesondere dienen die Leuchtmittel 313 zur Anzeige, dass das vorbestimmte Zeitintervall verstrichen ist, ohne dass ein Signal über das Öffnen der Tür 2 innerhalb des vorbestimmten Zeitintervalls empfangen wurde. Durch die optische Anzeige erfährt der Bediener, dass durch die Authentifizierung an der zentralen Fluchtwegsteuerung 300 die Tür 2 verriegelt werden kann.

Haben die Türzustandüberwachungsvorrichtungen 204, 206 kein Signal über ein Öffnen der Tür während des Vorliegens eines Brandmeldesignals gesendet, so kann nach einer Beendigung des Brandmeldesignals eine Verriegelung der Türverriegelung 200 ebenfalls durch dieselbe Betätigung des Schlüsseltasters 312 erreicht werden. Auch die Möglichkeit durch die Betätigung des Schlüsseltasters 312 nach einer Beendigung des Brandmeldesignals eine Verriegelung der Türverriegelung 200 zu erreichen, wird optisch durch die Leuchtmittel 313 angezeigt.

Die Steuerungsvorrichtung 100 leitet Nachrichten von dem Nottaster 10 und/oder der Türverriegelung 200 über das zweite Bussystem 401 weiter. Hierbei passt die Steuerungsvorrichtung 100 die Nachricht dem Format des zweiten Bussystems 401 an. Die Steuerungsvorrichtung 100 sendet Informationen über den Zustand des Nottasters 10 und/oder der Türverriegelung 200 über das zweite Bussystem 401.

Beispielsweise können die zentrale Fluchtwegsteuerung 300 und das Mehrtüranzeigegerät 350 mit einem dritten Bussystem 403 verbunden sein (s. Fig. 10). Bevorzugt kann der zentrale Notfalltaster 302, besonders bevorzugt die Notfalltasterelektronikeinheit 308, mit dem dritten Bussystem 403 verbunden sein (s. Fig. 8). Das Mehrtüranzeigegerät 350 kann den Ver- und Entriegelungszustand der Türverriegelung 200 optisch anzeigen. Zusätzlich kann mit Hilfe des Mehrtüranzeigegeräts 350 eine der Türverriegelungen 200, 200', 1200', 2200' des Sicherheitssystems 1 (s. Fig. 10) entriegelt werden. Die Entriegelung mit Hilfe des Mehrtüranzeigegeräts 350 erfolgt nicht Ein-Fehler-sicher. Bei dem dritten Bussystem 403 kann es sich um dieselbe Bussystemart wie bei dem ersten Bussystem 400 handeln, z. B. um einen CAN oder DCW-Bus.

Die Steuerungsvorrichtung 100 leitet über das zweite Bussystem 401 an die zentrale Fluchtwegsteuerung 300 weiter, wenn der Nottaster 10 eine erste Verzögerungszeitdauer wartet, bevor der Nottaster 10 die Türverriegelungssteuerung 201 veranlasst, den Verriegelungsmechanismus 205 zur Entriegelung anzusteuern.

Die erste Verzögerungszeitdauer wird an der zentralen Fluchtwegsteuerung 300 optisch dargestellt. Hierzu ist der zentrale Notfalltaster 302 entsprechend dem Nottaster 10 aufgebaut, wie es zu den Figuren 13, 16, 17 beschrieben ist. Zur optischen Darstellung der ersten Verzögerungszeitdauer werden die Leuchtmittel 313 des zentralen Notfalltasters 302 von der Notfalltasterelektronikeinheit 308 angesteuert. Mit Fortschreiten der ersten Verzögerungszeitdauer leuchten weniger Leuchtmittel 313 in derselben Farbe. Beispielsweise können weniger Leuchtmittel 313 in einer ersten Farbe und zunehmend viele Leuchtmittel 313 in einer zweiten Farbe leuchten. Die Leuchtmittel 41 des Nottasters 10 werden in identischer Weise angesteuert, um die erste Verzögerungszeitdauer optisch darzustellen.

Während der ersten Verzögerungszeitdauer, z. B. 8 s, kann der Bediener das Verzögerungselement 332 betätigen. Hierzu dreht der Bediener einen Schlüssel in dem Schlüsseltaster, der als Verzögerungselement 332 dient. Eine Betätigung des Verzögerungselements 332 wird von der Notfalltasterelektronikeinheit 308, insbesondere der dritten Notfallverarbeitungseinheit 305, erfasst. Eine entsprechende Nachricht wird über das zweite Bussystem 401 und ggf. das erste Bussystem 400 gesendet. Der Nottaster 10 empfängt die Nachricht. In Folge der Betätigung des Verzögerungselements 332 beendet der Nottaster 10 die erste Verzögerungszeitdauer und beginnt mit einer zweite Verzögerungszeitdauer. Die zweite Verzögerungszeitdauer, z. B. 180 s, ist länger als die erste Verzögerungszeitdauer. Am Ende der zweiten Verzögerungszeitdauer veranlasst der Nottaster 10 die Entriegelung der Türverriegelung 200. Die zweite Verzögerungszeitdauer wird im Nottaster 10 mit Hilfe desselben Timers bestimmt, der zur Bestimmung der ersten Verzögerungszeitdauer dient. Während der zweiten Verzögerungszeitdauer muss der Schlüssel des Verzögerungselements 322 nicht gedreht bleiben. Vielmehr reicht ein einmaliges Drehen des Schlüssels aus, um die zweite Verzögerungszeitdauer zu starten.

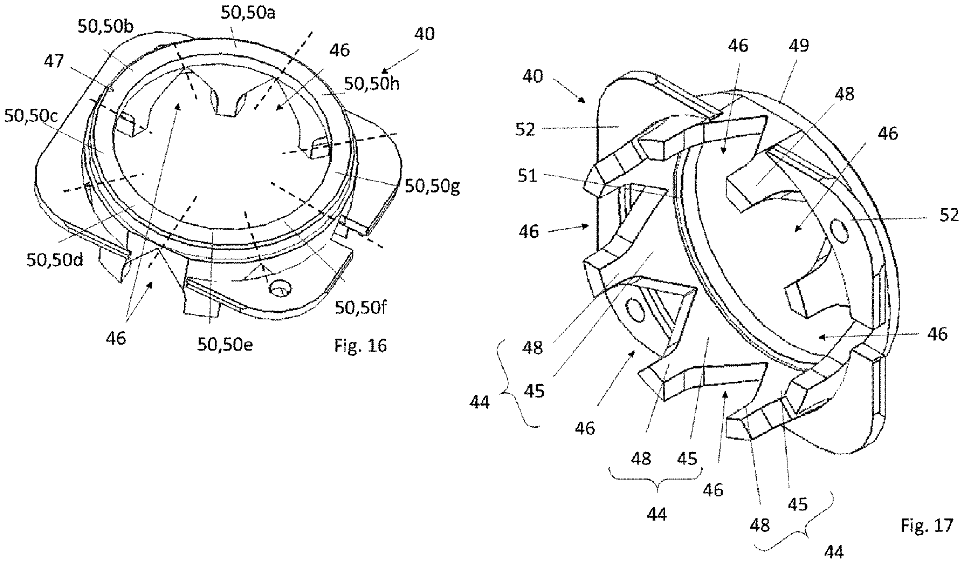

Die zweite Verzögerungszeitdauer wird an der zentralen Fluchtwegsteuerung 300 und an dem Nottaster 10 optisch dargestellt. Die optische Darstellung an der zentralen Fluchtwegsteuerung 300 gleicht der optischen Darstellung an dem Nottaster 10. Mit Fortschreiten der zweiten Verzögerungszeitdauer leuchten weniger Leuchtmittel 41, 313 in derselben Farbe. Beispielsweise können weniger Leuchtmittel 41, 313 in einer ersten Farbe und zunehmend viele Leuchtmittel 41, 313 in einer zweiten Farbe leuchten. Um darzustellen, dass die zweite Verzögerungszeitdauer lange dauert, kann wiederholend innerhalb der zweiten Verzögerungszeitdauer ein Zeitablauf assoziierendes Muster, z. B. ein umlaufender Farbpunkt oder ein umlaufendes Farbfenster (s. Beschreibung zu Figur 16, 17) optisch dargestellt werden.

Wird während der ersten oder der zweiten Verzögerungszeitdauer das Beendigungselement 333 betätigt, so erfasst die Notfallelektronikeinheit 308, insbesondere die dritte Notfallverarbeitungseinheit 305, die Betätigung des Beendigungselements 333 und sendet eine Nachricht bezüglich der Betätigung des Beendigungselements 333 über das zweite Bussystem 401. Hierdurch veranlasst die Notfallelektronikeinheit 308 den Nottaster 10 die Entriegelung nicht weiter zu verzögern, sondern unmittelbar eine Entriegelung der Türverrieglung 200 zu veranlassen. Das Beendigungselement 333 ist nichtrastend ausgebildet. Eine einmalige Betätigung des Beendigungseleements 333 reicht zum Beenden der Verzögerung des Veranlassens der Entriegelung aus.

Der Nottaster 10 kann durch eine Betätigung des ersten Bedienelements 322 in den deaktivierten Zustand überführt werden. Hierzu dreht der Bediener einen Schlüssel in dem Schlüsseltaster, der als erstes Bedienelement 322 dient. Eine Betätigung des ersten Bedienelements 322 wird von der Notfalltasterelektronikeinheit 308 erfasst. Bei einer Betätigung des ersten Bedienelements 322 werden ein erster und ein zweiter Deaktivierungs-Stromkreis geöffnet oder geschlossen. Das Öffnen oder Schließen des ersten Deaktivierungs-Stromkreises wird von der ersten Notfallverarbeitungseinheit 303 erfasst. Das Öffnen oder Schließen des zweiten Deaktivierungs-Stromkreises wird von der zweiten Notfallverarbeitungseinheit 304 erfasst. Die erste und die zweite Notfallverarbeitungseinheit 303, 304 kommunizieren über das zweite Bussystem 401 mit dem Nottaster 10. Befindet sich zwischen dem Nottaster 10 und dem zentralen Notfalltaster 302 das erste Bussystem 400, so leitet die Steuerungsvorrichtung 100 die Nachricht der ersten und der zweiten Notfallverarbeitungseinheit 303, 304 weiter. Bei der Weiterleitung wird das Format geändert, der Inhalt bleibt jedoch unverändert.

In dem deaktivierten Zustand des Nottasters 10 ist die Betätigung des Nottasters 10 wirkungslos auf die Türverriegelung 200.

Der aktivierte Zustand und der deaktivierte Zustand sind in dem Nottaster 10 elektronisch hinterlegt. Dadurch, dass der aktivierte Zustand und der deaktivierte Zustand in dem Nottaster 10 gespeichert sind, muss der Schlüssel in dem ersten Bedienelement 322 während des deaktivierten Zustands nicht gedreht bleiben. Vielmehr reicht ein einmaliges Drehen des Schlüssels aus, um den Nottaster 10 zu deaktivieren.

Die Deaktivierung bleibt bestehen, bis das zweite Bedienelement 323 betätigt wird. Die Betätigung des zweiten Bedienelement 323 ist von der Notfalltasterelektronikeinheit 308, insbesondere der dritte Notfallverarbeitungseinheit 305, erfassbar. Die Notfallelektronikeinheit 308 sendet eine Nachricht bezüglich der Betätigung des zweiten Bedienelements 323 über das zweite Bussystem 401 und ggf. über das erste Bussystem 400 an den Nottaster 10, woraufhin der Nottaster 10 in den aktivierten Zustand überführt wird. Das zweite Bedienelement 323 ist nicht rastend. Dadurch dass der aktivierte und der deaktivierte Zustand in dem Nottaster 10 gespeichert ist, reicht eine einmalige Betätigung des zweiten Bedienelements 323, um den Nottaster 10 in den aktivierten Zustand zu überführen.

Die zentrale Fluchtwegsteuerung 300 umfasst einen Bus 341, über den die Notfallelektronikeinheit 308, insbesondere die dritten Notfallverarbeitungseinheit 305, Signale des zweiten Bedienelements 323, des Verzögerungselements 332 und des Beendigungselements 333 erfassen kann. Die Notfallelektronikeinheit 308 dient als Intelligenz der gesamten zentralen Fluchtwegsteuerung 300.. Nur die Notfallelektronikeinheit 308 umfasst Mikroprozessoren. Das Deaktivierungsmodul 320 und/oder das Verzögerungsmodul 322 kann Prozessorfrei ausgestaltet sein. Der Bus 341 kann als ein I²C Bus ausgestaltet sein.

Zur Hinterlegung des aktivierten und des deaktivierten Zustands kann in der ersten Nottasterverarbeitungseinheit 20 und redundant in der zweiten Nottasterverarbeitungseinheit 21, insbesondere in den nicht flüchtigen Speichern, eine zweite Variable gespeichert sein. Die zweite Variable kann binär sein. Befindet sich der Nottaster 10 in dem deaktivierten Zustand, so ist die zweite Variable auf einen Deaktivierungswert gesetzt. Befindet sich der Nottaster 10 in dem aktivierten Zustand, so wird die zweite Variable auf einen Aktivierungswert gesetzt. In Folge einer Betätigung des ersten Bedienelements 322 wird die zweite Variable auf den Deaktivierungswert gesetzt. In Folge einer Betätigung des zweiten Bedienelements 323 wird die zweite Variabel auf den Aktivierungswert gesetzt. Bevor der Nottaster 10 die Entriegelung der Türverriegelung 200 veranlasst, prüft der Nottaster 10 den Wert der zweiten Variablen. Stellt der Nottaster fest, dass der Nottaster 10 deaktiviert ist, so unterbleibt eine Kommunikation des Nottasters 10 mit der Türverriegelungssteuerung 201, um eine Entriegelung 200 zu veranlassen.

Die erste Notfallverarbeitungseinheit 303 und die zweite Notfallverarbeitungseinheit 304 überwachen sich gegenseitig auf Fehler. Wird ein Fehler festgestellt, so wird eine Nachricht über das zweite Bussystem 401 gesendet. Der Nottaster 10 empfängt die Nachricht und überführt daraufhin sich selber in den aktivierten Zustand, falls der Nottaster 10 sich in dem deaktivierten Zustand befindet. Hierzu ändert der Nottaster 10 den Wert der zweiten Variablen auf den Aktivierungswert.

Die erste Notfallverarbeitungseinheit 303 und die zweite Notfallverarbeitungseinheit 304 senden wiederholt, insbesondere in regelmäßigen Abständen, ein Lebenszeichensignal, über das zweite Bussystem 401. Der Nottaster 10 empfängt die Lebenszeichensignale. Bleibt ein Lebenszeichensignal einmal oder mehrfach aus, so überführt sich der Nottaster 10 in den aktivierten Zustand, falls der Nottaster 10 sich in dem deaktivierten Zustand befindet.

Empfängt das Sicherheitssystem 1 ein Brandmeldesignal, so überführt sich der Nottaster 10 in den aktivierten Zustand, falls der Nottaster 10 sich in dem deaktivierten Zustand befindet.

Die Betätigung des Nottasters 10 im deaktivierten Zustand wird an der zentralen Fluchtwegsteuerung 300, an der Wachvorrichtung 301 und/oder an dem Mehrtüranzeigegerät 350 angezeigt. Ist tatsächlich ein Gefahrenfall vorhanden, so kann der Nottaster 10 durch den Bediener in den aktivierten Zustand überführt werden, indem der Bediener das zweite Bedienelement 323 betätigt, oder es kann durch den Bediener direkt die Türverriegelung zur Entriegelung angesteuert werden. Hierzu kann der Bediener den zentralen Notfalltaster 302 betätigen. Ob ein Gefahrenfall vorliegt, kann der Bediener z. B. über das Audio- und Videomodul 510 wahrnehmen. Hierdurch wird eine erhöhte Sicherheit erreicht.

Die Deaktivierung kann z. B. nachts in einem Kaufhaus vorgenommen werden. Weiterhin ist es denkbar, den deaktivierbaren Nottaster 10 in einem Gebäude, in dem Menschen mit einem beeinträchtigten Geisteszustand leben, einzusetzen. So können Nottaster 10 auch an Türen, zu denen die Menschen mit beeinträchtigen Geisteszustand Zugang haben, eingesetzt werden, z. B. auf einer Psychiatrie- oder Demenzstation.

Wird in dem deaktivierten Zustand der Nottaster 10 betätigt und danach der Nottaster 10 in den aktivierten Zustand überführt, führt die in dem deaktivierten Zustand erfolgte Betätigung des Nottasters 10 auch nach der Überführung in den aktivierten Zustand nicht zu einer Entriegelung der Türverriegelung 200. Die in dem deaktivierten Zustand erfolgte Betätigung des Nottasters 10 bleibt wirkungslos. Dieses rührt zum einen daher, dass das Betätigungselement 11 und der Schalter 63 nicht-rastend ausgeführt sind. Zum anderen wurde die Betätigung des Nottasters 10 im deaktivierten Zustand nicht im Nottaster 10 gespeichert. Die Türverriegelungssteuerung 201 erhält keine Nachricht bezüglich der Betätigung des Nottasters 10 in dem deaktivierten Zustand. Die elektronische Feststellung wurde daher nicht in den Betätigungszustand überführt. Hierdurch wird erreicht, dass nicht unmittelbar mit der Aktivierung des Nottasters 10 die Türverriegelung 100 entriegelt wird, z. B. weil lange zuvor der Nottaster 10 betätigt wurde. Hierdurch wird eine erhöhte Gebäudesicherheit erreicht.

Um eine besonders hohe Sicherheit zu erreichen, kann vorgesehen sein, dass während der ersten und/oder der zweiten Verzögerungszeitdauer das Audio- und Videomodul 510 eingeschaltet ist. Hierbei schaltet der Nottaster 10 das Audio- und Videomodul 510 zu Beginn der ersten und/oder zweiten Verzögerungszeitdauer frei. Ebenfalls wird das Audio- und Videomodul 510 von dem Nottaster 10 freigeschaltet, wenn in dem deaktivierten Zustand der Nottaster 10 betätigt wird. Hierzu kommuniziert der Nottaster 10 über das zweite Bussystem 401 und ggf. über das erste Bussystem 400 mit dem Audio- und Videomodul 510.

Es kann sein, dass der Nottaster 10 nur deaktivierbar ist, wenn das Audio- und Videomodul 510 freischaltbar ist. Ist das Audio- und Videomodul 510 Teil des erfindungsgemäßen Sicherheitssystems 1, so kann eine Deaktivierung unterbleiben, wenn das Audio- und Videomodul 510 z. B. nicht funktionsfähig ist und/oder die Verbindung zu dem Audio- und Videomodul 510 gestört ist. Dieses gilt nicht, wenn das Sicherheitssystem 1 kein Audio- und Videomodul 510 umfasst, sondern ein von dem Sicherheitssystem 1 separates Überwachungssystem in dem Gebäude vorgesehen ist.

Es kann sein, dass der Nottaster 10 die Veranlassung der Entriegelung nur um die erste und/oder zweite Verzögerungszeitdauer verzögert, wenn das Audio- und Videomodul 510 freischaltbar ist. Ist das Audio- und Videomodul 510 Teil des erfindungsgemäßen Sicherheitssystems 1, so kann eine Verzögerung unterbleiben, wenn das Audio- und Videomodul 510 z. B. nicht funktionsfähig ist und/oder die Verbindung zu dem Audio- und Videomodul gestört ist. Dieses gilt nicht, wenn das Sicherheitssystem 1 kein Audio- und Videomodul 510 umfasst, sondern ein von dem Sicherheitssystem 1 separates Überwachungssystem in dem Gebäude vorgesehen ist.

In Figur 10 ist ein weiteres Ausführungsbeispiel eines erfindungsgemäßen Sicherheitssystems 1 dargestellt. Wie in dem Ausführungsbeispiel der Figuren 7 bis 9 umfasst das Sicherheitssystem 1 eine zentrale Fluchtwegsteuerung 300, die entsprechend der Figuren 7 und 8 aufgebaut ist. Zu den jeweiligen Nottastern 10, 10', 1010, 1010', 2010 zugehörige Schlüsseltaster 500, 500', 1500, 1500', 2500 sind der Übersichtlichkeit halber nicht abgebildet. Die zentrale Fluchtwegsteuerung 300 ist mit dem zweiten Bussystem 401 verbunden. Mit dem zweiten Bussystem 401 sind ein erstes Subsystem 5 und ein zweites Subsystem 6 verbunden. Die beiden Subsystem 5, 6 umfassen jeweils ein erstes Bussystem 400, 400'. Mit dem jeweiligen ersten Bussystem 400, 400' sind jeweils Nottaster 10, 1010 bzw. 10', 1010', 2010' und Türverriegelungen 200 bzw. 200', 1200', 2200' verbunden. Bei den ersten Bussystemen 400, 400' handelt es sich um dieselbe Bussystemart, z. B. um einen CAN- oder einen DCW-Bus. Bei dem zweiten Bussystem 401 handelt es sich um eine andere Bussystemart, z. B. einen LON- oder LAN- Bus.

Das Sicherheitssystem 1 umfasst das Mehrtüranzeigegerät 350. Das Mehrtüranzeigegerät 350 kann z. B. optisch anzeigen, welche Türverriegelung 200 bzw. 200', 1200', 2200' sich im Entriegelungszustand und welche Türverriegelung sich im Entriegelungszustand befindet. Mit Hilfe des Mehrtüranzeigegeräts 350 kann ein Bediener eine nicht sicherheitsrelevante Ver- und Entriegelung einzelner Türverriegelungen 200 bzw. 200', 1200', 2200' des Sicherheitssystems 1 vornehmen.

Jedes Subsystem 5, 6 umfasst nur eine Steuerungsvorrichtung 100, 100'. Jeweils die Steuerungsvorrichtung 100, 100' des jeweiligen Subsystems 5, 6 ist mit dem zweiten Bussystem 401 verbunden. Die Steuerungsvorrichtung 100 des ersten Subsystems 5 ist dabei mit den Nottastern 10, 1010 und der Türverriegelung 200 des ersten Subsystems 5 über das erste Bussystem 400 verbunden. Die Steuerungsvorrichtung 100' des zweiten Subsystems 6 ist hingegen in einem Nottaster 10' des zweiten Subsystems 6 integriert und mit den übrigen Nottastern 1010', 2010' und den Türverriegelungen 200', 1200', 2200' des weiteren ersten Bussystems 400' verbunden.

In dem Subsystem 5 sind ein erster Nottaster 10 und ein zweiter Nottaster 1010 vorgesehen. Wird einer der Nottaster 10, 1010 betätigt, so veranlasst der betätigte Nottaster 10, 1010 jeweils eine Entriegelung der Türverriegelung 200.

In dem Subsystem 6 sind ein erster Nottaster 10', ein zweiter Nottaster 1010' und ein dritter Nottaster 2010' vorgesehen. Die Nottaster 10', 1010', 2010'veranlassen selektiv eine Entriegelung der Türverriegelungen 200', 1200', 2200' des zweiten Subsystems 6. Z. B. wird bei einer Betätigung des ersten Nottasters 10' nur eine Entriegelung der ersten Türverriegelung 200' veranlasst. Entsprechend wird bei einer Betätigung des zweiten Nottasters 1010' nur eine Entriegelung der zweiten Türverriegelung 1200' und bei einer Betätigung des dritten Nottaster 2010' nur eine Entriegelung der dritten Türverriegelung 2200' veranlasst.

Vielfältige Abweichungen sind denkbar. So kann ein erfindungsgemäßes Sicherheitssystem 1 z. B. ohne das erste oder das zweite Subsystem 5, 6 ausgestaltet sein. Als einziges oder zusätzliches Subsystem kann z. B. eines der in den Figuren 1 bis 6 beschriebenen erfindungsgemäßen Sicherheitssysteme 1 vorgesehen sein. Die Ausbildung und die Funktionen der Nottaster 10, 10', 1010, 1010', 2010' und der Türverriegelungen 200, 200', 1200', 2200' sind entsprechend den vorhergehenden Ausführungsbeispielen ausgebildet, soweit nachfolgend nicht zusätzlich oder abweichend beschrieben.

In jeder der Türverriegelungen 200, 200', 1200', 2200' des Sicherheitssystems 1 ist hinterlegt, ob bei einer Betätigung zentralen Notfalltasters 302 eine Entriegelung der jeweiligen Türverriegelung 200, 200'1200', 2200' erfolgt. So können z. B. die Türverriegelungen 200, 200', 2200' eine Entriegelung in Folge einer Betätigung des zentralen Notfalltasters 302 zulassen, die Türverriegelung 1200' hingegen nicht. Wird der zentrale Notfalltaster 302 betätigt, so steuern die Türverriegelungssteuerungen 201 der Türverriegelungen 200, 200', 2200' den jeweiligen Verriegelungsmechanismus 205 zur Entriegelung an. Hingegen unterbleibt eine derartige Ansteuerung in der Türverriegelung 1200'.

Wird der zentrale Notfalltaster 302 betätigt, erhalten die Steuerungsvorrichtungen 100, 100' eine entsprechende Nachricht des zentralen Notfalltasters 302 über das zweite Bussystem 401 und leiten die Nachricht jeweils an alle Türverriegelungen 200 bzw. 200', 1200', 2200' des jeweiligen ersten Bussystems 400, 400' weiter. Die Türverriegelungen 200, 200', 1200', 2200' entscheiden anhand der Hinterlegung, die die Zulassung einer Entriegelung in Folge der Betätigung des zentralen Notfalltasters 302 beinhaltet, ob die jeweilige Türverriegelungssteuerung 201 der Türverriegelungen 200, 200', 1200', 2200' den jeweiligen Verriegelungsmechanismus 205 zur Entriegelung ansteuert oder nicht.

Die Hinterlegung, ob die Türverriegelung 200, 200'1200', 2200' in Folge einer Betätigung des zentralen Notfalltasters 302 entriegelt wird, erfolgt bei Inbetriebnahme des Sicherheitssystems 1 durch den Bediener. Die Hinterlegung erfolgt durch das Parametrierungsprogramm.

In jedem der Nottaster 10, 1010, 10'. 1010', 2010' ist hinterlegt, ob bei einer Betätigung des ersten Bedienelements 322 eine Überführung in den deaktivierten Zustand für den jeweiligen Nottaster 10, 1010, 10'. 1010', 2010' zugelassen ist oder nicht. Hierdurch ergibt sich eine selektive Deaktivierung durch die Betätigung des einzigen ersten Bedienelements 322 des Sicherheitssystems 1. So können z. B. die Nottaster 10, 10', 2010' in Folge einer Betätigung des ersten Bedienelements 322 in den deaktivierten Zustand überführt werden, die Nottaster 1010, 1010' hingegen nicht.

Wird das erste Bedienelement 322 betätigt, erhalten die Steuerungsvorrichtungen 100, 100' eine entsprechende Nachricht über das zweite Bussystem 401 und leiten die Nachricht jeweils an alle Nottaster 10, 1010, 1010', 2010' des jeweiligen ersten Bussystems 400, 400', die nicht die Steuerungsvorrichtung 100 umfassen, weiter. Die Nottaster 10, 1010, 10'. 1010', 2010' des Sicherheitssystems 1 entscheiden anhand der Hinterlegung über die Zulassung zur Deaktivierung, ob der jeweilige Nottaster 10, 1010, 10', 1010', 2010' sich selber in Folge der Betätigung des ersten Bedienelements 322 in den deaktivierten Zustand überführt oder nicht.

Bei der Hinterlegung, ob eine Deaktivierung der Nottaster 10, 1010, 10', 1010', 2010' zugelassen sein soll, kann es sich um eine dritte Variable handeln. Die dritte Variable kann binär ausgeführt sein. Die dritte Variable ist in dem nicht flüchtigen Speichern der jeweiligen ersten und der zweiten Nottasterverarbeitungseinheiten 20, 21 jedes Nottasters 10, 1010, 10', 1010', 2010'gespeichert. Ist die Deaktivierung für den jeweiligen Nottaster 10, 1010, 10', 1010', 2010' zugelassen, so nimmt die dritte Variable einen ersten Wert ein. Ist die Deaktivierung für den jeweiligen Nottaster 10, 1010, 10', 1010', 2010' verboten, so nimmt die dritte Variable einen zweiten Wert ein. Der Nottaster 10, 1010, 10', 1010', 2010' prüft den Wert der dritten Variablen, bevor der Nottaster 10, 1010, 10', 1010', 2010' sich deaktiviert und deaktiviert sich nur, wenn die dritte Variable den ersten Wert hat.

Die Hinterlegung, ob der Nottaster 10, 1010, 10', 1010', 2010' deaktivierbar sein soll, erfolgt bei Inbetriebnahme des Sicherheitssystems 1 durch den Bediener. Dieses wird mit Hilfe eines Parametrierungsprogramms hinterlegt.

In jedem der Nottaster 10, 1010, 10'. 1010', 2010' ist hinterlegt, ob bei einer Betätigung des Verzögerungselements 332 der jeweilige Nottaster 10, 1010, 10'. 1010', 2010' die Entriegelung der dem Nottaster 10, 1010, 10'. 1010', 2010' zugeordneten Türverriegelungen 200, 200', 1200', 2200' um eine zweite Verzögerungszeitdauer verzögert oder nicht. Die zweite Verzögerungszeitdauer ist für die jeweiligen Nottaster 10, 1010, 10'. 1010', 2010' unterschiedlich lang einstellbar und in dem Sicherheitssystem 1, insbesondere in den Nottastern 10, 1010, 10', 1010', 2010', hinterlegt. Alternativ kann die Zulassung der Verzögerung um die zweite Verzögerungszeitdauer und ggf. die Länge der zweiten Verzögerungszeitdauer nur für Gruppen von Nottastern 10, 1010, 10'. 1010', 2010', die einer Türverriegelung 200, 200', 1200', 2200' oder einer Tür 2, 2002, 3002 zugeordnet sind, individuell einstellbar sein. Die Einstellung und die Hinterlegung erfolgt durch den Bediener mit Hilfe des Parametrierungsprogramms.

So können z. B. die Nottaster 10, 2010' in Folge einer Betätigung des Verzögerungselements 332 die Entriegelung der Türverriegelungen 200 bzw. 2200' weiter verzögern, die Nottaster 1010, 10', 1010' hingegen nicht. Die Länge der zweiten Verzögerungszeitdauer für den Nottaster 10 ist dabei verschieden von der Länge der zweiten Verzögerungszeitdauer für den Nottaster 2010'gewählt. Wird der Nottaster 10 betätigt und wird innerhalb der ersten Verzögerungszeitdauer, die für den Nottaster 10 hinterlegt ist, das Verzögerungselement 332 betätigt, so verzögert der Nottaster 10 ab der Betätigung des Verzögerungselements 332 die Entriegelung um diejenige zweite Verzögerungszeitdauer, die in dem Nottaster 10 hinterlegt ist. Wird der Nottaster 2010' betätigt und wird innerhalb der ersten Verzögerungszeitdauer, die für den Nottaster 2010' hinterlegt ist, das Verzögerungselement 332 betätigt, so verzögert der Nottaster 2010' ab der Betätigung des Verzögerungselements 332 die Entriegelung um diejenige zweite Verzögerungszeit, die in dem Nottaster 2010' hinterlegt ist und die sich von der zweiten Verzögerungszeit für den Nottaster 10 unterscheidet. Wird der Nottaster 1010 betätigt, so verzögert der Nottaster 1010 die Entriegelung um die erste Verzögerungszeitdauer, die für den Nottaster 1010 hinterlegt ist. Wird während der ersten Verzögerungszeitdauer des Nottasters 1010, das Verzögerungselement 332 betätigt, so wird die Entriegelung nicht um eine zweite Verzögerungszeitdauer verzögert, da diese Verzögerung für den Nottaster 1010 nicht zugelassen ist, sondern der Nottaster 1010 wird nach der ersten Verzögerungszeitdauer unmittelbar eine Entriegelung der Türverriegelung 200 veranlassen. Die Nottaster 10', 1010' verzögern die Entriegelung der zugeordneten Türverriegelung 200' bzw. 1200' gar nicht. Bei den Nottastern 10', 1010' ist weder eine erste Verzögerungszeitdauer noch eine zweite Verzögeungszeitdauer zugelassen. Anstelle einer Nicht-Zulassung einer Verzögerung um die erste und/oder die zweite Verzögerungszeitdauer kann auch eine Zeitdauer von 0 s hinterlegt werden. Eine Betätigung des Beendigungselements 333 beendet jegliche Verzögerung der Entriegelung.

Wird das Verzögerungselement 332 betätigt, erhalten die Steuerungsvorrichtungen 100, 100' eine entsprechende Nachricht über das zweite Bussystem 401 und leiten die Nachricht jeweils an die Nottaster 10, 1010, 1010', 2010'des jeweiligen ersten Bussystems 400, 400', die nicht die Steuerungsvorrichtung 100 umfassen, weiter. Die Nottaster 10, 1010, 10'. 1010', 2010' des Sicherheitssystem 1 entscheiden anhand der Hinterlegung, wie zu verfahren ist.

Die Hinterlegung, ob der Nottaster 10, 1010, 10', 1010', 2010'die Verzögerung um die zweite Verzögerungszeitdauer zulässt und, wenn ja, die Hinterlegung der Länge der zweiten Verzögerungszeitdauer, erfolgt bei Inbetriebnahme des Sicherheitssystems 1. Die Hinterlegungen werden durch den Bediener mit Hilfe des Parametrierungsprogramms festgelegt. Die erste und/oder die zweite Verzögerungszeitdauer können nur bis zu einer maximalen, fest vorgegebenen Zeitdauer gewählt werden.

Ebenfalls kann mit Hilfe des Parametrierungsprogramms von dem Bediener selektiv hinterlegt werden, für welchen Nottaster 10, 1010, 1010', 2010' welche Aufhebungsbedingung zugelassen ist. Die Aufhebungsbedingung zur die Aufhebungshandlung vor Ort ist stets zugelassen. Für jeden Nottaster 10, 1010, 1010', 2010'kann aber selektiv das Erreichen der Aufhebungsbedingung durch Verstreichen des vorbestimmten Zeitintervalls oder das Erreichen der Aufhebungsbedingung durch Verstreichen des vorbestimmten Zeitintervalls und nachfolgende Betätigung der Identifizierungsvorrichtung 312 bei geschlossen gebliebener Tür 2 zugelassen werden oder nicht.

Die Hinterlegung, ob der Nottaster 10 bei einer Betätigung des ersten Bedienelements 322 deaktivierbar ist, ob der Nottaster 10 bei einer Betätigung des Verzögerungselements 332 die Entriegelung um eine zweite Verzögerungszeitdauer verzögern soll, die Länge der ersten und der zweiten Verzögerungszeitdauer, die Hinterlegung der Aufhebungsbedingung und/oder die Hinterlegung, ob die Türverriegelung 200 bei einer Betätigung des zentralen Notfalltaster 302 entriegelt werden soll, kann auch für das Sicherheitssystem 1 gemäß dem Ausführungsbeispiel der Figuren 7 bis 9 vorgenommen werden.

Abweichend und nicht dargestellt von den Figuren 7 bis 10 können auch mehrere zentrale Fluchtwegsteuerungen 300, 300' mit dem zweiten Bussystem 401 verbunden sein. Beispielsweise kann in einer Psychiatrie eine zentrale Fluchtwegsteuerung 300 zur Anordnung in einem Wachraum vorgesehen sein und eine weitere zentrale Fluchtwegsteuerung 300' zur Anordnung in einem Schwesternzimmer vorgesehen sein.

In den jeweiligen Türverriegelungen 200, 200', 1200', 2200'kann jeweils mit Hilfe des Parametrierungsprogramms hinterlegt werden, in Folge einer Betätigung welchen der zentralen Nottastern 302, 302' eine Entriegelung erfolgen soll. Hierzu ist in den Türverriegelungen eine Liste hinterlegt. In den jeweiligen Nottastern 10, 10', 1010, 1010', 2010' kann jeweils mit Hilfe des Parametrierungsprogramms hinterlegt werden, in Folge einer Betätigung welchen der ersten Bedienelementen 322, 322' eine Deaktivierung zugelassen ist. Abweichend von der dritten Variable ist hierzu jeweils eine Liste in den Nottastern 10, 10', 1010, 1010', 2010' hinterlegt.

Das erste bis vierte Ausführungsbeispiel des erfindungsgemäßen Sicherheitssystems 1 weist kein zweites Bussystem 401, keine zentrale Fluchtwegsteuerung 300, keine Wachvorrichtung 301 und kein Audio- und Videomodul 510 auf. Es sind aber erfindungsgemäße Ausführungsbeispiele des Sicherheitssystems 1 denkbar, in denen das erste bis vierte Ausführungsbeispiel zusätzlich die fehlenden Komponenten 401, 301, 300 und 510 zumindest teilweise umfasst. Ist das Sicherheitssystem 1 für mehrere Türen konzipiert, so kann jeder Tür ein Audio- und Videomodul 510 zugeordnet sein. Die Nottaster 1010, 2010, 3010, die nicht die Steuerungsvorrichtung 100 umfassen, und die Türverriegelungen 200, 1200, 2200, 3200 sind nicht an das zweite Bussystem 401 angeschlossen.

In den Figuren 1 bis 10 sind die Türverriegelungen 200, 200', 1200, 1200', 2200, 2200', 3200 Teil des erfindungsgemäßen Sicherheitssystems 1. Denkbar ist jedoch, dass jeweils nur die Türverriegelungssteuerungen 201 Teil des erfindungsgemäßen Sicherheitssystems 1 sind. In diesem Fall sind die Türverriegelungssteuerungen 201 jeweils mit dem Verriegelungsmechanismus 205 und ggf. dem Türzustandsüberwachungsvorrichtungen 204, 206 verbindbar. Ein Entriegeln der Türverriegelung 200 findet in diesem Fall nicht im Sicherheitssystem 1 statt, jedoch ist Teil des Sicherheitssystems 1, dass die Türverriegelungssteuerung 201 den Verriegelungsmechanismus 205 ansteuert, d. h. die Türverriegelungssteuerung 201 schaltet den elektrischen Strom für den Verriegelungsmechanismus 205 an oder ab. In diesem Fall kann anstelle der Begriffe "Ent-bzw. Verriegelung der Türverriegelung" jeweils "Ansteuerung des Verriegelungsmechanismus zur Ent- bzw. Verriegelung" vewendet werden.

In den Figuren 11 bis 13 ist ein Nottaster 10 dargestellt. Der in Figur 11 gezeigte Nottaster 10 ist als Nottaster 10, 10', 1010, 1010', 2010, 3010 in einem der erfindungsgemäßen Sicherheitssysteme 1 der Figuren 1 bis 10 einsetzbar oder eingesetzt.

Der Nottaster 10 umfasst das Betätigungselement 11. Das Betätigungselement 11 kann sich von der Ausgangsposition 11.I, die in den Figur 11 dargestellt ist, in die Betätigungsposition 11.11 bewegen, die in Figur 11 angedeutet ist. In Figur 12 befindet sich das Betätigungselement 11 ebenfalls in der Ausgangsposition 11.I.

In der Betätigungsposition 11.II wird der Schalter 63 betätigt. Der Schalter 63 wechselt hierbei ebenfalls von einer ersten 63.1 in eine zweite Position 63.11, wie in Figur 12 angedeutet.

Nach der Betätigung kehrt das Betätigungselement 11 unmittelbar und ohne manuellen Eingriff in die Ausgangsposition 11.I zurück. Hierzu ist ein als Feder ausgebildetes Rückstellmittel 12 in dem Nottaster 10 vorgesehen. Auch der Schalter 63 kehrt nach der Betätigung unmittelbar und ohne manuellen Eingriff in die erste Position 63.1 zurück.

Der Nottaster 10 umfasst zumindest eine erste Platine 60. Hierdurch ist es möglich, kompakt und mit einer gesicherten Funktionsweise den Nottaster 10 auszugestalten.

Der Nottaster 10 weist von einer Kuppe 32 einer Vorderfläche 19 des Betätigungselements 11 in Einbaurichtung eine Aufbauhöhe AH von weniger als 48 mm, bevorzugt weniger als 45 mm, besonders bevorzugt weniger als 43 mm auf.

Der Schalter 63 ist auf der ersten Platine 60 befestigt. Der erste und der zweite Stromkreis werden auf der ersten Platine 60 durch die Betätigung des Schalters 63 unterbrochen.

Der Nottaster 10 umfasst zudem eine zweite Platine 61. Auf der zweiten Platine 61 sind die erste, die zweite und die dritte Nottasterverarbeitungseinheit 20, 21, 22 angeordnet. Die Anordnung der ersten, der zweiten und der dritten Nottasterverarbeitungseinheiten 20, 21, 22 ist unabhängig davon, ob die erste, die zweite und die dritte Nottasterverarbeitungseinheit 20, 21, 22 als Verarbeitungseinheit 103, 104, 105 der Steuerungsvorrichtung 100 dienen.

Das Öffnen des ersten und zweiten Stromkreises ist durch die erste bzw. die zweite Nottasterverarbeitungseinheit 20, 21 kabelfrei erfassbar. Hierzu sind die erste und die zweite Platine 60, 61 über Stecker 68 miteinander verbunden.

Die erste und die zweite Platinen 60, 61 sind in einem festen Abstand voneinander angeordnet. Hierzu sind Bolzen 69 vorgesehen, die über Schrauben 70 die erste und die zweite Platine 60, 61 miteinander in einem festen Abstand zueinander befestigten (s. Figur 13). Die erste und die zweite Platinen 60, 61 sind parallel zueinander angeordnet.

Der Nottaster 10 umfasst eine Montageplatte 62. Die Montageplatte 62 ist ebenfalls in einem festen Abstand zu der ersten und der zweiten Platine 60, 61 angeordnet. Hierzu sind Bolzen 71 vorgesehen, die über Schrauben 72 die Montageplatte 62 mit der ersten Platine 61 verbinden.

Die Montageplatte 62 dient zur Befestigung an einer Unterputzdose. Die Unterputzdose kann einen Durchmesser von 60 mm und eine Tiefe von 41 mm aufweisen. Der sich von der Montageplatte 62 in Einbaurichtung erstreckende Teil des Nottasters 10 wird als Einbauteil 73 bezeichnet. Der Einbauteil 73 weist einen Durchmesser von weniger als 60 mm und eine Tiefe von weniger als 33 mm, bevorzugt weniger als 31 mm, besonders bevorzugt weniger als 29 mm auf. Hierdurch ist genügend Platz für Kabel in der Unterputzdose. Der Abstand MP von einer Unterseite der Montageplatte 62 bis zu einer Oberseite der zweiten Platine 62 beträgt weniger als 22 mm, bevorzugt weniger als 20 mm, besonders bevorzugt weniger als 17 mm. Die Montageplatte 62 kann ebenfalls zur Befestigung an ein Deckelelement eines Aufputzgehäuses dienen (nicht dargestellt). Die genannten Abstände gelten insbesondere für einen Nottaster, bei dem das Bluetoothmodul 64 abweichend von der Darstellung in den Figuren auf einer Unterseite der zweiten Platine 61 befestigt ist.

Wie oben beschrieben, wird die Aufhebungshandlung, die unmittelbar am Nottaster 10 durchgeführt wird, ohne eine Drehbewegung des Betätigungselement 11 und des Schalters 63 ausgeführt. Hierdurch ist es möglich, einen Schalter 63 mit einer geringen Höhe zu verwenden. So ist der Schalter 63 derart ausgebildet, dass der Schalter 63 drehungsfrei ist. Der Schalter 63 weist eine Höhe SH von weniger als 20 mm, bevorzugt weniger als 17 mm, besonders bevorzugt von weniger als 15 mm auf.

Die Art und Weise der Aufhebungshandlung und die geringe Höhe des Schalters 63 trägt zur geringen Aufbauhöhe AH des Nottasters 10 bei.

Ebenfalls trägt zur geringen Aufbauhöhe AH des Nottasters 10 bei, dass der Schalter 63 zentrisch unter dem Betätigungselement 11 angeordnet ist und das Betätigungselement 11 exzentrisch in dem Nottaster 10 geführt ist.

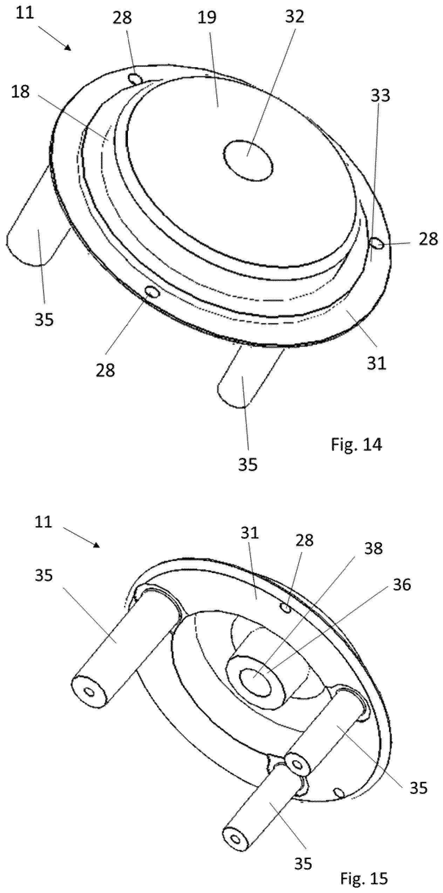

Wie in den Figuren 14 und 15 dargestellt, weist das Betätigungselement 11 stabförmige Führungsmittel 35 auf. Die Führungsmittel 35 sind in Führungshülsen 65 geführt. Die Führungshülsen 65 sind mit der Montageplatte 62 verbunden. Um eine gute Führung zu erzielen, erstreckt sich eines der Führungshülsen 65 durch die erste Platine 60.

Die Führungsmittel 35 sind parallel zu dem Schalter 63 angeordnet. Die Führungsmittel 35 verhindern eine Drehbewegung des Betätigungselements 11 um eine gedachte Achse 701, die in Betätigungsrichtung 700 verläuft.

Durch die in den Führungshülsen 65 geführten Führungsmittel 35 ist das Betätigungselement 11 nur translatorisch bewegbar.

Das Betätigungselement 11 weist ein Betätigungsmittel 36 auf. Wie in den Figuren 12 und 15 dargestellt, ist das Betätigungsmittel 36 in Form eines Kreiszylinders ausgebildet. Hierdurch ist gewährleistet, dass stets das Betätigungsmittel 36 den Schalter 63 betätigt. Insbesondere werden so stets gleichzeitig ein erstes und ein zweites Schaltelement 74, 75 des Schalters betätigt (s. Figur 13). Durch das erste Schaltelement 74 wird der erste Stromkreis und durch das zweite Schaltelement 75 wird der zweite Stromkreis geöffnet.

Das Betätigungsmittel 36 ist mit einem hohlen Innenraum 38 ausgebildet. In dem Schalter 63 ist eine Lichtquelle (nicht dargestellt) angeordnet. Das von der Lichtquelle emittierte Licht wird durch den hohlen Innenraum 38 zu der Kuppe 32 der Vorderfläche 19 des Betätigungselements 11 geleitet, wo das Licht durch das Betätigungselement 11 tritt. Die Kuppe 32 dient somit als Illuminierbereich 32 des Betätigungselements 11.

Das Betätigungselement 11 kann einen lichtundurchlässigen Grundkörper 33 umfassen. Der Grundkörper 33 kann abweichend von der Darstellung in den Figuren mit einer Öffnung versehen sein. In der Öffnung kann ein nicht dargestellter lichtdurchlässiger, insbesondere transluzenter Einsatz angeordnet sein. Der Einsatz kann in der Öffnung befestigt, insbesondere eingepresst, sein. Hierdurch kann das Betätigungselement 11 besonders einfach herstellbar sein.

Die Vorderfläche 19 ist teilweise konisch ausgeführt. Der Illuminierbereich 32 bildet die Spitze des Kegelstumpfes. Der Illuminierbereich 32 ragt gegen die Betätigungsrichtung 700 aus einem Deckel 14 des Nottasters 10 heraus. Hierdurch ist das Licht, das den Illuminierbereich 32 verlässt, seitlich von dem Nottaster 10 gut sichtbar.

Das Rückstellmittel 12 weist einen Hohlraum 37 auf. In dem Hohlraum 37 ragen das Betätigungsmittel 36 des Betätigungselements 11 und der Schalter 36 mit dem ersten und dem zweiten Schaltelement 74, 75. Hierdurch ergibt sich eine platzsparende Anordnung.

Das Bluetooth-Modul 64 ist zwischen der ersten und der zweiten Platine 60, 61 angeordnet. Das Bluetooth-Modul 64 dient zur Parametrisierung. Alternativ und nicht dargestellt und platzsparender ist das Bluetooth-Modul 64 an einer dem Betätigungselement 11 abgewandten Seite der zweiten Platine 61 befestigt. Hierdurch kann der Abstand der ersten und der zweiten Platine 60, 61 weiter verringert sein.

Ein Sabotageschalter 66 ist auf der ersten Platine 60 angeordnet. Aufgrund der geringen Aufbauhöhe ist ein Betätigungsfortsatz 67 des Sabotageschalters 66 durch die Montageplatte 62 hindurchgeführt. Der Betätigungsfortsatz 67 liegt unmittelbar an dem Deckel 14 des Nottasters 10 an.

Ist die Steuerungsvorrichtung 100 in dem Nottaster 10 integriert, so kann trotz der geringen Aufbauhöhe AH der Nottaster 10 die oben beschriebenen Funktionen umfassen und damit intelligent ausgestaltet sein. Die oben beschriebenen Funktionen werden mit Hilfe eines Programmcodes, der in zumindest einer der Verarbeitungseinheiten 103, 104, 105 hinterlegt ist, ausgeführt.

Der Nottaster 10 weist ein Abdeckmittel 13 auf. Das Abdeckmittel 13 ist transparent ausgebildet und deckt die Vorderfläche 19 des Betätigungselements 11 ab. Hierdurch verhindert das Abdeckmittel 13 die unmittelbare Berührung des Betätigungselements 11 durch einen Benutzer. Das Abdeckmittel 13 dient als mentales Hindernis für den Benutzer.

Das Abdeckmittel 13 bleibt bei einer Betätigung des Nottasters 10 zerstörungsfrei. Das Abdeckmittel 13 bewegt sich bei einer Betätigung des Nottasters 10 von einer Ausgangsstellung 13.1 in eine Betätigungsstellung 13.11. Durch das Abdeckmittel 13 wird das Betätigungselement 11 nur mittelbar über das Abdeckmittel 13 von dem Benutzer betätigt.

Das Abdeckmittel 13 ist unabnehmbar in dem Nottaster 10 angeordnet. Hierdurch wird erreicht, dass ein Benutzer das Abdeckmittel 13 nicht missbräuchlich entfernen kann.

Das Abdeckmittel 13 ist fest mit dem Betätigungselement 11 verbunden. Hierzu weist das Abdeckmittel 13 Fortsätze 27 auf, die in Figur 13 dargestellt sind. Wie in den Figuren 13, 14 und 15 dargestellt, weist das Betätigungselement 11 Löcher 28 auf, durch die die Fortsätze 27 geführt und stoffschlüssig mit dem Betätigungselement 11 verbunden sind.

Das Betätigungselement 11 weist einen flanschartigen Abschnitt 31 auf, an dem das Abdeckmittel 13 befestigt ist. Der flanschartige Abschnitt 31 weist die Löcher 28 auf.

Der flanschartige Abschnitt 31 dient als Anschlag des Betätigungselements 11 in Betätigungsrichtung 700. Das Betätigungselement 11 erreicht die Betätigungsposition 11.II, wenn der flanschartige Abschnitt 31 an der Montageplatte 62 oder an den Führungshülsen 65 anliegt.

Der flanschartige Abschnitt 31 dient als Anschlag des Betätigungselements 11 gegen die Betätigungsrichtung 700. Das Betätigungselement 11 erreicht die Ausgangsposition 11.1, wenn der flanschartige Abschnitt 31 an einem Lichtleiter 40 anliegt. Der Lichtleiter 40 hält das Betätigungselement 11 gegen die Kraft des Rückstellmittels 12. Hierzu weist der Lichtleiter 40 eine Anlagefläche 51 auf.

Der Lichtleiter 40 ist an der Montageplatte 62 befestigt. Hierdurch bleibt das Betätigungselement 11 gegen die Kraft des Rückstellmittels 12 auch dann gehalten, wenn der Deckel 14 entfernt wird. Der Lichtleiter 40 weist einen Flansch 52 auf, mit dem der Lichtleiter 40 an der Montageplatte 62 befestigt ist (s. Fig. 17). Der Lichtleiter 40 ist durch dieselben Schrauben 72 an der Montageplatte 62 befestigt, durch die die Montageplatte 62 an der ersten Platine 60 befestigt ist.

Alternativ und nicht dargestellt kann das Abdeckmittel 13 als eine elastische Folie ausgebildet sein, die das Betätigungselement 11 überspannt.

Durch die feste Verbindung entsprechen der Abstand der Betätigungsposition 11.II und der Ausgangsposition 11.I und der Abstand der Betätigungsstellung 13.11 und der Ausgangsstellung 13.1 einander. Unmittelbar nach Ende der Betätigung und ohne manuelle Einwirkung wird das Abdeckmittel 13 in die Ausgangsstellung 13.1 zurückbewegt. Hierzu dient das Rückstellmittel 12. Das Rückstellmittel 12 überführt das Abdeckmittel 13 mittelbar über das Betätigungselement 11 in die Ausgangsstellung 13.1.

Das Abdeckmittel 13 und das Betätigungselement 11 weisen jeweils einen kreisförmigen Querschnitt auf. Der Deckel 14 weist eine kreisförmige Ausnehmung 15 auf. Das Abdeckmittel 13 ragt entgegen der Betätigungsrichtung 700 durch die Ausnehmung 15. Ebenfalls ragt das Betätigungselement 11 durch die Ausnehmung 15.

Die Ausnehmung 15, das Betätigungselement 11 und das Abdeckmittel 13 weisen eine gemeinsame gedachte Achse 701 auf. Die Ausnehmung 15, das Betätigungselement 11 und das Abdeckmittel 13 sind konzentrisch angeordnet.

Das Abdeckmittel 13 weist eine Betätigungsfläche 17 auf, die beabstandet zu der Vorderfläche 19 des Betätigungselements 11 ist. Ebenfalls weist das Abdeckmittel 13 eine Seitenfläche 16 auf, die beabstandet zu der Seitenfläche 18 des Betätigungselements 11 ausgebildet ist.

Durch die Beabstandung der Vorderfläche 19 und der Betätigungsfläche 17 kann das transparente Abdeckmittel 13 weit aus dem Deckel 14 herausragen, während das teilweise lichtundurchlässige Betätigungselement 11 nur in geringem Maße aus dem Deckel 14 herausragt. Hierdurch bleibt der Lichtleiter 40, der im Wesentlichen plan mit dem Deckel 14 abschließt, auch für schräg vor dem Nottaster 10 stehende Benutzer gut sichtbar. Der Lichtleiter weicht maximal ±3 mm, bevorzugt maximal ±2 mm, besonders bevorzugt ± 1 mm von einem planen Abschluss mit dem Deckel 14 ab.

Dadurch, dass das Abdeckmittel 13 weit aus dem Deckel 14 herausragt, ist der Nottaster 10 für den Benutzer mit der flachen Hand bedienbar. Hierzu ist das Abdeckmittel 13 in der Betätigungsstellung 13.II plan mit dem Deckel 14 oder das Abdeckmittel 13 steht in der Betätigungsstellung 13.II gegen die Betätigungsrichtung 700 von dem Deckel 14 hervor. Anders ausgedrückt entspricht der Abstand ABS der Ausgangsstellung 13.1 und der Betätigungsstellung 13.II höchstens dem Abstand DF einer Erhebung 30 der Betätigungsfläche 17 zu dem Deckel 14. Ebenso entspricht der Betrag des Abstands AB der Betätigungsposition 11.II und der Ausgangsposition 11.I höchstens dem Abstand DF. In Figur 11 entsprechen der Abstand ABS und der Betrag des Abstands AB dem Abstand DF.

Der Nottaster 10 umfasst Leuchtmittel 41. Die Leuchtmittel 41 dienen dazu, den entriegelten und verriegelten Zustand der Türverriegelung 200 anzuzeigen. Bei mehreren Nottastern 10, 1010, 2010, 3010 zeigen die Leuchtmittel 41 den entriegelten und verriegelten Zustand der zugeordneten Türverriegelung oder Türverriegelungen 200, 1200, 2200, 3200 an. Die Leuchtmittel 41 sind konzentrisch um das Betätigungselement 11 angeordnet. Beispielsweise wird der entriegelte Zustand durch grünes Licht und der verriegelte Zustand durch rotes Licht angezeigt. Insbesondere emittieren alle Leuchtmittel 41 dasselbe Licht, um den verriegelten und den entriegelten Zustand anzuzeigen, zumindest sofern kein Gefahrenfall vorliegt.

Die Leuchtmittel 41 sind in zumindest zwei Gruppen ansteuerbar. Durch die unterschiedliche Ansteuerung sind z. B. Muster möglich, durch die dem Benutzer weitere Zustände des Sicherheitssystems 1 angezeigt werden. Durch die zusätzlichen Anzeigemöglichkeiten sind dem Benutzer und/oder dem Bediener auf kompakte und einfache Weise ohne zusätzliche Anzeigemittel eine Vielzahl von Zustände anzeigbar. Hierdurch wird die Sicherheit des Sicherheitssystems 1 erhöht.

In Figur 13 sind von den exemplarisch vorhandenen acht einzelnen Leuchtmitteln 41 sechs einzelne Leuchtmittel dargestellt, von denen drei Leuchtmittel mit den Bezugszeichen 41a, 41b, 41c versehen sind. Die einzelnen Leuchtmittel werden im Folgenden mit 41a, 41b, 41c usw. bezeichnet.

Jede der einzeln ansteuerbaren Gruppen von Leuchtmitteln 41 kann nur ein einzelnes Leuchtmittel 41a, 41b, 41c, usw. umfassen. In dem Ausführungsbeispiel der Figuren 11 bis 17 ist jedes Leuchtmittel 41a, 41b, 41c, usw. einzeln ansteuerbar. Jedes Leuchtmittel 41a, 41b, 41c, usw. ist jeweils als RGB-LED ausgebildet. Die Leuchtmittel 41a, 41b, 41c, usw. sind so ansteuerbar, dass jedes Leuchtmittel 41a, 41b, 41c, usw. mindestens vier verschiedene, bevorzugt mindestens fünf verschiedene Farben emittieren kann. Hierbei kann es sich z. B. um rotes, blaues, gelbes, grünes und pinkes Licht handeln.

Die Leuchtmittel 41 werden von der dritten Nottasterverarbeitungseinheit 22 angesteuert. Hierzu sind die Nottasterverarbeitungseinheit 22 und die Leuchtmittel 41 an einem Ringbus (nicht dargestellt) angeschlossen.

Die Leuchtmittel 41 sind auf der ersten Platine 60 angeordnet. Ebenfalls ist der akustische Alarmgeber 23 auf der ersten Platine 60 angeordnet. Der akustische Alarmgeber 23 wird von der dritten Nottasterverarbeitungseinheit 22 angesteuert.

Sind mehrere Türverriegelungen 200, 1200 dem Nottaster 10 zugeordnet, wie z. B. in Figur 4 dargestellt, so sind zumindest zwei Optionen denkbar. Zum einen kann der Nottaster 10 den entriegelten Zustand erst dann anzeigen, wenn alle dem Nottaster 10 zugeordneten Türverriegelungen 200, 1200 sich in dem entriegelten Zustand befinden. Hierbei wird der entriegelte Zustand erst angezeigt, wenn die ganze Fluchttürbreite der beiden Türflügel 3, 4 zur Flucht zur Verfügung steht. Alternativ zeigt der Nottaster 10 den entriegelten Zustand bereits dann an, wenn eine der Türverriegelungen 200, 1200 oder alle Türverriegelungen eines Türflügels 3, 4 sich in dem entriegelten Zustand befinden. Hierdurch wird die Fluchtmöglichkeit möglichst früh angezeigt, wenn bereits einer der Türflügel 3, 4 entriegelt ist. Die Optionen können von dem Bediener gewählt werden. Hierzu kann z. B. ein Schalter (nicht dargestellt) in dem Sicherheitssystem 1 vorgesehen sein.

Ein weiterer Zustand des Sicherheitssystems 1, der durch die in Gruppen ansteuerbaren Leuchtmittel 41 angezeigt wird, ist der Gefahrenfall. Hierbei können die Leuchtmittel 41 anzeigen, ob ein Brandmeldesignal vorliegt oder ob ein Betätigungssignal erzeugt wurde. Die Leuchtmittel 41 können derart angesteuert werden, dass das Fortschreiten der Zeitverzögerung der Entriegelung nach Erzeugung des Betätigungssignals durch die Leuchtmittel 41 angezeigt wird. Hierbei emittieren z. B. zunehmend weniger Leuchtmittel 41 Licht einer Farbe, insbesondere rotes Licht.

Als ein weiterer Zustand des Sicherheitssystems 1, das durch die Leuchtmittel 41 darstellbar ist, kann ein Fehler durch die Leuchtmittel 41 dargestellt werden. Der derart darstellbare Fehler kann ein Fehler des Sicherheitssystems 1 sein. Beispielsweise kann angezeigt sein, dass die Steuerungsvorrichtung 100, die Türverrriegelungssteuerung 200 oder die erste oder die zweite Nottasterverarbeitungseinheit 20, 21 des Sicherheitssystems 1 nicht betriebsbereit, defekt, ausgefallen, bewusst abgeschaltet oder entfernt worden ist. Der Fehler kann ein Fehler des mit dem Sicherheitssystem 1 verbundenen Alarmsystems, das nicht betriebsbereit, defekt, ausgefallen, bewusst abgeschaltet oder entfernt ist, sein.

Der Lichtleiter 40 umfasst mehrere Lichtleiterbereiche 44 (s. die Figuren 16 und 17). Jedem der Leuchtmittel 41a, 41b, 41c, usw. ist jeweils ein Lichtleiterbereich 44 zugeordnet. Der Lichtleiter 40 lässt sich gedanklich in die Lichtleiterbereiche 44 aufteilen. Zwischen den Lichtleiterbereichen 44 sind Aussparungen 46 vorgesehen. Durch die Aussparungen 46 verbleibt das Licht im Wesentlichen in den Lichtleiterbereichen 44.

Jeder Lichtleiterbereich 44 weist einen Weiterleitungsabschnitt 48 auf. Der Weiterleitungsabschnitt 48 ist in Transmissionsrichtung 702 über den Leuchtmitteln 41 angeordnet. Die Transmissionsrichtung 702 erfolgt entgegen der Betätigungsrichtung 700. Der Weiterleitungsabschnitt 48 dient zur Lichtleitung bis zu einem sich aufspreizenden Abschnitt 45 des Lichtleiterbereichs 44. Der sich aufspreizende Abschnitt 45 spreizt sich in Transmissionsrichtung 702 auf.

Der sich aufspreizende Abschnitt 45 schließt sich an den Weiterleitungsabschnitt 48 in Transmissionsrichtung 702 an. Der sich aufspreizende Abschnitt 45 dient dazu den Lichtstrahl des emittierten Lichts zu verbreitern. Der Weiterleitungsabschnitt 48 verbreitert sich weniger als der sich aufspreizende Abschnitt 45.

Der Lichtleiter 40 ist einstückig ausgebildet. Der Lichtleiter 40 ist materialeinheitlich, insbesondere monolithisch, ausgebildet. Der Lichtleiter 40 ist aus transluzentem Material ausgebildet.

Die Lichtleiterbereiche 44 weisen einen Verbindungabschnitt 49 auf. Der Verbindungsabschnitt 49 schließt sich in Transmissionsrichtung 702 an den sich aufspreizenden Abschnitt 45 an. Die Verbindungsabschnitte 49 der Lichtleiterbereiche 44 sind einstückig derart miteinander verbunden, dass sich der einstückige und materialeinheitliche Lichtleiter 40 ergibt.

Die Verbindungsabschnitte können eine Tiefe von 2 mm bis 6 mm, bevorzugt 3 mm bis 5 mm, besonders bevorzugt 3,5 mm bis 4,5 mm aufweisen. Hierdurch ist das Licht eines der Leuchtmittel 41a, 41b, 41c usw. nahezu auf einen Leuchtbereich 50a, 50b, 50c, 50d, 50e, 50f, 50g, 50h auf der zum Benutzer zeigenden Oberfläche 47 des Lichtleiters 40 beschränkt. Hierbei umfasst jeder Lichtleiterbereich 44 einen Leuchtbereich 50a, 50b, 50c, 50d, 50e, 50f, 50g, 50h.

Die Oberfläche 47 des Lichtleiters 40 entspricht einem Kreisring. Die Leuchtbereich 50a, 50b, 50c, 50d, 50e, 50f, 50g, 50h sind als Sektoren des Kreisrings ausgestaltet. Durch das Emittieren des Lichts eines Leuchtmittels 41a, 41b, 41c, usw. wird der dazugehörende Leuchtbereich 50a, 50b, 50c, 50d, 50e, 50f, 50g, 50h erleuchtet. Der Kreisring umschließt das Betätigungselement 11.

Die Leuchtmittel 41 sind derart ansteuerbar, dass zumindest ein Leuchtmittel 41a, 41b, 41c, usw. das Licht einer Farbe und zumindest ein weiteres Leuchtmittel 41a, 41b, 41c, usw. zeitgleich das Licht einer anderen Farbe emittiert. Beispielsweise können auf diese Weise die Leuchtbereiche 50a, 50b, 50e, 50f Licht einer Farbe anzeigen und die Leuchtbereiche 50c, 50d, 50g und 50h Licht einer weiteren Farbe. Während die Leuchtbereiche 50a, 50b, 50e, 50f z. B. kontinuierlich beleuchtet sind, können die Leuchtbereiche 50c, 50d, 50g und 50h von Leuchtmitteln 41, die blinkendes Licht emittieren, beleuchtet sein.

Sind z. B. zunächst die Leuchtbereiche 50a, 50b, 50e, 50f vom Licht einer ersten Farbe beleuchtet und die Leuchtbereiche 50c, 50d, 50g und 50h vom Licht einer zweiten Farbe; anschließend die Leuchtbereiche 50a, 50h, 50d, 50e vom Licht der ersten Farbe beleuchtet und die Leuchtbereiche 50b, 50c, 50f und 50g vom Licht der zweiten Farbe; anschließend die Leuchtbereiche 50h, 50g, 50d, 50c vom Licht der ersten Farbe beleuchtet und die Leuchtbereiche 50a, 50b, 50e und 50f vom Licht der zweiten Farbe, so entsteht der Eindruck eines umlaufenden Farbfensters.

Die sich gegenüberliegenden Leuchtbereiche 50, d. h. die Leuchtbereiche 50, die auf einer durch die gedachte Ache 701 führende Gerade liegen, in Figur 14 nämlich 50a und 50e bzw. 50b und 50f bzw. 50c und 50g bzw. 50d und 50h, sind bevorzugt in derselben Weise d. h. in derselben Farbe und derselben Blinkfrequenz beleuchtet. Somit ist das Muster auch für schräg vor dem Nottaster 10 stehende Benutzer zu erahnen, auch wenn durch das Betätigungselement 11 zumindest eines der sich gegenüberliegende Leuchtbereiche 50 verdeckt.

Damit der Lichtleiter 40 möglichst wenig verdeckt ist, steht der Illuminierbereich 32 höchstens 10 mm, bevorzugt höchstens 7 mm, besonders bevorzugt höchstens 5 mm über dem Lichtleiter 40 hervor.

Der Nottaster 10 kann einen Helligkeitssensor (nicht dargestellt) umfassen. Der Helligkeitssensor misst die Umgebungshelligkeit des Nottasters 10. Lässt die Umgebungshelligkeit nach, so wird auch die Lichtstärke des von den Leuchtmitteln 41 emittierten Lichts verringert.

Über das Bluetoothmodul 64 können über ein mobiles Kommunikationsgerät Parameter eingestellt werden, z. B. in welcher Art und Weise die Leuchtmittel bei welchem Zustand des Sicherheitssystems 1 anzusteuern sind. Unter die Parameter fallen die Blinkfrequenzen der Leuchtmittel 41, ob ein durchgängiges oder ein blinkendes Licht emittert werden soll, welcher Zustand durch welche Farbe angezeigt werden soll. Die Einstellungen sind nach der Parametrierung in einem elektronischen Speicher des Sicherheitssystems 1, insbesondere der Steuerungsvorrichtung 100, hinterlegt. Ebenfalls kann das Anzeigen bestimmter Zustände aus Sicherheitsgründen nicht für den Bediener wählbar sein und ständig in dem elektronischen Speicher hinterlegt sein. Der Bediener kann Zuständen des Sicherheitssystems 1 selber auswählen, die der Bediener durch die Leuchtmittel 41 anzeigen möchte. Hierzu sind Farben und/oder Muster durch die Leuchtmittel 41 emittierbar, die keinem Zustand vorbestimmt zugeordnet sind. Beispielsweise kann der Bediener wählen, welchen Zustand der Bediener durch blaues Licht anzeigen lassen möchte. Neben der Parametrierung über das Bluetoothmodul 64 ist die Parametrierung über die Wachvorrichtung 301 möglich.

Die Änderung des Zustands der Türverriegelung 200 wird dann angezeigt, nachdem die Türverriegelungssteuerung 201 die Zustandsänderung an die Steuerungsvorrichtung 100 kommuniziert hat. Die Steuerungsvorrichtung 100 steuert daraufhin die Leuchtmittel 41 an oder veranlasst eine Ansteuerung der Leuchtmittel 41.

Bei einer Inbetriebnahme des Sicherheitssystems 1 werden in festen zeitlichen Abständen nacheinander mehrere Initialisierungsansichten durch die Leuchtmittel 41 erzeugt. In einer der Initialisierungsansichten werden mögliche freigeschaltete Funktionen der Steuerungsvorrichtung 100 angezeigt. In einer zweiten Initialisierungsansicht werden die in das Sicherheitssystem 1 einbindbare Nottaster 10, 1010, 2010, 3010 und Türverriegelungen 200, 1200, 2200, 3200 angezeigt, wobei der Status fehlerfrei/ fehlerhaft/nicht vorhanden angezeigt wird. In einer dritten Initialisierungsansicht werden der Status von Ein- und Ausgänge angezeigt.

Der zentrale Notfalltaster 302 ist nahezu identisch wie der Nottaster 10 aufgebaut. Insbesondere entspricht das Betätigungselement 11 in Funktion und Aufbau dem Notfalltasterbetätigungselement 306. Der Schalter 63 entspricht dem Notfalltasterschalter 307. Ebenfalls umfasst der zentrale Notfalltaster 302 ein dem Rückstellmittel 12 entsprechendes Rückstellmittel. Der zentrale Notfalltaster 302 umfasst eine erste und eine zweite Platine und/oder eine Montageplatte, die entsprechend der ersten Platine 60, der zweiten Platine 61 bzw. der Montageplatte 62 aufgebaut und miteinander verbunden sind. Auf der ersten Platine des zentralen Notfalltasters 302 sind der Alarmgeber 309 und die Leuchtmittel 313 entsprechend dem Alarmgeber 23 und den Leuchtmitteln 41 angeordnet. Auf der zweiten Platine des zentralen Notfalltasters 302 sind die erste bis dritte Notfallverarbeitungseinheit 303, 304, 305 angeordnet. Der Notfalltasterschalter 307 endet auf der ersten Platine des zentralen Notfalltasters 302. Bei einer Betätigung des Notfalltasterschalters 307 werden ein erster und ein zweiter Stromkreis auf der ersten Platine geöffnet, was kabelfrei durch die erste und die zweite Notfallverarbeitungseinheit 303, 304 erfassbar ist. Hierzu sind die erste und die zweite Platine über Stecker verbunden. Der Lichtleiter des zentralen Notfalltasters 302 entspricht in Aufbau und Funktion dem Lichtleiter 40. Die Leuchtmittel 313 sind entsprechend den Leuchtmittel 41 ansteuerbar.

Es ist denkbar, dass bei dem zentralen Notfalltaster 302 ein dem Abdeckmittel 13 entsprechendes Abdeckmittel 13 anders ausgestaltet ist oder fehlt. Die Leuchtmittel 313 dienen insbesondere nicht zur optischen Darstellung eines Verriegelungszustands eines Nottasters 10. Die Leuchtmittel 313 dienen zur optischen Darstellung der ersten und der zweiten Verzögerungszeitdauer und/oder zur optischen Darstellung, dass eine Aufhebehandlung möglich ist.

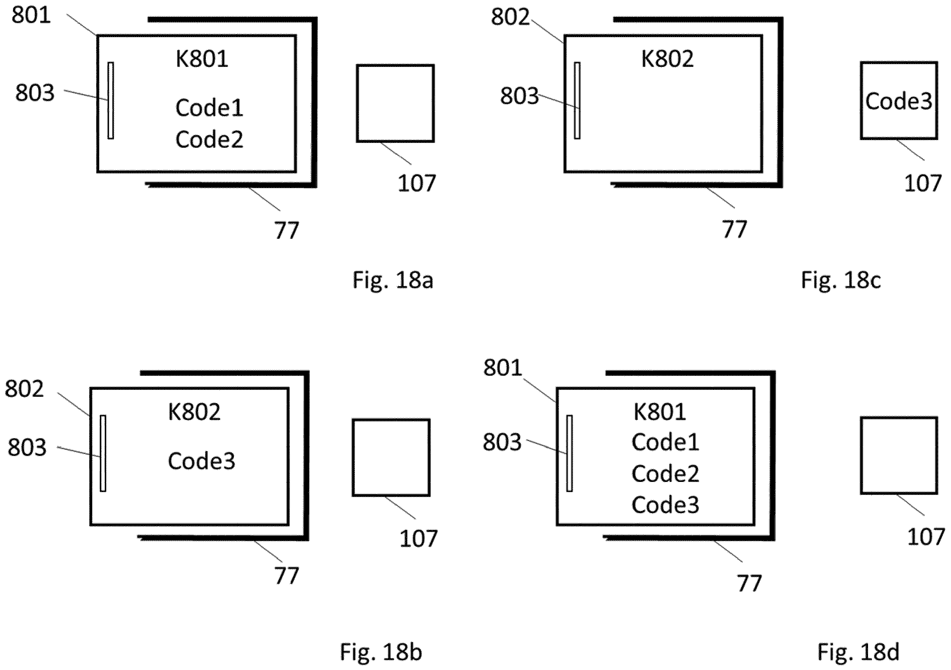

Das erfindungsgemäße Sicherheitssystem 1 muss nicht zwingend alle Funktionen, die in der Beschreibung zu zumindest eine der Figuren 1 bis 10 erwähnt ist, ausführen können. Vielmehr sind zwar in dem Sicherheitssystem 1 die Funktionen, die in der Beschreibung zu zumindest eine der Figuren 1 bis 10 erwähnt sind, hinterlegt. Um die Funktionen jedoch ausführen zu können, müssen die Funktionen freigeschaltet sein. Dieses erfolgt, indem die Steuerungsvorrichtung 100 mit einem Kommunikationsmodul 801 kommuniziert. Das Kommunikationsmodul 801 ist als eine Chipkarte ausgeführt. Das Kommunikationsmodul 801 umfasst einen Speicher, in dem zumindest ein Code zur Freischaltung zumindest einer Funktion hinterlegt ist. Das Kommunikationsmodul 801 umfasst einen Mikroprozessor, der nur zur Verschlüsselung des Codes dient. Das Kommunikationsmodul 801 wird in eine Aufnahme 77 der Steuerungsvorrichtung 100 eingeschoben (s. Fig. 18a). Durch die Anordnung in der Aufnahme 77 wird das Kommunikationsmodul 801 form- und/oder kraftschlüssig mechanisch in der Aufnahme 77 gehalten. Zugleich wird das Kommunikationsmodul 801 durch die Anordnung in der Aufnahme 77 elektrisch kontaktiert, so dass die Steuerungsvorrichtung 100 den zumindest einen Code aus dem Kommunikationsmodul 801 auslesen kann. Die Steuerungsvorrichtung 100 und das Kommunikationsmodul 801 sind hierbei drahtgebunden (nicht dargestellt).

Zum Auslesen des Codes muss zunächst die Steuerungsvorrichtung 100 mit Hilfe eines Passworts ein Zugang zu dem Kommunikationsmodul 801 erhalten. Die Steuerungsvorrichtung 100 muss den zumindest einen Code entschlüsseln, bevor die Funktion freigeschaltet werden kann. Durch das Freischalten der Funktion wird der Programmcode, mit dessen Hilfe die Funktion ausführbar ist, freigeschaltet.

Zur Freischaltung der Funktion wird der Programmcode, mit dessen Hilfe die Funktion ausführbar ist, freigeschaltet. Ist der Programmcode auf dem Nottaster 10 hinterlegt und sind die Steuerungsvorrichtung 100 und der Nottaster 10 durch das erste Bussystem 400 miteinander verbunden, so veranlasst die Steuerungsvorrichtung 100 nach Auslesen des Codes des Kommunikationsmoduls 801 eine Freischaltung in dem Nottaster 10 über das erste Bussystem 400. Ist der Programmcode in der Türverriegelungssteuerung 201 hinterlegt, so veranlasst die Steuerungsvorrichtung 100 nach dem Auslesen des Codes des Kommunikationsmoduls 801 eine Freischaltung in der Türverriegelungssteuerung 201 über das erste Bussystem 801.

Ein Code kann eine Funktion oder mehrere Funktionen, insbesondere Funktionsblöcke, freischalten.

In dem Parametrierungsprogramm können nur Parameter zu den Funktionen eingestellt werden, die zuvor freigegeben wurden. Nur diese Parameter werden auf dem Bildschirm angezeigt.

Die Funktion bleibt nur freigeschaltet, wenn wiederholend, insbesondere in regelmäßigen Zeitabständen, der Code erneut aus dem Kommunikationsmodul 801 ausgelesen wird. Hierzu können vorgegebene, nicht einstellbare Zeitabstände in der Steuerungsvorrichtung 100 hinterlegt sein. Nach Ablauf des vorgegebenen Zeitabstandes sperrt die Steuerungsvorrichtung 100 die Funktion, falls der zugehörige Code nicht aus dem Kommunikationsmodul 801 ausgelesen werden konnte. Wird die Funktion durch den Nottaster 10 durchgeführt, der mit der Steuerungsvorrichtung 100 über das erste Bussystem 400 verbunden ist, so veranlasst die Steuerungsvorrichtung 100 über das erste Bussystem 400 eine Sperrung der Funktion. Wird die Funktion durch die Türverriegelungssteuerung 201 durchgeführt, die mit der Steuerungsvorrichtung 100 über das erste Bussystem 400 verbunden ist, so veranlasst die Steuerungsvorrichtung 100 über das erste Bussystem 400 eine Sperrung der Funktion.

Auf dem Kommunikationsmoduls 801 können mehrere Codes Code1, Code2 für unterschiedliche Funktionen gespeichert sein (s. Fig. 18a).

Soll eine zusätzliche Funktion freigegeben werden, so ist es denkbar, das Kommunikationsmodul 801 aus der Aufnahme 77 zu entfernen und ein weiteres Kommunikationsmodul 802 in die Aufnahme 77 einzuschieben (s. Fig. 18b). Das Kommunikationsmodul 801 wird im Folgenden als Muttermodul 801 bezeichnet. Das weitere Kommunikationsmodul 802 wird im Folgenden als Hilfsmodul bezeichnet. Das Hilfsmodul 802 ist als eine Chipkarte ausgestaltet. Das Hilfsmodul 802 umfasst einen Speicher, in dem zumindest ein Code zur Freischaltung der zusätzlichen Funktion hinterlegt ist. Das Hilfsmodul 802 umfasst einen Mikroprozessor, der nur zur Verschlüsselung des Codes dient. Der Code Code3, der auf dem Hilfsmodul 802 hinterlegt ist, wird von der Steuerungsvorrichtung 100 ausgelesen (s. Fig. 18b). Zum Auslesen des Codes Code3 muss zunächst die Steuerungsvorrichtung 100 mit Hilfe eines Passworts ein Zugang zu dem Hilfsmodul 802 erhalten. Die Steuerungsvorrichtung 100 muss den zumindest einen Code entschlüsseln, bevor die Funktion freigeschaltet werden kann. Der Code Code3 des Hilfsmoduls 802 wird in einem Speicher 107 der Steuerungsvorrichtung 100 gespeichert (s. Fig. 18c). Danach wird der Code des Hilfsmoduls 802 auf dem Hilfsmodul 802 gelöscht (s. Fig. 18c). Das Hilfsmodul 802 wird aus der Aufnahme 77 entfernt. Danach wird das Muttermodul 801 in die Aufnahme 77 eingeschoben (s. Fig. 18d). Der Code des Hilfsmoduls 802 wird auf dem Muttermodul 801 gespeichert (s. Fig. 18d). Der Code wird aus dem Speicher der Steuerungsvorrichtung 100 gelöscht (s. Fig. 18d). Die zusätzliche Funktion wird freigeschaltet.

Bei einem Muttermodul 801 wird der Code hingegen nicht in der Steuerungsvorrichtung 100 gespeichert (s. Fig. 18a, d). Bei einem Muttermodul 801 wird der Code nicht gelöscht. Vielmehr dient das Muttermodul 801 zu einer dauerhaften Anordnung in der Aufnahme 77. Die auf dem Muttermodul 801 gespeicherten Codes Code1, Code2, Code3 werden wiederholend ausgelesen. Die Steuerungsvorrichtung 100 entscheidet anhand einer Kennung K801, K802 des Kommunikationsmoduls 801, 802, ob es sich um ein Muttermodul 801 oder um ein Hilfsmodul 802 handelt. Die Kennung K801, K802 ist insbesondere auf dem Muttermodul 801 und dem Hilfsmodul 802 elektronisch gespeichert. Die Kennung K801 des Muttermoduls 801 unterscheidet sich von der Kennung K802 des Hilfsmoduls 802.

Das Einschieben und Entfernen aus der Aufnahme 77 erfolgt jeweils manuell. Die übrigen Vorgänge erfolgen automatisch.

Das Einschieben und Entfernen aus der Aufnahme 77 kann einem Bediener vorbehalten sein. Hierzu ist die Aufnahme 77 für einen unbefugten Benutzer unzugänglich angeordnet. Insbesondere wird der Sabotageschalter 66 bei einem unbefugten Versuch, an die Aufnahme zu gelangen, betätigt. Die Aufnahme kann zwischen der ersten Platine 60 und der zweiten Platine 61, z. B. auf einer Unterseite der ersten Platine 60, angeordnet sein.

Damit das Sicherheitssystem 1 funktionsfähig wird, muss ein Muttermodul 801 in einer Aufnahme 77 des Sicherheitssystems 1 angeordnet werden. Damit das Sicherheitssystem 1 länger als den vorgegebenen Zeitabstand funktionsfähig bleibt, muss das Muttermodul 801 in der Aufnahme 77 verbleiben.

Jeder Nottaster 10, 10', 1010, 1010', 2010, 2010', 3010 umfasst eine Aufnahme 77. Genau ein Muttermodul 801 ist für jedes erste Bussystem 400, 400' des Sicherheitssystems 1 notwendig und vorgesehen. Nur wenn das Muttermodul 801 in die Aufnahme eines Nottasters 10, 10', 1010, 1010', 2010, 2010', 3010 eingeschoben ist, so dient der Nottaster 10, 10', 1010, 1010', 2010, 2010', 3010 zugleich als Steuerungsvorrichtung 100 für das entsprechende erste Bussystem 400, 400'. Bei den übrigen Nottaster 10, 10', 1010, 1010', 2010, 2010', 3010 des Sicherheitssystems 1, in deren Aufnahme sich kein Muttermodul 801 befindet, sind zwar dieselben Programmcodes wie in der Steuerungsvorrichtung 100 hinterlegt. Ohne Muttermodul 801 sind die Programmcodes jedoch nicht freigeschaltet, so dass die übrigen Nottaster 10, 10', 1010, 1010', 2010, 2010', 3010 nicht als Steuerungsvorrichtung 100 dienen können. Dadurch, dass sich das Muttermodul 801 in der Aufnahme 77 befindet, dient der Nottaster 10, 10', 1010, 1010', 2010, 2010', 3010 als Steuerungsvorrichtung 100.

Soll die Steuerungsvorrichtung 100 separat von den Nottastern 10, 10', 1010, 1010', 2010, 2010', 3010 und den Türverriegelungen 200, 200', 1200, 1200', 2200, 2200', 3200 ausgebildet werden, so wird ein Muttermodul 801 in eine Aufnahme 77 der Verarbeitungselektronik 101 eingeschoben. Dadurch, dass sich das Muttermodul 801 in der Aufnahme 77 befindet, ist die Verarbeitungselektronik 101 fähig, die Funktionen der Steuerungsvorrichtung 100 durchzuführen.

Umfasst das Sicherheitssystem 1 mehrere Subsysteme 5,6 und damit mehrere erste Bussysteme 400, 400', so umfasst das Sicherheitssystem 1 genau die gleiche Anzahl an Muttermodulen 801, 801', wie es Subsystemen 5, 6 gibt (s. Figur 10). Der Nottaster 10', der mit dem Muttermodul 801' kommuniziert, und die Verarbeitungselektronik 101 der Steuerungsvorrichtung 100 aus Figur 10, die mit dem Muttermodul 801 kommuniziert, sind zugleich vorgesehen, um mit dem zweiten Bussystem 401 verbunden zu werden.

Das Muttermodul 801, 801' kann für jedes Subsystem 5,6 unterschiedliche Codes enthalten und damit unterschiedliche Funktionen freischalten. So kann z. B. das Muttermodul 801' des zweiten Subsystems 6 einen Code für die selektive Zuordnung der Türverriegelungen 200', 1200', 2200' zu den Nottastern 10', 1010', 2010' umfassen. Hingegen ist der Code für eine selektive Zuordnung von Türverriegelungen zu Nottastern auf dem Muttermodul 801 für das Subsystem 5 nicht notwendig.

Das Kommunikationsmodul 801, 801', 802 kann einen Spalt 803 aufweisen, durch den ein insbesondere selbstklebendes Band geführt ist. Das selbstklebende Band dient zum manuellen Entfernen des Kommunikationsmoduls 801, 801', 802 aus der Aufnahme 77. Das selbstklebende Band umfasst eine Information über die Funktionen, die durch die auf dem jeweiligen Kommunikationsmodul 801, 801', 802 gespeicherten Codes freischaltbar sind. Die Information kann eine Farbkennung, ein QR-Code und/oder ein Bar-Code sein.

Alternativ kann das Kommunikationsmodul 801, 801', 802 als Chipkarte mit einem flexiblen Abschnitt ausgebildet sein. Teil aus der Ausnahme 77 herausragender Teil der Chipkarte kann mit der Information, d. h. der Farbkennung, dem QR-Code und/oder dem Bar-Code versehen sein.

Ein einmal in einem Sicherheitssystem 1 eingesetztes Muttermodul 801 kann in einer Aufnahme 77 eines anderen erfindungsgemäßen Sicherheitssystem 1 erneut funktionsfähig eingesetzt werden.

## Patentansprüche

1. Sicherheitssystem (1) zur Steuerung und/oder einer Überwachung von zumindest einer Türverriegelung (200), insbesondere zur Fluchtwegsicherung,
mit mehreren Auslöseelementen (10, 10', 1010, 1010', 2010, 2010', 3010), insbesondere Nottastern (10),
wobei das Sicherheitssystem (1) zur Ausführung zumindest einer Funktion zur Steuerung und/oder Überwachung der zumindest einen Türverriegelung (200) ausgebildet ist,
wobei das Sicherheitssystem (1) mehrere erste Bussysteme (400, 400') umfasst, die sich an ein zweites Bussystem anschließen, wobei jedes der mehreren ersten Bussysteme (400, 400') jeweils zumindest mit einem der mehreren Auslöseelemente (10, 10', 1010, 1010', 2010, 2010', 3010) und zumindest mit einer Türverriegelungssteuerung (201) verbunden ist,
wobei jedes der mehreren ersten Bussysteme (400, 401) eine Steuerungsvorrichtung (100, 100') aufweist,
wobei das Sicherheitssystem (1) eine Zentrale (300, 301) umfasst und die Steuerungsvorrichtung (100, 100') jedes der mehreren ersten Bussystem (400, 400') und die Zentrale (300, 301) über das zweite Bussystem (401) miteinander verbunden sind,
**dadurch gekennzeichnet, dass** das Sicherheitssystem (1) für jedes der ersten Bussysteme (400, 400') ein tragbares Kommunikationsmodul (801, 801', 802) umfasst,
wobei bei jedem der mehreren ersten Bussysteme (400, 400') ein Busteilnehmer (10, 10', 1010, 1010', 2010, 100, 201) des ersten Bussystems (400, 400') mit einem Kommunikationsmodul (801, 801', 802) in Kommunikationsverbindung steht,
wobei jede Steuerungsvorrichtung (100, 100') des Sicherheitssystems (1) eine Kommunikationsschnittstelle umfasst, wobei die Kommunikationsschnittstelle zur Kommunikation mit dem Kommunikationsmodul (801, 801', 802) dient, wobei zur Ausführung der Funktion und/oder zur Ausführung einer weiteren Funktion des Sicherheitssystems (1) eine Kommunikation über die Kommunikationsschnittstelle mit dem Kommunikationsmodul (801, 801', 802) erfolgt oder zuvor, insbesondere wiederholend, erfolgt ist,
wobei die Kommunikation mit dem Kommunikationsmodul (801, 801', 802) freischaltbar ist,
wobei die Steuerungsvorrichtung (100) eine Aufnahme (77) umfasst, um das Kommunikationsmodul (801, 801', 802) reversibel lösbar und/oder elektrisch kontaktierend aufzunehmen, wobei die Aufnahme (77) als eine Chipkartenaufnahme ausgebildet ist, wobei die Aufnahme (77) für einen unbefugten Benutzer unzugänglich in der Steuerungsvorrichtung (1) angeordnet ist, indem ein Sabotageschalter (66) des Sicherheitssystems (1) beim Zugang zu der Aufnahme bei einer fehlenden Authentifizierung des Benutzers einen Alarm auslöst.

2. Sicherheitssystem (1) nach Anspruch 1, **dadurch gekennzeichnet, dass** die Funktion für das Sicherheitssystem (1) nur ausführbar ist, wenn dem Sicherheitssystem (1) die Information auf dem Kommunikationsmodul (801, 801', 802), insbesondere auf einem Muttermodul (801, 801'), zur Verfügung steht und/oder das Sicherheitssystem (1), insbesondere die Steuerungsvorrichtung (100), derart ausgebildet ist, dass das Sicherheitssystem (1), insbesondere die Steuerungsvorrichtung (100), insbesondere in vorgegebenen Zeitabständen Kenntnis von der Information auf dem Kommunikationsmodul (801, 801', 802) erlangt, und die Funktion für das Sicherheitssystem (1) nur ausführbar ist, wenn zuvor innerhalb einer vorgegebenen Zeitspanne das Sicherheitssystem (1) Kenntnis von der Information erlangt hat.

3. Sicherheitssystem (1) nach Anspruch 1 oder 2, **dadurch gekennzeichnet, dass** die Funktion mit Hilfe eines von dem Kommunikationsmodul (801, 801', 802) empfangenen Codes (Code1, Code2, Code3), insbesondere mit Hilfe eines von dem Kommunikationsmodul (801, 801', 802) empfangenen verschlüsselten Codes (Code1, Code2, Code3), freischaltbar ist.

4. Sicherheitssystem (1) nach einem der vorhergehenden Ansprüche, **dadurch gekennzeichnet, dass** durch das Sicherheitssystem (1) eine Freigabeprüfung wiederholend durchführbar ist, wobei, wenn die Funktion zuvor freigeschaltet wurde, bei einer negativen Freigabeprüfung die zuvor freigeschaltete Funktion gesperrt wird.

5. Sicherheitssystem (1) nach einem der vorhergehenden Ansprüche, **dadurch gekennzeichnet, dass** genau ein Busteilnehmer (10, 10', 1010, 1010', 2010, 100, 201) jedes der mehreren ersten Bussysteme (400, 400') mit dem Kommunikationsmodul (801, 801', 802) in Kommunikationsverbindung steht, wobei der genau eine Busteilnehmer (10, 10', 1010, 1010', 2010, 100, 201) des ersten Bussystems (400, 400'), der mit dem Kommunikationsmodul (801, 801', 802) in Kommunikationsverbindung steht, mit dem zweiten Bussystem (401) verbunden oder verbindbar ist.

6. Sicherheitssystem (1) nach einem der vorhergehenden Ansprüche, **dadurch gekennzeichnet, dass** ein Auslöseelement (10, 10', 1010, 1010', 2010, 2010', 3010) oder eine Verarbeitungselektronik (101) die Aufnahme (77) umfasst und durch das Einsetzen des Kommunikationsmoduls (801, 801', 802), insbesondere des Muttermoduls (801, 801'), in die Aufnahme (77) das Auslöseelement (10, 10', 1010, 1010', 2010, 2010', 3010) oder die Verarbeitungselektronik (101) als Steuerungsvorrichtung (100) fungieren und/oder nach dem Entfernen des Kommunikationsmoduls (801, 801', 802), insbesondere des Muttermoduls (801, 801'), das Auslöseelement (10, 10', 1010, 1010', 2010, 2010', 3010) oder die Verarbeitungselektronik (101) unmittelbar oder spätestens nach dem vorgegebenen Zeitraum die Funktion der Steuerungsvorrichtung (100) verliert.

7. Sicherheitssystem (1) nach einem der vorhergehenden Ansprüche, **dadurch gekennzeichnet, dass** mehrere Auslöseelemente (10, 10', 1010, 1010', 2010, 2010', 3010) des Sicherheitssystems (1) jeweils eine Kommunikationsschnittstelle umfassen, so dass die Auslöseelemente (10, 10', 1010, 1010', 2010, 2010', 3010) jeweils ausgebildet sind, durch Kommunikation mit dem Kommunikationsmodul (801, 801', 802), insbesondere mit dem Muttermodul (801, 801'), als Steuerungsvorrichtung (100) zu dienen, wobei nur das zumindest eine Auslöseelement (10, 10', 1010, 1010', 2010, 2010', 3010), das mit einem Kommunikationsmodul (801, 801', 802) , insbesondere mit dem Muttermodul (801, 801'), in Kommunikationsverbindung steht, als Steuerungsvorrichtung (100) dient.

8. Sicherheitssystem (1) nach einem der vorhergehenden Ansprüche, **dadurch gekennzeichnet, dass** die Funktion, zu deren Ausführung die Kommunikation über die Kommunikationsschnittstelle erfolgt oder erfolgt ist, zumindest eine der folgenden Funktionen ist:
a. das Sicherheitssystem (1) ist ausgeführt zum Veranlassen einer Ansteuerung oder zur Ansteuerung zumindest eines Türverriegelungsmechanismus (205) zur Entriegelung in Folge der Betätigung des Auslöseelements (10, 10', 1010, 1010', 2010, 2010', 3010),
b. das Sicherheitssystem (1) ist ausgeführt zum Veranlassen einer Ansteuerung oder zur Ansteuerung zumindest eines Türverriegelungsmechanismus (205) der Türverriegelung zur Entriegelung nach Empfang eines Brandmeldesignals,
c. das Sicherheitssystem (1) ist ausgeführt zur Zeitverzögerung des Veranlassens einer Ansteuerung oder der Ansteuerung des Türverriegelungsmechanismus (205) gemäß der Funktion a.), wobei das Sicherheitssystem (1) insbesondere ausgeführt ist, innerhalb einer ersten Zeitverzögerungsdauer die Ansteuerung um eine zweite Zeitverzögerungszeitdauer zu verzögern;
d. das Sicherheitssystem (1) ist ausgeführt zum Verhindern des Veranlassens einer Ansteuerung oder eines Ansteuerns des Türverriegelungsmechanismus (205) zur Entriegelung nach Betätigung des Auslöseelements (10, 10', 1010, 1010', 2010, 2010', 3010), wenn sich das Auslöseelement (10, 10', 1010, 1010', 2010, 2010', 3010) in einem deaktivierten Zustand befindet;
e. das Sicherheitssystem (1) ist ausgeführt zum Veranlassen einer Ansteuerung oder zum Ansteuern des Verriegelungsmechanismus (205) zur Wiederverriegelung nach der Funktion a., sofern eine Aufhebungsbedingung erreicht ist, wobei insbesondere die Aufhebungsbedingung erreicht wird:
▪ nach einer Aufhebungshandlung am Auslöseelement (10, 10', 1010, 1010', 2010, 2010', 3010), das zur Anordnung an oder nahe der Tür bestimmt ist, und/oder einer Authentifizierung;
▪ optional nach einem Ablauf einer vorbestimmten Zeitspanne und bei einem Fehlen eines Signals über ein Öffnen der Tür (2) innerhalb der vorbestimmten Zeitspanne;
▪ optional nach einem Ablauf einer vorbestimmten Zeitspanne nach Erhalt eines Aufhebesignals einer zentralen Fluchtwegsteuerung (300) und bei einem Fehlen eines Signals über ein Öffnen der Tür (2) innerhalb der vorbestimmten Zeitspanne;
f. das Sicherheitssystem (1) ist ausgeführt zum Veranlassen eines Freischaltens eines Audio- und/oder Videomoduls (510), wobei insbesondere das Audio- und/oder Videomodul (510) ausgeführt ist, eine Audio- und/oder Videoaufnahme (510) an eine Wachvorrichtung (301) zu übermitteln,
g. das Sicherheitssystem (1) ist ausgeführt zum Veranlassen einer Ansteuerung oder zur Ansteuerung zumindest eines Türverriegelungsmechanismus (205) zur Entriegelung in Folge der Betätigung des Auslöseelements (10, 10', 1010, 1010', 2010, 2010', 3010), wobei eine Anzahl von Türverriegelungssteuerungen (201) und eine Anzahl von Auslöseelementen (10, 1010, 1010', 2010, 2010', 3010) über das erste Bussystem (400) miteinander verbunden sind und die Anzahl von Türverriegelungssteuerungen (201) der Anzahl von Auslöseelementen (10, 1010, 1010', 2010, 2010', 3010) derart zugeordnet sind, dass bei einer Betätigung eines der Auslöseelemente (10, 1010, 1010', 2010, 2010', 3010) nur die eine dem Auslöseelement (10, 1010, 1010', 2010, 2010', 3010) zugeordnete Türverrieglungssteuerung (201) oder die mehreren dem Auslöseelement (10, 1010, 1010', 2010, 2010', 3010) zugeordneten Türverrieglungssteuerungen (201) den jeweiligen Türverriegelungsmechanismus (205) zur Entriegelung ansteuern,
h. das Sicherheitssystem (1) ist ausgeführt zum Veranlassen einer Ansteuerung oder zum Ansteuern des Türverriegelungsmechanismus (205) zur Entriegelung nach Empfang eines positiven Authentifizierungssignals, wobei insbesondere über einen Buseingang das positive Authentifizierungssignal empfangbar ist,
i. das Sicherheitssystem (1) ist ausgeführt zum Veranlassen einer Ansteuerung oder zum Ansteuern des Türverriegelungsmechanismus (205) zur Entriegelung zu einer vorgegebenen Zeit;
j. das Sicherheitssystem (1) ist ausgeführt zur Verhinderung der Ansteuerung eines weiteren Türverriegelungsmechanismus (205) nach erfolgter Ansteuerung eines ersten Türverriegelungsmechanismus (205) bis zum Vorliegen einer Bedingung derart, dass eine Schleuse gebildet ist,
k. das Sicherheitssystem (1) ist ausgeführt zum Veranlassen einer Ansteuerung oder zum Ansteuern des Verriegelungsmechanismus (205) zur automatischen Wiederverriegelung nach einem Ablauf einer vorbestimmten Zeitspanne insbesondere nach der Funktionen h., i. und/oder j.
l. das Sicherheitssystem (1) ist ausgeführt zum Veranlassen einer Ansteuerung oder zum Ansteuern des Verriegelungsmechanismus (205) zur automatischen Wiederverriegelung nach dem Empfang eines Signals über einen geschlossenen Zustand der Tür insbesondere nach Durchführen der Funktionen h. und/oder j., wobei vorzugsweise der geschlossene Zustand der Tür durch zumindest eine Türzustandsüberwachungsvorrichtung (204, 206) detektierbar ist;
m. das Sicherheitssystem (1) ist ausgeführt zum Veranlassen eines Ansteuerns oder zum Ansteuern eines akustischen Alarmgebers (23) zur Ausgabe eines Alarms in Abhängigkeit von einem Signal der Türzustandsüberwachungsvorrichtung (204, 206) über das Öffnen der Tür, insbesondere wenn keine Berechtigung zur Begehung der Tür vorliegt;
n. das Sicherheitssystem (1) ist ausgeführt zur Kommunikation über ein Funkmodul (64) vorzugsweise zur Parametrisierung des Sicherheitssystems (100), wobei die Parametrisierung bevorzugt über ein mobiles Kommunikationsgerät ausführbar ist;
o. das Sicherheitssystem (1) ist ausgeführt zur Veranlassen eines Ansteuerns oder zum Ansteuern eines akustischen Alarmgebers (23) zur Ausgabe eines akustischen Alarms in Folge einer Betätigung des Auslöseelements (10, 10', 1010, 1010', 2010, 2010', 3010) oder nach Empfang eines Brandmeldesignals,
p. das Sicherheitssystem (1) ist ausgeführt zum Veranlassen eines Ansteuerns oder zum Ansteuern eines Anzeigegeräts (41) zur optischen Darstellung eines Verriegelungszustands der Türverriegelung (200),
q. das Sicherheitssystem (1) ist ausgeführt zum Veranlassen eines Ansteuerns oder zum Ansteuern einer Anzeigevorrichtung (41) zur optischen Darstellung der zeitverzögerten Ansteuerung des Türverriegelungsmechanismus (205), insbesondere zur Entriegelung und insbesondere nach Betätigung des Auslöseelements (10, 10', 1010, 1010', 2010, 2010', 3010);
r. das Sicherheitssystem (1) ist ausgeführt zum Veranlassen eines Ansteuerns oder zum Ansteuern einer Anzeige (41) zur visuellen Darstellung eines Alarmzustands insbesondere in Folge einer Betätigung des Auslöseelements (10, 10', 1010, 1010', 2010, 2010', 3010) oder nach Empfang eines Brandmeldesignals,
s. das Sicherheitssystem (1) ist ausgeführt zum Veranlassen eines Ausgebens eines akustischen und/oder visuellen Alarms, falls eine Wiederverriegelung fehlschlägt, insbesondere die Tür geöffnet bleibt, was über die Türzustandsüberwachungsvorrichtung detektierbar ist,
t. das Sicherheitssystem (1) ist ausgeführt zum Herstellen und/oder zum Aufrechterhalten einer Kommunikationsverbindung (401, 403) zwischen der Steuerungsvorrichtung (100) und einer Zentrale, insbesondere einer zentralen Fluchttürsteuerung (300), einer Wachvorrichtung (301) und/oder einem Mehrtüranzeigegerät (350).

9. Sicherheitssystem (1) nach einem der vorhergehenden Ansprüche, **dadurch gekennzeichnet, dass** das Sicherheitssystem (1) ausgeführt ist zur Einstellung von Parametern für zumindest einen Teil der Funktionen durch ein Parametrierungsprogramm, wobei das Sicherheitssystem (1) weiter ausgeführt ist, ausschließlich Parameter für die ausführbaren Funktionen für einen Bediener anzuzeigen.

10. Sicherheitssystem (1) nach einem der vorhergehenden Ansprüche, **dadurch gekennzeichnet, dass** die Steuerungsvorrichtung (100), erkennt, ob es sich bei dem Kommunikationsmodul (801, 801', 802), das über die Kommunikationsschnittstelle erreichbar ist, um ein Muttermodul (801, 801') oder um ein Hilfsmodul (802) handelt, wobei insbesondere, nachdem das Muttermodul (801, 801') der Steuerungsvorrichtung (100) eine Information zum Ausführen einer Funktion zur Verfügung gestellt hat, die Steuerungsvorrichtung (100) dem Muttermodul (801, 801') die Information zum Ausführen einer Funktion belässt und/oder, nachdem das Hilfsmodul (802) der Steuerungsvorrichtung (100) die Information zum Ausführen einer Funktion zur Verfügung gestellt hat, die Steuerungsvorrichtung (100) eine Information zum Ausführen einer Funktion auf dem Hilfsmodul (802) löscht.

11. Sicherheitssystem (1) nach einem der vorhergehenden Ansprüche, **dadurch gekennzeichnet, dass** das Sicherheitssystem (1), insbesondere die Steuerungsvorrichtung (100) ausgebildet ist,
1. ein Hilfsmodul (802) insbesondere in der Aufnahme (77) zu erkennen, eine darauf gespeicherte Information durch das Sicherheitssystem (1), insbesondere die Steuerungsvorrichtung (100), auszulesen,
2. die ausgelesene Information in dem Sicherheitssystem (1), insbesondere in der Steuerungsvorrichtung (100), zu speichern,
3. die Information auf dem Hilfsmodul (802) zu löschen,
4. das Muttermodul (801, 801') insbesondere in der Aufnahme (77) zu erkennen, die Information, die aus dem Hilfsmodul (802) ausgelesen und in dem Sicherheitssystem (1) gespeichert wurde, auf das Muttermodul (801, 801') zu schreiben.

12. Sicherheitssystem (1) nach einem der vorhergehenden Ansprüche, **dadurch gekennzeichnet, dass** das Kommunikationsmodul (801 801', 802) als eine Chipkarte, insbesondere als eine Code-Speichernde Einheit ausgebildet ist, wobei insbesondere das Kommunikationsmodul (801, 801', 802) eine Prozessoreinheit nur zu einer Verschlüsselung umfasst.

## Claims

1. A safety system (1) for controlling and/or monitoring at least one door lock (200), in particular for securing escape routes,
with a plurality of trigger elements (10, 10', 1010, 1010', 2010, 2010', 3010), in particular emergency buttons (10),
wherein the safety system (1) is designed to execute at least one function for controlling and/or monitoring the at least one door lock (200),
wherein the safety system (1) comprises a plurality of first bus systems (400, 400') which connect to a second bus system, wherein each of the plurality of first bus systems (400, 400') is each connected to at least one of the plurality of trigger elements (10, 10', 1010, 1010', 2010, 2010', 3010) and is connected to at least one door lock controller (201),
wherein each of the plurality of first bus systems (400, 401) has a control device (100, 100'),
wherein the safety system (1) comprises a control center (300, 301) and the control device (100, 100') of each of the plurality of first bus systems (400, 400') and the control center (300, 301) are connected to one another via the second bus system (401),
**characterized in that** the safety system (1) for each of the first bus systems (400, 400') comprises a portable communication module (801, 801', 802),
wherein a bus participant (10, 10', 1010, 1010', 2010, 100, 201) of the first bus system (400, 400') is in communicative connection with a communication module (801, 801', 802) in each of the plurality of first bus systems (400, 400'),
wherein each control device (100, 100') of the safety system (1) comprises a communication interface, wherein the communication interface is used to communicate with the communication module (801, 801', 802), wherein, to execute the function and/or to execute a further function of the safety system (1), communication takes place or has previously taken place, in particular repeatedly, via the communication interface with the communication module (801, 801', 802),
wherein communication with the communication module (801, 801', 802) can be enabled,
wherein the control device (100) comprises a receptacle (77) in order to accommodate the communication module (801, 801', 802) in a reversibly detachable and/or electrically contacting manner, wherein the receptacle (77) is designed as a chip card receptacle, wherein the receptacle (77 ) is arranged in the control device (1) so as to be inaccessible to an unauthorized user, by a sabotage switch (66) of the safety system (1) triggering an alarm when the user, who is not authenticated, accesses the receptacle.

2. The safety system (1) according to claim 1, **characterized in that** the function for the safety system (1) can only be executed if the safety system (1) is provided with the information on the communication module (801, 801', 802), in particular on a mother module (801, 801'), and/or the safety system (1), in particular the control device (100), is designed in such manner that the safety system (1), in particular the control device (100), becomes aware, in particular at predetermined time intervals, of the information on the communication module (801, 801', 802), and the function for the safety system (1) can only be executed if the safety system (1) has previously become aware of the information within a predetermined period of time.

3. The safety system (1) according to claim 1 or 2, **characterized in that** the function can be enabled by means of a code (Code1, Code2, Code3) received from the communication module (801, 801', 802), in particular by means of an encrypted code (Code1, Code2, Code3) received from the communication module (801, 801', 802).

4. The safety system (1) according to one of the preceding claims, **characterized in that** a release test can be carried out repeatedly by the safety system (1), wherein, if the function was previously enabled, the previously enabled function is blocked in the event of a negative release test.

5. The safety system (1) according to one of the preceding claims, **characterized in that** exactly one bus participant (10, 10', 1010, 1010', 2010, 100, 201) of each of the plurality of first bus systems (400, 400') is in communicative connection with the communication module (801, 801', 802), wherein the exactly one bus participant (10, 10', 1010, 1010', 2010, 100, 201) of the first bus system (400, 400'), which is in communicative connection with the communication module (801, 801', 802), is connected or connectable to the second bus system (401).

6. The safety system (1) according to one of the preceding claims, **characterized in that** a trigger element (10, 10', 1010, 1010', 2010, 2010', 3010) or processing electronics (101) comprises the receptacle (77) and by inserting the communication module (801, 801', 802), in particular the mother module (801, 801'), into the receptacle (77), the trigger element (10, 10', 1010, 1010', 2010, 2010', 3010) or the processing electronics (101) act as a control device (100) and/or after removing the communication module (801, 801', 802), in particular the mother module (801, 801'), the trigger element (10, 10', 1010, 1010', 2010, 2010', 3010) or the processing electronics (101) loses the function of the control device (100) immediately or at the latest after the specified period of time.

7. The safety system (1) according to one of the preceding claims, **characterized in that** a plurality of trigger elements (10, 10', 1010, 1010', 2010, 2010', 3010) of the safety system (1) each comprise a communication interface, so that the trigger elements (10, 10', 1010, 1010', 2010, 2010', 3010) are each designed to serve as the control device (100) through communication with the communication module (801, 801', 802), in particular with the mother module (801, 801'), wherein only the at least one trigger element (10, 10', 1010, 1010', 2010, 2010', 3010) which is in communicative connection with a communication module (801, 801', 802), in particular with the mother module (801, 801'), serves as the control device (100).

8. The safety system (1) according to one of the preceding claims, **characterized in that** the function, for whose execution the communication takes place or has taken place via the communication interface, is at least one of the following functions:
a. the safety system (1) is designed to initiate an actuation or to actuate at least one door locking mechanism (205) for unlocking as a result of the activation of the trigger element (10, 10', 1010, 1010', 2010, 2010', 3010),
b. the safety system (1) is designed to initiate an actuation or to actuate at least one door locking mechanism (205) of the door lock for unlocking after receiving a fire alarm signal,
c. the safety system (1) is designed to delay initiating an actuation or delay actuating the door locking mechanism (205) according to the function a.), wherein the safety system (1) is in particular designed to delay the actuation by a second time delay period within a first time delay period;
d. the safety system (1) is designed to prevent the door locking mechanism (205) from initiating an actuation or from being actuated for unlocking after activation of the trigger element (10, 10', 1010, 1010', 2010, 2010', 3010) when the trigger element (10, 10', 1010, 1010', 2010, 2010', 3010) is in a deactivated state;
e. the safety system (1) is designed to initiate an actuation or to actuate the locking mechanism (205) for re-locking according to the function a., provided that a cancellation condition is reached, wherein in particular the cancellation condition is reached:
▪ following a cancellation action at the trigger element (10, 10', 1010, 1010', 2010, 2010', 3010), which is intended to be arranged on or near the door, and/or following an authentication;
▪ optionally after lapsing of a predetermined time period and in the absence of a signal regarding an opening of the door (2) within the predetermined time period;
▪ optionally after lapsing of a predetermined time period after receiving a cancellation signal of a central escape route controller (300) and in the absence of a signal regarding an opening of the door (2) within the predetermined time period;
f. the safety system (1) is designed to initiate an activation of an audio and/or video module (510), wherein in particular the audio and/or video module (510) is designed to transmit an audio and/or video recording (510) to a guard device (301),
g. the safety system (1) is designed to initiate an actuation or to actuate at least one door locking mechanism (205) for unlocking as a result of the activation of the trigger element (10, 10', 1010, 1010', 2010, 2010', 3010), wherein a number of door locking controllers (201) and a number of trigger elements (10, 1010, 1010', 2010, 2010', 3010) are connected to one another via the first bus system (400) and the number of door locking controllers (201) are assigned to the number of trigger elements (10, 1010, 1010', 2010, 2010', 3010) in such manner that when one of the trigger elements (10, 1010, 1010', 2010, 2010', 3010) is activated, only the one door locking controller (201) assigned to the trigger element (10, 1010, 1010', 2010, 2010', 3010) or the plurality of door locking controllers (201) assigned to the trigger element (10, 1010, 1010', 2010, 2010', 3010) actuate the respective door locking mechanism (205) for unlocking,
h. the safety system (1) is designed to initiate an actuation or to actuate the door locking mechanism (205) for unlocking after receiving a positive authentication signal, wherein the positive authentication signal is receivable in particular via a bus input,
i. the safety system (1) is designed to initiate an actuation or to actuate the door locking mechanism (205) for unlocking at a predetermined time;
j. the safety system (1) is designed to prevent the actuation of a further door locking mechanism (205) after actuating a first door locking mechanism (205) until there is a condition, in such manner that an interlock is formed,
k. the safety system (1) is designed to initiate an actuation or to actuate the locking mechanism (205) for automatic re-locking after a predetermined period of time has lapsed, in particular according to the functions h., i. and/or j.
l. the safety system (1) is designed to initiate an actuation or to actuate the locking mechanism (205) for automatic re-locking after receiving a signal regarding a closed state of the door, in particular after executing the functions h and/or j., wherein preferably the closed state of the door can be detected by at least one door state monitoring device (204, 206);
m. the safety system (1) is designed to initiate an actuation or to actuate an acoustic alarm transmitter (23) for emitting an alarm as a function of a signal of the door state monitoring device (204, 206) regarding the opening of the door, in particular when there is no authorization to access the door;
n. the safety system (1) is designed for communication via a radio module (64), preferably for parameterization of the safety system (100), wherein the parameterization is preferably carried out via a mobile communication device;
o. the safety system (1) is designed to initiate an actuation or to actuate an acoustic alarm transmitter (23) for emitting an acoustic alarm as a result of an activation of the trigger element (10, 10', 1010, 1010', 2010, 2010', 3010) or after receiving a fire alarm signal,
p. the safety system (1) is designed to initiate an actuation or to actuate a display device (41) for the visual representation of a locking state of the door lock (200),
q. the safety system (1) is designed to initiate an actuation or to actuate a display device (41) for the visual representation of the time-delayed actuation of the door locking mechanism (205), in particular for unlocking and in particular after activation of the trigger element (10, 10', 1010, 1010', 2010, 2010', 3010);
r. the safety system (1) is designed to initiate an actuation or to actuate a display (41) for the visual representation of an alarm state, in particular as a result of an activation of the trigger element (10, 10', 1010, 1010', 2010, 2010', 3010) or after receiving a fire alarm signal,
s. the safety system (1) is designed to initiate an emission of an acoustic and/or visual alarm, if re-locking fails, in particular if the door remains open, which can be detected via the door state monitoring device,
t. the safety system (1) is designed to establish and/or maintain a communication connection (401, 403) between the control device (100) and a control center, in particular a central escape door controller (300), a guard device (301) and/or a multi-door display apparatus (350).

9. The safety system (1) according to one of the preceding claims, **characterized in that** the safety system (1) is designed to set parameters for at least some of the functions through a parameterization program, wherein the safety system (1) is further designed to display parameters exclusively for the executable functions for an operator.

10. The safety system (1) according to one of the preceding claims, **characterized in that** the control device (100) detects whether the communication module (801, 801', 802), which can be reached via the communication interface, is a mother module (801, 801') or an auxiliary module (802), wherein in particular after the mother module (801, 801') has provided the control device (100) with information for executing a function, the control device (100) leaves the mother module (801, 801') with the information for executing a function and/or, after the auxiliary module (802) has provided the control device (100) with the information for executing a function, the control device (100) deletes information for executing a function on the auxiliary module (802).

11. The safety system (1) according to one of the preceding claims, **characterized in that** the safety system (1), in particular the control device (100), is designed
1. to recognize an auxiliary module (802), in particular in the receptacle (77), to read out information stored thereon by the safety system (1), in particular the control device (100),
2. to store the read-out information in the safety system (1), in particular in the control device (100),
3. to delete the information on the auxiliary module (802),
4. to recognize the mother module (801, 801'), in particular in the receptacle (77), to write the information that was read out from the auxiliary module (802) and stored in the safety system (1), on the mother module (801, 801').

12. The safety system (1) according to one of the preceding claims, **characterized in that** the communication module (801, 801', 802) is designed as a chip card, in particular as a code-storing unit, wherein in particular the communication module (801, 801', 802) comprises a processor unit only for encryption.

## Revendications

1. Système de sécurité (1) destiné à la commande et/ou la surveillance d'au moins une serrure de porte (200), notamment pour sécuriser les issues de secours,
comportant plusieurs éléments déclencheurs (10, 10', 1010, 1010', 2010, 2010', 3010), notamment des boutons d'urgence (10),
dans lequel le système de sécurité (1) est conçu pour la réalisation d'au moins une fonction pour la commande et/ou la surveillance de l'au moins une serrure de porte (200),
dans lequel le système de sécurité (1) comprend une pluralité de premiers systèmes de bus (400, 400') qui se connectent à un second système de bus, dans lequel chacun de la pluralité de premiers systèmes de bus (400, 400') est respectivement connecté à au moins l'un des plusieurs éléments déclencheurs (10, 10', 1010, 1010', 2010, 2010', 3010) et à au moins une commande de serrure de porte (201),
dans lequel chacun de la pluralité de premiers systèmes de bus (400, 401) présente un dispositif de commande (100, 100'),
dans lequel le système de sécurité (1) comprend un centre de commande (300, 301) et le dispositif de commande (100, 100') de chacun de la pluralité de premiers systèmes de bus (400, 400') et le centre de commande (300, 301) sont connectés entre eux par l'intermédiaire du second système de bus (401),
**caractérisé en ce que** le système de sécurité (1) comprend un module de communication portatif (801, 801', 802) pour chacun des premiers systèmes de bus (400, 400'),
dans lequel dans chacun des plusieurs premiers systèmes de bus (400, 400') un utilisateur de bus (10, 10', 1010, 1010', 2010, 100, 201) du premier système de bus (400, 400') est en liaison de communication avec un module de communication (801, 801', 802),
dans lequel chaque dispositif de commande (100, 100') du système de sécurité (1) comprend une interface de communication, dans lequel l'interface de communication est utilisée pour la communication avec le module de communication (801, 801', 802), dans lequel pour la réalisation de la fonction et/ou pour la réalisation d'une autre fonction du système de sécurité (1), une communication est effectuée ou a été effectuée auparavant, notamment de manière répétée, par l'intermédiaire de l'interface de communication avec le module de communication (801, 801', 802),
dans lequel la communication avec le module de communication (801, 801', 802) peut être validée,
dans lequel le dispositif de commande (100) comprend un logement (77) pour loger le module de communication (801, 801', 802) de manière amovible réversible et/ou avec contact électrique, dans lequel le logement (77) est conçu comme un logement de carte à puce, dans lequel le logement (77) est agencé dans le dispositif de commande (1) de manière à ce qu'il soit inaccessible à un utilisateur non autorisé, **en ce qu'**un commutateur de sabotage (66) du système de sécurité (1) déclenche une alarme lors de l'accès au logement en cas d'absence d'authentification de l'utilisateur.

2. Système de sécurité (1) selon la revendication 1, **caractérisé en ce que** la fonction pour le système de sécurité (1) ne peut être réalisée que si le système de sécurité (1) dispose des informations sur le module de communication (801, 801', 802), notamment sur un module mère (801, 801'), et/ou le système de sécurité (1), notamment le dispositif de commande (100), est conçu de telle sorte que le système de sécurité (1), notamment le dispositif de commande (100), prend connaissance de l'information sur le module de communication (801, 801', 802), en particulier à intervalles de temps prédéterminés, et la fonction pour le système de sécurité (1) ne peut être réalisée que si le système de sécurité (1) a préalablement pris connaissance de l'information dans un laps de temps prédéterminé.

3. Système de sécurité (1) selon la revendication 1 ou 2, **caractérisé en ce que** la fonction peut être validée à l'aide d'un code (Code1, Code2, Code3) reçu du module de communication (801, 801', 802), notamment à l'aide d'un code (Code1, Code2, Code3) chiffré reçu du module de communication (801, 801', 802).

4. Système de sécurité (1) selon l'une des revendications précédentes, **caractérisé en ce qu'**un test de validation peut être réalisé de manière répétée par le système de sécurité (1), dans lequel, si la fonction a été validée précédemment, la fonction précédemment validée est bloquée dans le cas où le test de validation est négatif.

5. Système de sécurité (1) selon l'une des revendications précédentes, **caractérisé en ce que** exactement un utilisateur de bus (10, 10', 1010, 1010', 2010, 100, 201) de chacun de la pluralité de premiers systèmes de bus (400, 400') est en liaison de communication avec le module de communication (801, 801', 802), dans lequel le exactement un utilisateur de bus (10, 10', 1010, 1010', 2010, 100, 201) du premier système de bus (400, 400'), qui est en liaison de communication avec le module de communication (801, 801', 802), est ou peut être connecté au second système de bus (401).

6. Système de sécurité (1) selon l'une des revendications précédentes, **caractérisé en ce qu'**un élément déclencheur (10, 10', 1010, 1010', 2010, 2010', 3010) ou une électronique de traitement (101) comprend le logement (77) et en insérant le module de communication (801, 801', 802), notamment le module mère (801, 801'), dans le logement (77), l'élément déclencheur (10, 10', 1010, 1010', 2010, 2010', 3010) ou l'électronique de traitement (101) fait office de dispositif de commande (100) et/ou après retrait du module de communication (801, 801', 802), notamment du module mère (801, 801'), l'élément déclencheur (10, 10', 1010, 1010', 2010, 2010', 3010) ou l'électronique de traitement (101) perd la fonction du dispositif de commande (100) immédiatement ou au plus tard après le laps de temps prédéterminé.

7. Système de sécurité (1) selon l'une des revendications précédentes, **caractérisé en ce que** plusieurs éléments déclencheurs (10, 10', 1010, 1010', 2010, 2010', 3010) du système de sécurité (1) comprennent chacun une interface de communication, de sorte que les éléments déclencheurs (10, 10', 1010, 1010', 2010, 2010', 3010) sont chacun conçus, par la communication avec le module de communication (801, 801', 802), notamment avec le module mère ( 801, 801'), pour servir de dispositif de commande (100), dans lequel seul l'au moins un élément déclencheur (10, 10', 1010, 1010', 2010, 2010', 3010) qui est en liaison de communication avec un module de communication ( 801, 801', 802), notamment avec le module mère (801, 801'), sert de dispositif de commande (100).

8. Système de sécurité (1) selon l'une des revendications précédentes, **caractérisé en ce que** la fonction, pour la réalisation de laquelle la communication a lieu ou a eu lieu par l'intermédiaire de l'interface de communication, est au moins l'une des fonctions suivantes :
a. le système de sécurité (1) est conçu pour provoquer une commande ou commander au moins un mécanisme de serrure de porte (205) pour le déverrouillage à la suite de l'actionnement de l'élément déclencheur (10, 10', 1010, 1010', 2010, 2010', 3010),
b. le système de sécurité (1) est conçu pour provoquer une commande ou commander au moins un mécanisme de serrure de porte (205) de la serrure de porte pour un déverrouillage après réception d'un signal d'alarme incendie,
c. le système de sécurité (1) est conçu pour retarder la provocation d'une commande ou la commande du mécanisme de serrure de porte (205) selon la fonction a.), dans lequel le système de sécurité (1) est notamment conçu pour retarder la commande par un une seconde période de retard à l'intérieur d'une première période de retard ;
d. le système de sécurité (1) est conçu pour empêcher la provocation d'une commande ou une commande du mécanisme de serrure de porte (205) pour le déverrouillage après l'actionnement de l'élément déclencheur (10, 10', 1010, 1010', 2010, 2010', 3010) lorsque l'élément déclencheur (10, 10', 1010, 1010', 2010, 2010', 3010) se trouve dans un état désactivé ;
e. le système de sécurité (1) est conçu pour provoquer une commande ou pour commander le mécanisme de serrure (205) pour un reverrouillage selon la fonction a., à condition qu'une condition d'annulation soit atteinte, dans lequel en particulier la condition d'annulation est atteinte :
■ après une action d'annulation sur l'élément déclencheur (10, 10', 1010, 1010', 2010, 2010', 3010) destiné à être situé sur ou à proximité de la porte et/ou une authentification ;
■ éventuellement après qu'un laps de temps prédéterminé s'est écoulé et en l'absence de signal d'ouverture de la porte (2) pendant le laps de temps prédéterminé ;
■ éventuellement après qu'un laps de temps prédéterminé s'est écoulé après réception d'un signal d'annulation d'une commande centrale d'issue de secours (300) et en l'absence de signal d'ouverture de la porte (2) pendant le laps de temps prédéterminé ;
f. le système de sécurité (1) est conçu pour provoquer une validation d'un module audio et/ou vidéo (510), dans lequel notamment le module audio et/ou vidéo (510) est conçu pour transmettre un enregistrement audio et/ou vidéo ( 510) à un dispositif de surveillance (301),
g. le système de sécurité (1) est conçu pour provoquer une commande ou commander au moins un mécanisme de serrure de porte (205) pour le déverrouillage à la suite de l'actionnement de l'élément déclencheur (10, 10', 1010, 1010', 2010, 2010 ', 3010), dans lequel un certain nombre de commandes de serrure de porte (201) et un certain nombre d'éléments de déclenchement (10, 1010, 1010', 2010, 2010', 3010) sont reliés les uns aux autres par l'intermédiaire du premier système de bus (400) et le nombre de commandes de serrure de porte (201) est associé au nombre d'éléments déclencheurs (10, 1010, 1010', 2010, 2010', 3010) qui de telle sorte que lorsqu'un des éléments déclencheurs (10, 1010, 1010 ', 2010, 2010', 3010) est actionné, seule la commande de serrure de porte (201) associée à l'élément déclencheur (10, 1010, 1010', 2010, 2010', 3010) ou les plusieurs commandes de serrure de porte (201) associées à l'élément déclencheur (10, 1010, 1010', 2010, 2010', 3010) commandent le mécanisme de serrure de porte (205) respectif pour le déverrouillage,
h. le système de sécurité (1) est conçu pour provoquer une commande ou pour commander le mécanisme de serrure de porte (205) pour le déverrouillage après réception d'un signal d'authentification positif, dans lequel le signal d'authentification positif peut être reçu notamment par l'intermédiaire d'une entrée de bus,
i. le système de sécurité (1) est conçu pour provoquer une commande ou pour commander le mécanisme de serrure de porte (205) pour le déverrouillage à un moment prédéterminé ;
j. le système de sécurité (1) est conçu pour empêcher la commande d'un autre mécanisme de serrure de porte (205) après la commande effectuée d'un premier mécanisme de serrure de porte (205), jusqu'à ce qu'une condition soit remplie, de telle sorte qu'un sas soit formé,
k. le système de sécurité (1) est conçu pour provoquer une commande ou pour commander le serrure (205) pour un reverrouillage automatique après l'écoulement d'un laps de temps prédéterminé, notamment selon les fonctions h., i. et/ou j.
l. le système de sécurité (1) est conçu pour provoquer une commande ou pour commander le mécanisme de serrure (205) pour un reverrouillage automatique après avoir reçu un signal concernant un état fermé de la porte, notamment après avoir réalisé les fonctions h. et/ou j., dans lequel, de préférence, l'état fermé de la porte peut être détecté par au moins un dispositif de surveillance de l'état de la porte (204, 206) ;
m. le système de sécurité (1) est conçu pour provoquer une commande ou pour commander un dispositif d'alarme acoustique (23) afin d'émettre une alarme en fonction d'un signal provenant du dispositif de surveillance de l'état de la porte (204, 206) concernant l'ouverture de la porte, notamment s'il n'y a pas d'autorisation pour franchir la porte ;
n. le système de sécurité (1) est conçu pour la communication par l'intermédiaire d'un module radio (64), de préférence pour le paramétrage du système de sécurité (100), dans lequel le paramétrage peut être réalisé de préférence par l'intermédiaire d'un appareil de communication mobile ;
o. le système de sécurité (1) est conçu pour provoquer une commande ou pour commander un dispositif d'alarme acoustique (23) afin d'émettre une alarme acoustique à la suite d'un actionnement de l'élément déclencheur (10, 10', 1010, 1010', 2010, 2010', 3010 ) ou après avoir reçu un signal d'alarme incendie,
p. le système de sécurité (1) est conçu pour provoquer une commande ou pour commander un dispositif d'affichage (41) pour la représentation optique d'un état de serrure de la serrure de porte (200),
q. le système de sécurité (1) est conçu pour provoquer la commande ou pour commander un dispositif d'affichage (41) pour la représentation optique de la commande retardée du mécanisme de serrure de porte (205), notamment pour le déverrouillage et notamment après l'actionnement de l'élément déclencheur (10, 10', 1010, 1010', 2010, 2010', 3010) ;
r. le système de sécurité (1) est conçu pour provoquer une commande ou pour commander un affichage (41) pour la représentation visuelle d'un état d'alarme, notamment à la suite d'un actionnement de l'élément déclencheur (10, 10', 1010, 1010 ', 2010, 2010', 3010) ou après avoir reçu un signal d'alarme incendie,
s. le système de sécurité (1) est conçu pour provoquer l'émission d'une alarme acoustique et/ou visuelle en cas d'échec du reverrouillage, notamment si la porte reste ouverte, ce qui peut être détecté par l'intermédiaire du dispositif de surveillance de l'état de la porte,
t. le système de sécurité (1) est conçu pour établir et/ou maintenir une liaison de communication (401, 403) entre le dispositif de commande (100) et un centre de commande, notamment une commande centrale d'issue de secours (300), un dispositif de surveillance (301 ) et/ou un dispositif d'affichage à plusieurs portes (350).

9. Système de sécurité (1) selon l'une des revendications précédentes, **caractérisé en ce que** le système de sécurité (1) est conçu pour régler des paramètres pour au moins une partie des fonctions par l'intermédiaire d'un programme de paramétrage, dans lequel le système de sécurité (1) est en outre conçu pour afficher exclusivement les paramètres pour les fonctions réalisables pour un opérateur.

10. Système de sécurité (1) selon l'une des revendications précédentes, **caractérisé en ce que** le dispositif de commande (100) reconnaît si le module de communication (801, 801', 802), joignable par l'intermédiaire de l'interface de communication, est un module mère ( 801, 801') ou un module auxiliaire (802), dans lequel notamment après que le module mère (801, 801') a fourni au dispositif de commande (100) une information pour réaliser une fonction, le dispositif de commande (100) laisse au module mère (801, 801') l'information pour réaliser une fonction et/ou, après que le module auxiliaire (802) a fourni au dispositif de commande (100) l'information pour réaliser une fonction, le dispositif de commande (100) supprime l'information pour réaliser une fonction sur le module auxiliaire (802).

11. Système de sécurité (1) selon l'une des revendications précédentes, **caractérisé en ce que** le système de sécurité (1), notamment le dispositif de commande (100), est conçu,
1. pour reconnaître un module auxiliaire (802), notamment dans le logement (77), pour lire une information qui y est stockée par l'intermédiaire du système de sécurité (1), notamment du dispositif de commande (100),
2. pour stocker l'information lue dans le système de sécurité (1), notamment dans le dispositif de commande (100),
3. pour supprimer l'information sur le module auxiliaire (802),
4. pour reconnaître le module mère (801, 801'), notamment dans le logement (77), pour écrire l'information, qui a été lue depuis le module auxiliaire (802) et stockée dans le système de sécurité (1), sur le module mère (801, 801').

12. Système de sécurité (1) selon l'une des revendications précédentes, **caractérisé en ce que** le module de communication (801, 801', 802) est réalisé sous forme de carte à puce, notamment sous forme d'unité de stockage de codes, dans lequel notamment le module de communication (801, 801', 802) comprend une unité de processeur uniquement le un chiffrement.
